# EUROPEAN PATENT APPLICATION

(11) **EP 3 730 397 A1**
(43) Date of publication of application: **28.10.2020**
(21) Application number: 20180424.2
(22) Date of filing: 17.11.2016
(51) Int. Cl.: B63B 13/00, C02F 1/70, C02F 1/76, B63J 4/00

(54) **BALLAST WATER TREATMENT DEVICE, AND BALLAST WATER TREATMENT METHOD**

(30) Priority: 18.11.2015 JP 2015226036; 17.12.2015 JP 2015246442; 20.04.2016 JP 2016084801; 31.08.2016 JP 2016170100; 31.08.2016 JP 2016170101
(62) Divisional of application: 16866408.4
(71) Applicant: JFE Engineering Corporation, Tokyo 100-0005 (JP)
(72) Inventor: UTSUKI, Kiyoshi, Tokyo, 100-0005 (JP); MATSUZAWA, Masao, Tokyo, 100-0005 (JP); NAGAFUJI, Masanori, Tokyo, 100-0005 (JP); OKAI, Kazuya, Tokyo, 100-0005 (JP); SUGA, Takeshi, Tokyo, 100-0005 (JP); FUKUSHIMA, Takeshi, Tokyo, 100-0005 (JP); KATAOKA, Hisashi, Tokyo, 100-0005 (JP)
(74) Representative: Zech, Stefan Markus

(57) **Abstract**

A ballast water treatment device mounted in a vessel (VSL) and configured to sterilizes seawater (Wo) taken from the outside of the vessel to be stored as ballast water in a ballast tank (T) provided in the vessel, the ballast water treatment device being characterized by comprising an antiseptic agent injection hole (Is) for injecting a chlorine-based antiseptic agent (ms) into the seawater taken from the outside of the vessel; an antiseptic agent pipeline (Ls) for circulating the chlorine-based antiseptic agent toward the antiseptic agent injection hole; and a residue injection hole (Id) through which at least part of a residue of the chlorine-based antiseptic agent remaining in the antiseptic agent pipeline and unused for the sterilization of the seawater taken from the outside of the vessel is removed to the outside of the antiseptic agent pipeline, and being characterized in that the residue injection hole is the same injection hole as the antiseptic agent injection hole, or is located upstream or downstream of the antiseptic agent injection hole along the flow direction of the seawater taken from the outside of the vessel.

## Description

### FIELD

The present invention relates to a vessel having a ballast water treatment device mounted therein which uses an aqueous solution of a chlorine-based chemical as an antiseptic agent to sterilize ballast water to be stored in a ballast tank of the vessel. More particularly, the present invention relates to a vessel having a function of removing a residue of the antiseptic agent to the outside of the vessel. The present invention also relates to a ballast water treatment device and a ballast water treatment method both of which use an aqueous solution of a chlorine-based chemical as an antiseptic agent to sterilize, in a vessel, ballast water to be stored in a ballast tank of the vessel. More particularly, the present invention relates to a ballast water treatment device having a mechanism which discharges and removes a residue of the antiseptic agent to the outside of a vessel together with seawater circulating through the vessel, and a ballast water treatment method including a step of removing the residue of the antiseptic agent.

### BACKGROUND

A typical example of a ballast water treatment of sterilizing ballast water in a vessel with an antiseptic agent can be broadly classified into a sterilizing treatment of filtering seawater taken from the outside of the vessel before injecting an antiseptic agent containing an oxidative substance into the filtered seawater, and storing or filling the seawater injected with the antiseptic agent into a ballast tank, and a reduction treatment of injecting a reducing agent containing a reducing substance into the seawater taken from the ballast tank and injected with the antiseptic agent, and discharging the seawater injected with the reducing agent to the outside of the vessel. It is known to use an aqueous solution of a chlorine-based chemical containing oxidative free available chlorine as an antiseptic agent (PATENT LITERATURES 1 to 3). The aqueous solution of the chlorine-based chemical can be prepared by dissolving a solid chlorine-based chemical into water (PATENT LITERATURES 4 and 5).

### CITATION LIST

### PATENT LITERATURE

PATENT LITERATURE 1: Jpn. Pat. Appln. KOKAI Publication No. 2011-92899
PATENT LITERATURE 2: Jpn. Pat. Appln. KOKAI Publication No. 2013-75250
PATENT LITERATURE 3: Jpn. Pat. Appln. KOKAI Publication No. 2011-92898
PATENT LITERATURE 4: Jpn. Pat. Appln. KOKAI Publication No. 2013-56296
PATENT LITERATURE 5: WO2014/007171

### SUMMARY

### TECHNICAL PROBLEM

When an aqueous solution of a chlorine-based chemical is prepared and used to sterilize seawater to be stored in a ballast tank, it is normal to prepare a little more aqueous solution than an amount originally needed to sterilize the seawater. This is because to inject an aqueous solution of a chlorine-based chemical into seawater as an antiseptic agent, at least a pipe to circulate the aqueous solution to the seawater is needed, and an extra amount of the aqueous solution that spreads into the pipe is needed.

However, if a little more aqueous solution than an amount originally needed is prepared, an extra amount of the aqueous solution remains unused in a ballast water treatment.

If the aqueous solution of the chlorine-based chemical remaining unused in the ballast water treatment and/or a component of this chlorine-based chemical (hereinafter collectively or individually referred to as an "antiseptic agent residue") thicken in the pipe due to the evaporation of water which is a solvent, or if the solubility of the chlorine-based chemical into water deteriorates due to a drop in the water temperature of the antiseptic agent residue, there is concern that a deposit of the component of the chlorine-based chemical might be formed and accumulated in the antiseptic agent residue and in a liquid contact region between the antiseptic agent residue and the pipe, and in some cases, the deposit might solidify in the pipe. This concern is particularly greater when a raw material of a chlorine-based antiseptic agent is a solid chlorine-based chemical. This is because if the raw material is solid, deterioration of the solubility of a raw material into water is directly linked to the formation of a deposit of a component of the raw material.

The formation, accumulation, and solidification of the deposit cause a trouble such as blockage of the pipe, an increase in pressure loss, other circulation difficulties, and functional failure of accessories including a mixer, a sensor, a valve, a pump, and the like attached to the pipe (hereinafter collectively referred to as an "operational trouble" resulting from the antiseptic agent residue), and thus cause obstruction to normal implementation of the ballast water treatment.

The present invention has been made in view of the foregoing problem, and an object of the present invention is to provide a vessel equipped with a ballast water treatment device, a ballast water treatment device, and a ballast water treatment method, those of which are capable of suppressing or preventing the cause of obstruction to normal implementation of a ballast water treatment in which an aqueous solution obtained by dissolving a chlorine-based chemical into water is used as an antiseptic agent.

### SOLUTION TO PROBLEM

### <Vessel>

A vessel which is for achieving the above described object and which relates to a first mode of this invention, comprises a ballast pump which circulates, in the vessel, seawater taken from the outside of the vessel, a ballast tank to store the seawater, and a ballast water treatment device which sterilizes the seawater to be stored in the ballast tank. And, the ballast pump is characterized by comprising a first operation mode in which the seawater taken from the outside of the vessel is circulated toward the ballast tank and stored or filled in the ballast tank, and a second operation mode in which the seawater taken from the outside of the vessel is circulated without being passed through the ballast tank, and discharged to the outside of the vessel. Further, the ballast water treatment device is characterized by comprising an antiseptic agent injection hole through which an chlorine-based antiseptic agent is injected into the seawater circulating toward the ballast tank during the first operation mode, and a residue injection hole through which at least a part of a residue of the chlorine-based antiseptic agent remaining un-injected into the seawater during the first operation mode is injected into the seawater circulating toward the outside of the vessel during the second operation mode.

A vessel which relates to a second mode of this invention is the vessel according to the first mode, and is characterized in that the second operation mode is started within 3 hours after the end of the first operation mode.

A vessel which relates to a third mode of this invention is the vessel according to the first mode, and is characterized in that the residue injection hole forces at least a part of the residue of the chlorine-based antiseptic agent by a pump to be injected into the seawater circulating toward the outside of the vessel.

A vessel which relates to a fourth mode of this invention is the vessel according to the first mode, and is characterized in that the residue injection hole allows at least a part of the residue of the chlorine-based antiseptic agent to be injected into the seawater circulating toward the outside of the vessel, together with water forced by a pump or after mixed with the forced water. The forced water may be a water which becomes a solvent of an aqueous solution of the chlorine-based antiseptic agent or may be a water which has been an aqueous solution of the chlorine-based antiseptic agent (therefore, in this case, it is an aqueous solution of the chlorine-based antiseptic agent itself).

A vessel which relates to a fifth mode of this invention is the vessel according to the fourth mode, and is characterized in that the water is a fresh water.

A vessel which relates to a sixth mode of this invention is the vessel according to the fourth mode, and is characterized in that the water is a water containing a reducing substance or an alkaline substance.

A vessel which relates to a seventh mode of this invention is the vessel according to the first mode, and is characterized in that the ballast pump comprises a third operation mode in which the seawater taken from the ballast tank is circulated in the vessel and discharged to the outside of the vessel, and the ballast water treatment device comprises a reducing agent injection hole through which a reducing agent is injected into the seawater circulating toward the outside of the vessel from the ballast tank during the third operation mode.

A vessel which relates to an eighth mode of this invention is the vessel according to the seventh mode, and is characterized in that the residue injection hole allows a reaction product formed by causing a reaction between at least a part of the residue of the chlorine-based antiseptic agent and a part of the reducing agent, to be injected into the seawater circulating toward the outside of the vessel.

A vessel which relates to a ninth mode of this invention is the vessel according to the seventh mode, and is characterized in that the antiseptic agent injection hole doubles as the residue injection hole, and the reducing agent injection hole is located downstream of the residue injection hole in a direction of the flow of the seawater circulating toward the outside of the vessel.

A vessel which relates to a tenth mode of this invention is the vessel according to the first mode, and is characterized in that the chlorine-based antiseptic agent is an aqueous solution of a trichloroisocyanuric acid, sodium dichloroisocyanurate, or potassium dichloroisocyanurate, and a solvent of the aqueous solution is fresh water.

A vessel which relates to an eleventh mode of this invention is the vessel according to the tenth mode, and is characterized in that the fresh water is a fresh water formed when a seawater is desalted by a seawater desalter mounted in the vessel.

### <Ballast Water Treatment Device>

A ballast water treatment device which is for achieving the above described object and which relates to a twelfth mode of this invention, is a ballast water treatment device which is mounted in a vessel and which sterilizes a ballast water to be stored in a ballast tank provided in the vessel. The ballast water treatment device is characterized by comprising an antiseptic agent injection hole through which a chlorine-based antiseptic agent is injected into the ballast water to be stored in the ballast tank, an antiseptic agent pipeline which circulates the chlorine-based antiseptic agent toward the antiseptic agent injection hole, a tank to store at least a part of a residue of the chlorine-based antiseptic agent remaining in the antiseptic agent pipeline and unused for the sterilization of the ballast water, and a residue pipeline which circulates at least a part of contents stored in the tank.

A ballast water treatment device which relates to a thirteenth mode of this invention is the ballast water treatment device according to the twelfth mode, and is characterized in that at least a portion of the antiseptic agent pipeline constitutes at least a portion of the residue pipeline.

A ballast water treatment device which relates to a fourteenth mode of this invention is the ballast water treatment device according to the twelfth mode or the thirteenth mode, and is characterized in that the residue pipeline circulates, toward the antiseptic agent injection hole, at least a part of the contents discharged from the tank.

A ballast water treatment device which relates to a fifteenth mode of this invention is the ballast water treatment device according to any one of the twelfth mode to the fourteenth mode, and is characterized in that the antiseptic agent pipeline comprises a return pipeline which returns at least a part of the contents circulating in the antiseptic agent pipeline, from a downstream side of the antiseptic agent pipeline to an upstream side thereof.

A ballast water treatment device which relates to a sixteenth mode of this invention is the ballast water treatment device according to any one of the twelfth mode to the fifteenth mode, and is characterized in that the residue pipeline comprises a return path which returns, to the tank, at least a part of the residue of the chlorine-based antiseptic agent discharged from the tank.

A ballast water treatment device which relates to a seventeenth mode of this invention is the ballast water treatment device according to any one of the twelfth mode to the fourteenth mode, and is characterized in that: the antiseptic agent pipeline comprises a return pipeline which returns at least a part of the contents circulating in the antiseptic agent pipeline, from a downstream side of the antiseptic agent pipeline to an upstream side thereof; the residue pipeline comprises a return path which returns, to the tank, at least a part of the residue of the chlorine-based antiseptic agent discharged from the tank; and at least a portion of the return pipeline constitutes a portion of the return path.

A ballast water treatment device which relates to an eighteenth mode of this invention is the ballast water treatment device according to any one of the twelfth mode to the seventeenth mode, and is characterized in that the tank retains at least a part of the residue of the chlorine-based antiseptic agent together with water containing a removal reactive substance at least temporarily or for a short time, and the removal reactive substance is a reducing substance or an alkaline substance.

A ballast water treatment device which is for achieving the above described object and which relates to a nineteenth mode of this invention, is a ballast water treatment device which is mounted in a vessel and which sterilizes a ballast water to be stored in a ballast tank provided in the vessel. The ballast water treatment device is characterized by comprising an antiseptic agent injection hole through which a chlorine-based antiseptic agent is injected into the ballast water to be stored in the ballast tank, and an antiseptic agent pipeline which circulates the chlorine-based antiseptic agent toward the antiseptic agent injection hole. Further, the ballast water treatment device is characterized in that the ballast water treatment device is configured such that at least a part of a residue of the chlorine-based antiseptic agent remaining in an antiseptic agent pipeline and unused for the sterilization of the ballast water is removed to the outside of the antiseptic agent pipeline by the supply of water and/or a removal reactive substance to the antiseptic agent pipeline, and the removal reactive substance is a reducing substance or an alkaline substance.

A ballast water treatment device which relates to a twentieth mode of this invention is the ballast water treatment device according to the nineteenth mode, and is characterized in that the antiseptic agent pipeline comprises a return pipeline which returns at least a part of the contents circulating in the antiseptic agent pipeline, from a downstream side of the antiseptic agent pipeline to an upstream side thereof.

A ballast water treatment device which relates to a twenty-first mode of this invention is the ballast water treatment device according to the nineteenth mode or the twentieth mode, and is characterized in that the water is a fresh water.

A ballast water treatment device which relates to a twenty-second mode of this invention is the ballast water treatment device according to any one of the nineteenth mode to the twenty-first mode, and is characterized in that the antiseptic agent pipeline comprises a pipeline which discharges at least a part of the residue of the chlorine-based antiseptic agent into a pipe that circulates the ballast water.

A ballast water treatment device which is for achieving the above described object and which relates to a twenty-third mode of this invention, is a ballast water treatment device which is mounted in a vessel and which sterilizes a ballast water to be stored in a ballast tank provided in the vessel. The ballast water treatment device is characterized by comprising an antiseptic agent injection hole through which a chlorine-based antiseptic agent is injected into the ballast water to be stored in the ballast tank, an antiseptic agent pipeline which circulates the chlorine-based antiseptic agent toward the antiseptic agent injection hole, and a removal reactive substance injection hole through which a removal reactive substance is injected at a position on an upstream side of the antiseptic agent injection hole of the antiseptic agent pipeline or at a position of the antiseptic agent injection hole. Further, the ballast water treatment device is characterized in that the ballast water treatment device is configured such that at least a part of a residue of the chlorine-based antiseptic agent remaining in the antiseptic agent pipeline and unused for the sterilization of the ballast water is reacted with the injected removal reactive substance, and removed to the outside of the antiseptic agent pipeline, and the removal reactive substance is a reducing substance or an alkaline substance.

### <Ballast Water Treatment Method>

A ballast water treatment method which is for achieving the above described object and which relates to a twenty-fourth mode of this invention, is a ballast water treatment method which sterilizes a seawater to be stored in a ballast tank provided in a vessel. The ballast water treatment method is characterized by comprising an antiseptic agent preparation step of preparing a chlorine-based antiseptic agent to sterilize the seawater, a sterilization treatment step of sterilizing, in the vessel, the seawater to be stored in the ballast tank by use of the chlorine-based antiseptic agent, and a residue removal step of causing at least part of a residue of the chlorine-based antiseptic agent remaining in the vessel and unused for the sterilization of the seawater to be stored in the ballast tank, to be injected into seawater circulating in the vessel, and to be discharged to the outside of the vessel together with the seawater.

A ballast water treatment method which relates to a twenty-fifth mode of this invention is the ballast water treatment method according to the twenty-fourth mode, and is characterized in that the seawater circulating in the vessel is taken from the outside of the vessel, and circulates in the vessel without being stored in the ballast tank.

A ballast water treatment method which relates to a twenty-sixth mode of this invention is the ballast water treatment method according to the twenty-fourth mode, and is characterized in that the residue removal step includes a step of forcing, by a pump, at least a part of the residue of the chlorine-based antiseptic agent remaining in the vessel and unused for the sterilization of the seawater to be stored in the ballast tank, to be injected into the seawater circulating in the vessel.

A ballast water treatment method which relates to a twenty-seventh mode of this invention is the ballast water treatment method according to the twenty-fourth mode, and is characterized in that the residue removal step includes a step of causing at least a part of the residue of the chlorine-based antiseptic agent remaining in the vessel and unused for the sterilization of the seawater to be stored in the ballast tank, to be injected into the seawater circulating in the vessel, together with forced water or after mixed with the forced water.

A ballast water treatment method which relates to a twenty-eighth mode of this invention is the ballast water treatment method according to the twenty-seventh mode, and is characterized in that the water is fresh water.

A ballast water treatment method which relates to a twenty-ninth mode of this invention is the ballast water treatment method according to the twenty-seventh mode, and is characterized in that the water contains a reducing substance or an alkaline substance.

A ballast water treatment method which relates to a thirtieth mode of this invention is the ballast water treatment method according to the twenty-fourth mode, and is characterized in that
the residue removal step includes
a step of retaining, in a tank together with a reducing substance or an alkaline substance, at least part of the residue of the chlorine-based antiseptic agent remaining in the vessel and unused for the sterilization of the seawater to be stored in the ballast tank, and
a step of injecting contents in the tank into the seawater circulating in the vessel.

A ballast water treatment method which relates to a thirty-first mode of this invention is the ballast water treatment method according to the twenty-fourth mode, and is characterized in that
the sterilization treatment step includes a step of injecting the chlorine-based antiseptic agent from an antiseptic agent injection hole into the seawater to be stored in the ballast tank,
the residue removal step includes a step of injecting at least part of the residue of the chlorine-based antiseptic agent remaining un-injected into the seawater to be stored in the ballast tank, from a residue injection hole into the seawater circulating in the vessel, and
the antiseptic agent injection hole doubles as the residue injection hole.

A ballast water treatment method which relates to a thirty-second mode of this invention is the ballast water treatment method according to the thirty-first mode, and is characterized in that the residue removal step includes a step of injecting a reducing agent into the seawater to be stored in the ballast tank into which at least part of the chlorine-based antiseptic agent has been injected, before discharging the seawater to the outside of the vessel.

A ballast water treatment method which relates to a thirty-third mode of this invention is the ballast water treatment method according to the twenty-fourth mode, and is characterized in that the residue removal step is started within 3 hours after the end of the sterilization treatment step.

A ballast water treatment method which relates to a thirty-fourth mode of this invention is the ballast water treatment method according to the twenty-fourth mode, and is characterized in that the antiseptic agent treatment step is executed before the vessel leaves a first port, and the residue removal step is executed before or after the vessel leaves the first port and before the vessel arrives at a second port.

A ballast water treatment method which relates to a thirty-fifth mode of this invention is the ballast water treatment method according to the twenty-fourth mode, and is characterized in that the antiseptic agent treatment step is executed before the vessel leaves a first port, and the residue removal step is executed after the vessel leaves the first port and when or after the vessel arrives at a second port.

A ballast water treatment method which relates to a thirty-sixth mode of this invention is the ballast water treatment method according to the twenty-fourth mode, and is characterized by further comprising a reduction treatment step of reducing free available chlorine which remains in the seawater to be stored in the ballast tank and which is derived from the chlorine-based antiseptic agent.

A ballast water treatment method which is for achieving the above described object and which relates to a thirty-seventh mode of this invention, is a ballast water treatment method which sterilizes a ballast water to be stored in a ballast tank provided in the vessel. The ballast water treatment method is characterized by comprising: an antiseptic agent preparation step of preparing a chlorine-based antiseptic agent to sterilize the ballast water to be stored in the ballast tank; a sterilization treatment step of injecting the chlorine-based antiseptic agent into the ballast water via a pipeline, and sterilizing the ballast water; and a residue removal step of removing, from the pipeline, at least a part of a residue of the chlorine-based antiseptic agent remaining in the pipeline and unused for the sterilization of the ballast water. Further, the residue removal step is characterized by including a first step of storing at least a part of the residue of the chlorine-based antiseptic agent in a tank, and a second step of discharging, from the tank, at least a part of the residue of the chlorine-based antiseptic agent stored in the tank.

A ballast water treatment method which relates to a thirty-eighth mode of this invention is the ballast water treatment method according to the thirty-seventh mode, and is characterized in that the second step of the residue removal step discharges at least part of the residue of the chlorine-based antiseptic agent stored in the tank into a pipe that circulates the ballast water.

A ballast water treatment method which relates to a thirty-ninth mode of this invention is the ballast water treatment method according to the thirty-seventh mode or the thirty-eighth mode, and is characterized by further comprising a step of causing at least part of the residue of the chlorine-based antiseptic agent stored in the tank to be returned to the tank before being moved from the tank and removed from the pipeline.

A ballast water treatment method which relates to a fortieth mode of this invention is the ballast water treatment method according to any one of the thirty-seventh mode to the thirty-ninth mode, and is characterized by further comprising a step of causing a reaction between at least part of the residue of the chlorine-based antiseptic agent and a removal reactive substance in the tank after the first step is executed and before the second step is executed, and is further characterized in that the removal reactive substance is a reducing substance or an alkaline substance.

A ballast water treatment method which relates to a forty-first mode of this invention is the ballast water treatment method according to any one of the thirty-seventh mode to the fortieth mode, and is characterized in that the residue removal step includes a step of supplying water and/or a removal reactive substance to the pipeline, and the removal reactive substance is a reducing substance or an alkaline substance.

A ballast water treatment method which is for achieving the above described object and which relates to a forty-second mode of this invention, is a ballast water treatment method which sterilizes a ballast water to be stored in a ballast tank provided in the vessel. The ballast water treatment method is characterized by comprising: an antiseptic agent preparation step of preparing a chlorine-based antiseptic agent to sterilize the ballast water to be stored in the ballast tank; a sterilization treatment step of injecting the chlorine-based antiseptic agent into the ballast water via an antiseptic agent pipeline, and sterilizing the ballast water; and a residue removal step of removing, from the antiseptic agent pipeline, at least a part of a residue of the chlorine-based antiseptic agent remaining in the antiseptic agent pipeline and unused for the sterilization of the ballast water. And, it is characterized in that the residue removal step includes a step of supplying water and/or a removal reactive substance to the antiseptic agent pipeline, and the removal reactive substance is a reducing substance or an alkaline substance.

A ballast water treatment method which relates to a forty-third mode of this invention is the ballast water treatment method according to the forty-second mode, and is characterized in that the residue removal step includes a step of returning the water and/or removal reactive substance supplied to the antiseptic agent pipeline, from a downstream side of the antiseptic agent pipeline to an upstream side thereof.

A ballast water treatment method which relates to a forty-forth mode of this invention is the ballast water treatment method according to the forty-second mode or the forty-third mode, and is characterized in that the water is fresh water.

A ballast water treatment method which relates to a forty-fifth mode of this invention is the ballast water treatment method according to any one of the forty-second mode to the forty-forth mode, and is characterized in that the residue removal step discharges at least a part of the residue of the chlorine-based antiseptic agent into a pipe that circulates the ballast water.

A ballast water treatment method which relates to a forty-sixth mode of this invention, is a ballast water treatment method which sterilizes a ballast water to be stored in a ballast tank provided in the vessel. The ballast water treatment method is characterized by comprising: an antiseptic agent preparation step of preparing a chlorine-based antiseptic agent to sterilize the ballast water to be stored in the ballast tank; a sterilization treatment step of injecting the chlorine-based antiseptic agent into the ballast water from an antiseptic agent injection hole via an antiseptic agent pipeline, and sterilizing the ballast water; and a residue removal step of removing, from the antiseptic agent pipeline, at least a part of a residue of the chlorine-based antiseptic agent remaining in the antiseptic agent pipeline and unused for the sterilization of the ballast water. Further, it is characterized in that the residue removal step includes a step of supplying a removal reactive substance at a position on an upstream side of the antiseptic agent injection hole of the antiseptic agent pipeline or at a position of the antiseptic agent injection hole, and the removal reactive substance is a reducing substance or an alkaline substance.

Note that in the present invention, meanings or interpretation of terms indicated below are as follows unless otherwise distinctively described.
(1) A "chlorine-based chemical" is a chemical which emits free available chlorine having a bactericidal action due to disproportionation in an aqueous solution when dissolved into water that is a solvent, or a chemical which generates a substance capable of emitting the free available chlorine. A "solid form" refers to a state of powder, granule, or a tablet at normal temperatures. The "chlorine-based chemical" does not need to be in the "solid form".
   Typical examples of a "solid chlorine-based chemical" are a trichloroisocyanuric acid, sodium dichloroisocyanurate and its hydrates, potassium dichloroisocyanurate, and the like. A "chlorine-based antiseptic agent" is a chemical to conduct sterilization by use of the bactericidal action of free available chlorine, and its typical example is an aqueous solution of a chlorine-based chemical.
(2) A "reducing substance" is, whether solid or not, a substance having a property of receiving (i.e. reduces) electrons from some other substance. A reducing substance related to the chlorine-based antiseptic agent is a substance having a property of reducing free available chlorine derived from the chlorine-based antiseptic agent. A "reducing agent" is, whether solid or not, a chemical used to receive electrons from some other substance. A reducing agent related to the chlorine-based antiseptic agent is a substance used to reduce free available chlorine derived from the chlorine-based antiseptic agent. Typical examples of the reducing agent are sodium sulfite or its hydrates, sodium subsulfite or its hydrates, or their aqueous solutions.
(3) An "alkaline substance" is a substance having a property of being dissolved into water and thus showing a basic property (i.e. having a hydrogen ion exponent (pH) of more than 7). Its typical example is a hydroxide (salt) of an alkaline metal or an alkaline earth metal, or a carbonate (salt) of an alkaline metal or an alkaline earth metal, which produces hydroxide ions when dissolved into water.
(4) A "pipeline" includes a pipe to circulate liquid, a mixture of a solid substance and liquid, and some other substance, as well as accessories attached to the pipe, such as a joint, a mixer, a valve, a pump, a sensor, and a buffer tank. Even when there are no accessories attached to a pipe, this pipe corresponds to the "pipeline". Even when an accessory attached to a pipe is a valve alone, the pipe and the valve correspond to the "pipeline".
(5) A "container" is an article having a function as a receptacle to store or retain liquid, a mixture of a solid substance and liquid, and some other substance for a long time or temporarily. "Contents of the container" refer to this substance. Typical examples of the "container" are a tank, a dissolution bath, and a tank and a hopper. The pipe is an article having a function as the "receptacle", and therefore corresponds to the "container". Thus, the pipeline also corresponds to the "container".
(6) When the "container" corresponds to the "pipeline" and the "pipeline" corresponds to the "container" by definition, respectively, but when these terms are clearly distinctively indicated in one sentence in such a manner as "a container and a pipeline", "a container or a pipeline", and "a pipeline connected to a container", these terms are interpreted as being different from each other. For example, when "a buffer tank connected to a pipeline" is indicated, the "pipeline" does not include the "buffer tank", and the "buffer tank" does not include the "pipeline".
(7) "Fresh water" means water containing less salt than seawater, and is synonymous with real water and plain water. Water resulting from seawater desalted by a seawater desalter also corresponds to the fresh water.
(8) "Seawater" may be any one of plain water, brackish water, and seawater, if taken from the outside of a vessel by a ballast pump in a first operation mode or a second operation mode. Therefore, seawater Wo which will be described later is not limited to seawater, and may be plain water or brackish water.

### ADVANTAGEOUS EFFECTS OF INVENTION

### <Vessel>

According to a vessel in the present invention, particularly a first mode of the present invention, at least part of an antiseptic agent residue is injected into seawater circulating in the vessel, and discharged to the outside of the vessel together with the seawater, so that it is possible to suppress or prevent the occurrence of operational troubles resulting from the antiseptic agent residue, such as blockage of a container or a pipeline, an increase in pressure loss, other circulation difficulties, and functional failure of accessories constituting the pipeline.

A typical example of force to inject at least part of an antiseptic agent residue into seawater circulating in a vessel is one or a combination of pressure by a pump, and negative pressure generated in the vicinity of a residue injection hole due to gravity or the circulation of the seawater (suction force toward seawater).

Depending on a place where a ballast water treatment device is mounted in a vessel, a destination of the vessel, a shipping route, a time of voyage, and the like, at least part of an antiseptic agent residue progresses in thickening, and on the contrary, the solubility of a chlorine-based chemical into water deteriorates due to a drop in the water temperature of the antiseptic agent residue. For example, if air conditioning and a function of ventilation are inadequate in an engine room of a vessel sailing right on the equator, the temperature in the engine room may become nearly 50 degrees centigrade (more than 50 degrees centigrade in some cases). Therefore, in a ballast water treatment device mounted in such an engine room, at least part of the antiseptic agent residue progresses in thickening in a short time due to significant evaporation of water. Moreover, even when the evaporation of water slowly progresses, thickening of the antiseptic agent residue progresses little by little but with certainty in the case where the ballast water treatment device is put in a non-operating state for a long time between a first operation and a second operation. On the other hand, if air conditioning and a function of ventilation are inadequate in an engine room of a vessel sailing in a sea area in high and middle latitudes, the temperature in the engine room is less than 30 degrees centigrade. Therefore, in a ballast water treatment device mounted in such an engine room, the solubility of a chlorine-based chemical into water deteriorates due to a drop in the water temperature of the antiseptic agent residue.

If the thickening of at least part of the antiseptic agent residue and the deterioration of the solubility of the chlorine-based chemical into water progress, a deposit of a component of the chlorine-based chemical is formed, accumulated, and in some cases, solidifies in the antiseptic agent residue and in a liquid contact region between the antiseptic agent residue and a component (a container, piping, and the like) of the ballast water treatment device. Accordingly, an operational trouble resulting from the antiseptic agent residue occurs, leading to a cause of obstruction to normal implementation of a ballast water treatment.

In contrast, according to a vessel in a second mode of the present invention, a second operation mode is started within 3 hours after the end of a first operation mode. Therefore, it is possible to suppress or prevent the occurrence of operational troubles resulting from the antiseptic agent residue, and thus normally implement a ballast water treatment.

To suppress progress in the formation, accumulation, and solidification of a deposit of a component of a chlorine-based chemical, it is preferable that the second operation mode is started at an earliest possible timing after the end of the first operation mode, specifically, that the second operation mode is started within 2 hours after the end of the first operation mode. It is yet preferable that the second operation mode is started immediately after the end of the first operation mode.

The antiseptic agent residue more easily moves when it receives pressure. Hence, according to a vessel in a third mode of the present invention, at least part of an antiseptic agent residue is forced by a pump and thus more easily injected into seawater circulating toward the outside of the vessel, and is therefore more easily discharged to the outside of the vessel. Moreover, the antiseptic agent residue more easily moves when it receives pressure of water, and increases in fluidity if it is mixed with water or dissolved into water.

Hence, according to a vessel in a fourth mode of the present invention, at least part of an antiseptic agent residue is mixed with or into water forced by a pump and thus more easily injected into seawater circulating toward the outside of the vessel, and is therefore more easily discharged to the outside of the vessel (hereinafter, an advantageous effect brought by the vessel according to the third and fourth modifications may be collectively or individually referred to as a "water washing removal effect"). Note that this water may be water which becomes a solvent of an aqueous solution of a chlorine-based antiseptic agent, or may be water which has already become a solvent of an aqueous solution of a chlorine-based antiseptic agent (in which case, therefore, the very aqueous solution of the chlorine-based antiseptic agent).

Some chlorine-based chemicals generate a chlorine-containing gas from an aqueous solution of a chlorine-based chemical. For example, in the case of sodium dichloroisocyanurate, a chlorine-containing gas is generated from its aqueous solution, and when a solvent of this aqueous solution is seawater, the generation of the chlorine-containing gas intensify. Even a small amount of chlorine-containing gas often has a pungent odor, and therefore deteriorates an in-vessel work environment around the generation source of the chlorine-containing gas.

In contrast, according to a vessel in a fifth mode of the present invention, at least part of an antiseptic agent residue is formed into an aqueous solution in which a mixture with fresh water or fresh water is a solvent, and then injected from a residue injection hole into seawater circulating toward the outside of the vessel. Therefore, it is possible to obtain a water washing removal effect, and at the same time, suppress or prevent the generation of the chlorine-containing gas in the case where a solvent is seawater, and thus deterioration of an in-vessel work environment.

Note that there are many vessels equipped with seawater desalters to produce fresh water to be used as drinking water and other water for living of crew. In this case, the fresh water has only to be supplied by fresh water produced by use of the seawater desalter mounted in the vessel, so that it is not necessary to mount an exclusive device to prepare the fresh water in a limited small space inside the vessel.

When free available chlorine is present in an antiseptic agent residue, a reduction reaction of the free available chlorine occurs if the antiseptic agent residue contacts a reducing substance, and a reaction product is formed in the vicinity of or inside the surface of the antiseptic agent residue. Therefore, the fluidity of this antiseptic agent residue may increase. Moreover, even when there is concern that a chlorine-containing gas might be generated from an aqueous solution of a chlorine-based chemical and the in-vessel work environment might deteriorate due to this chlorine-containing gas, the generation of the chlorine-containing gas does not occur or is suppressed if the free available chlorine in the aqueous solution (chlorine-based antiseptic agent) of the chlorine-based chemical is reduced by contact with the reducing substance, or if this aqueous solution is increased in pH and alkalified by an alkaline substance to accelerate a decomposition reaction of an antiseptic agent component having the free available chlorine in the aqueous solution (chlorine-based antiseptic agent) of the chlorine-based chemical.

Hence, according to a vessel in a sixth mode of the present invention, water containing a reducing substance or an alkaline substance forced by a pump is circulated, so that even in the case where there is concern that a chlorine-containing gas might be generated from an aqueous solution of a chlorine-based chemical, the generation can be suppressed or prevented (hereinafter, this advantageous effect may be referred to as a "reaction removal effect"). Moreover, since at least part of an antiseptic agent residue is forced by the pump, a water washing removal effect can be obtained.

According to a vessel in a seventh mode of the present invention, after free available chlorine which remains in seawater taken from a ballast tank and which is derived from a chlorine-based antiseptic agent is detoxified by a reducing agent, this ballast water can be discharged to the outside of the vessel.

According to a vessel in an eighth mode of the present invention, part of a reducing agent used to detoxify seawater taken from a ballast tank before it is discharged to the outside of the vessel is used for a reaction with at least part of an antiseptic agent residue, so that it is not necessary to mount an exclusive device to prepare a reducing substance used for a reaction with the antiseptic agent residue in a limited small space inside the vessel.

According to a vessel in a ninth mode of the present invention, an antiseptic agent injection hole doubles as a residue injection hole, so that even an antiseptic agent residue present in the vicinity of the antiseptic agent injection hole located at an end of an antiseptic agent pipeline can be discharged to the outside of the vessel. Note that in the case of a C type and a D type of a second operation mode which will be described later, at least part of an antiseptic agent residue is injected into seawater circulating toward the outside of the vessel, and dissolution or more uniform dispersion of the antiseptic agent residue into the seawater can be thereby accelerated. It is therefore possible to more efficiently conduct a reduction of free available chlorine derived from a chlorine-based antiseptic agent by continuous injection of a reducing agent.

According to a vessel in a tenth mode of the present invention, when an aqueous solution of a trichloroisocyanuric acid, sodium dichloroisocyanurate, or potassium dichloroisocyanurate is used as a chlorine-based antiseptic agent, fresh water is used as a solvent. Therefore, it is possible to suppress or prevent the generation of a chlorine-containing gas, and thus deterioration of an in-vessel work environment.

According to a vessel in an eleventh mode of the present invention, a solvent of an aqueous solution of a trichloroisocyanuric acid, sodium dichloroisocyanurate, or potassium dichloroisocyanurate is supplied by fresh water produced by use of a seawater desalter mounted in the vessel, so that it is not necessary to mount an exclusive device to prepare fresh water which is the solvent in the vessel that can never be said to be large.

Generally, according to a vessel of the present invention, it is possible to obtain a vessel capable of exerting advantageous effects provided by each mode of the present invention, and thereby normally implementing a ballast water treatment.

### <Ballast Water Treatment Device>

A ballast water treatment device according to the present invention, particularly a twelfth mode of the present invention comprises a tank to store at least part of a residue of a chlorine-based antiseptic agent remaining in an antiseptic agent pipeline and unused for the sterilization of ballast water, and a residue pipeline which circulates at least part of contents stored in the tank. Therefore, it is possible to suppress or prevent the occurrence of operational troubles resulting from the residue of the chlorine-based antiseptic agent, such as blockage of a container or a pipeline, an increase in pressure loss, other circulation difficulties, and functional failure of accessories constituting the pipeline.

When free available chlorine is present in the residue of the chlorine-based antiseptic agent, there is concern that a chlorine-containing gas might be generated from the residue of the chlorine-based antiseptic agent, and an in-vessel work environment might deteriorate due to this chlorine-containing gas. Even in this case, the generation of the chlorine-containing gas does not occur or is suppressed if the free available chlorine is reduced by bringing the residue of the chlorine-based antiseptic agent into contact with a reducing substance, or if the residue of the chlorine-based antiseptic agent is increased in pH and alkalified by an alkaline substance to accelerate the decomposition of an antiseptic agent component having the free available chlorine in the residue of the chlorine-based antiseptic agent.

Hence, according to a ballast water treatment device in an eighteenth mode of the present invention, a tank is a tank which retains at least part of the residue of the chlorine-based antiseptic agent together with water containing a removal reactive substance at least temporarily or for a short time, and the removal reactive substance is a reducing substance or an alkaline substance. Therefore, even in the case where there is concern that a chlorine-containing gas might be generated from a residue of a chlorine-based antiseptic agent, the generation can be suppressed or prevented.

In the ballast water treatment device according to the eighteenth mode of the present invention, in the case where heat generation occurs due to a reaction between a residue of a chlorine-based antiseptic agent and a reducing substance or an alkaline substance, a tank is a tank which retains at least part of the residue of the chlorine-based antiseptic agent together with water containing a removal reactive substance at least temporarily or for a short time, and both of the substances are retained in the tank at least temporarily or for a short time. Thus, a place where heat generation occurs is mostly the tank. Therefore, according to this ballast water treatment device in the eighth modification, the target against which heat generation measures are to be taken can be mostly restricted to the tank.

According to a ballast water treatment device in the present invention, particularly a nineteenth mode of the present invention, at least part of a residue of a chlorine-based antiseptic agent remaining in an antiseptic agent pipeline and unused for the sterilization of ballast water is removed to the outside of the antiseptic agent pipeline by the supply of water and/or a removal reactive substance to the antiseptic agent pipeline, and the removal reactive substance is a reducing substance or an alkaline substance. Therefore, it is possible to suppress or prevent the occurrence of operational troubles resulting from the residue of the chlorine-based antiseptic agent, such as blockage of a container or a pipeline, an increase in pressure loss, other circulation difficulties, and functional failure of accessories constituting the pipeline.

Some chlorine-based chemicals generate a chlorine-containing gas from an aqueous solution of a chlorine-based chemical. For example, in the case of chlorinated sodium isocyanurate, a chlorine-containing gas is generated from its aqueous solution, and even a small amount of chlorine-containing gas often has a pungent odor, and therefore deteriorates an in-vessel work environment around the generation source of the chlorine-containing gas.

In contrast, according to a ballast water treatment device in a twenty-first mode of the present invention, at least part of a residue of a chlorine-based antiseptic agent remaining in an antiseptic agent pipeline and unused for the sterilization of ballast water is removed to the outside of the antiseptic agent pipeline by the supply of fresh water to the antiseptic agent pipeline. Therefore, it is possible to obtain a water washing removal effect, and at the same time, suppress or prevent the generation of the chlorine-containing gas, and thus deterioration of an in-vessel work environment.

When free available chlorine is present in the residue of the chlorine-based antiseptic agent, there is concern that a chlorine-containing gas might be generated from the residue of the chlorine-based antiseptic agent, and an in-vessel work environment might deteriorate due to this chlorine-containing gas. Even in this case, the generation of the chlorine-containing gas does not occur or is suppressed if the free available chlorine is reduced by bringing the residue of the chlorine-based antiseptic agent into contact with a reducing substance, or if the residue of the chlorine-based antiseptic agent is increased in pH and alkalified by an alkaline substance to accelerate the decomposition of an antiseptic agent component having the free available chlorine in the residue of the chlorine-based antiseptic agent.

Hence, according to a ballast water treatment device in a nineteenth mode of the present invention, at least part of the residue of the chlorine-based antiseptic agent remaining in an antiseptic agent pipeline and unused for the sterilization of the ballast water is removed to the outside of the antiseptic agent pipeline by the supply of a removal reactive substance to the antiseptic agent pipeline, and the removal reactive substance is a reducing substance or an alkaline substance. Therefore, even in the case where there is concern that a chlorine-containing gas might be generated from a residue of a chlorine-based antiseptic agent, the generation can be suppressed or prevented.

If the residue of the chlorine-based antiseptic agent remaining in the antiseptic agent pipeline contacts the removal reactive substance, a reaction is caused, and the amount of the residue of the chlorine-based antiseptic agent decreases together with the increase of a reaction product. In some cases, the fluidity of the residue of the chlorine-based antiseptic agent increases. Hence, according to a ballast water treatment device in a twenty-third mode of the present invention, there is provided a removal reactive substance injection hole through which a removal reactive substance is injected at a position on an upstream side of an antiseptic agent injection hole of the antiseptic agent pipeline or at a position of the antiseptic agent injection hole. Therefore, it is possible to cause a reaction between the residue of the chlorine-based antiseptic agent and the removal reactive substance, and remove at least part of the residue of the chlorine-based antiseptic agent which has been decreased in amount or increased in fluidity to the outside of the antiseptic agent pipeline.

Even when there is concern that a chlorine-containing gas might be generated from the residue of the chlorine-based antiseptic agent and an in-vessel work environment might deteriorate due to this chlorine-containing gas, the generation of the chlorine-containing gas does not occur or is suppressed if the free available chlorine in the residue of the chlorine-based antiseptic agent is reduced by bringing the residue of the chlorine-based antiseptic agent into contact with a reducing substance, or if the residue of the chlorine-based antiseptic agent is increased in pH and alkalified by bringing an alkaline substance into contact with the residue of the chlorine-based antiseptic agent to accelerate a decomposition reaction of an antiseptic agent component having the free available chlorine in the residue of the chlorine-based antiseptic agent. Hence, according to the ballast water treatment device in the twenty-third mode of the present invention, there is provided a removal reactive substance injection hole through which a removal reactive substance is injected at a position on an upstream side of an antiseptic agent injection hole of the antiseptic agent pipeline or at a position of the antiseptic agent injection hole. Therefore, it is possible to cause a reaction between the residue of the chlorine-based antiseptic agent and the removal reactive substance, and even in the case where there is concern that a chlorine-containing gas might be generated from a residue of a chlorine-based antiseptic agent, the generation can be suppressed or prevented.

Generally, according to a ballast water treatment device of the present invention, it is possible to exert advantageous effects provided by each mode of the present invention, and thereby normally implement a ballast water treatment in a vessel.

### <Ballast Water Treatment Method>

According to a ballast water treatment method in the present invention, particularly a twenty-fourth mode of the present invention, at least part of an antiseptic agent residue is injected into seawater circulating in the vessel and discharged to the outside of the vessel together with the seawater, so that it is possible to suppress or prevent the occurrence of operational troubles resulting from the antiseptic agent residue, such as blockage of a container or a pipeline, an increase in pressure loss, other circulation difficulties, and functional failure of accessories constituting the pipeline.

A typical example of force to inject at least part of an antiseptic agent residue into seawater circulating in a vessel is one or a combination of pressure by a pump and negative pressure generated in the vicinity of a residue injection hole due to gravity or the circulation of the seawater (suction force toward seawater).

A ballast water treatment method according to a twenty-sixth mode of the present invention corresponds to an example including a step of injecting at least part of an antiseptic agent residue into seawater circulating in a vessel by use of pressure of a pump.

The antiseptic agent residue more easily moves when under pressure. Hence, according to the ballast water treatment method in the twenty-sixth mode of the present invention, at least part of an antiseptic agent residue is forced by a pump and thus more easily injected into seawater circulating toward the outside of the vessel, and is therefore more easily discharged to the outside of the vessel. Moreover, the antiseptic agent residue more easily moves when under pressure of water, and increases in fluidity if mixed with water or dissolved into water.

Hence, according to a ballast water treatment method in a twenty-seventh mode of the present invention, at least part of an antiseptic agent residue is mixed with or into forced water and thus more easily injected into seawater circulating toward the outside of the vessel, and is therefore more easily discharged to the outside of the vessel (hereinafter, an advantageous effect brought by the ballast water treatment method according to the twenty-sixth and twenty-seventh modes may be collectively or individually referred to as a "water washing removal effect"). Note that this water may be water which becomes a solvent of an aqueous solution of a chlorine-based antiseptic agent, or may be water which has already become a solvent of an aqueous solution of a chlorine-based antiseptic agent (in which case, therefore, the very aqueous solution of the chlorine-based antiseptic agent).

Some chlorine-based chemicals generate a chlorine-containing gas from an aqueous solution of a chlorine-based chemical. For example, in the case of sodium dichloroisocyanurate, a chlorine-containing gas is generated from its aqueous solution, and when a solvent of this aqueous solution is seawater, the generation of the chlorine-containing gas intensify. Even a small amount of chlorine-containing gas often has a pungent odor, and therefore deteriorates an in-vessel work environment around the generation source of the chlorine-containing gas.

In contrast, according to a ballast water treatment method in a twenty-eighth mode of the present invention, at least part of an antiseptic agent residue is formed into an aqueous solution in which a mixture with fresh water or fresh water is a solvent, and then injected from a residue injection hole into seawater circulating toward the outside of the vessel. Therefore, it is possible to obtain a water washing removal effect, and at the same time, suppress or prevent the generation of the chlorine-containing gas in the case where a solvent is seawater, and thus deterioration of an in-vessel work environment.

Note that there are many vessels equipped with seawater desalters to produce fresh water to be used as drinking water and other water for living of crew. In this case, this fresh water has only to be supplied by fresh water produced by use of the seawater desalter mounted in the vessel, so that it is not necessary to mount an exclusive device to prepare the fresh water in a limited small space inside the vessel.

When free available chlorine is present in an antiseptic agent residue, a reduction reaction of the free available chlorine occurs if the antiseptic agent residue contacts a reducing substance, and a reaction product is formed in the vicinity of or inside the surface of the antiseptic agent residue. Therefore, the fluidity of this antiseptic agent residue may increase. Moreover, even when there is concern that a chlorine-containing gas might be generated from an aqueous solution of a chlorine-based antiseptic agent and the in-vessel work environment might deteriorate due to this chlorine-containing gas, the generation of the chlorine-containing gas does not occur or is suppressed if the free available chlorine in the aqueous solution (chlorine-based antiseptic agent) of the chlorine-based chemical is reduced by contact with the reducing substance, or if this aqueous solution is increased in pH and alkalified by an alkaline substance to accelerate a decomposition reaction of an antiseptic agent component having the free available chlorine in the aqueous solution (chlorine-based antiseptic agent) of the chlorine-based chemical.

Hence, according to a ballast water treatment method in a twenty-ninth mode of the present invention, forced water containing a reducing substance or alkalinity is circulated, so that even in the case where there is concern that a chlorine-containing gas might be generated from an aqueous solution of a chlorine-based chemical, the generation can be suppressed or prevented. Moreover, since at least part of an antiseptic agent residue is forced by a pump, a water washing removal effect can be obtained.

In the ballast water treatment method according to the thirtieth mode of the present invention, in the case where heat generation occurs due to a reaction between an antiseptic agent residue and a reducing substance or an alkaline substance, both of the substances are retained in a tank at least temporarily or for a short time. Thus, a place where heat generation occurs is mostly the tank. Therefore, according to this ballast water treatment method in the thirtieth mode, the target against which heat generation measures are to be taken can be mostly restricted to the tank.

According to a ballast water treatment method in a thirty-first mode of the present invention, an antiseptic agent injection hole doubles as a residue injection hole, so that even an antiseptic agent residue present in the vicinity of the antiseptic agent injection hole located at an end of an antiseptic agent pipeline can be discharged to the outside of the vessel.

Furthermore, according to a ballast water treatment method in a thirty-second mode of the present invention, at least part of an antiseptic agent residue is injected into seawater circulating in a vessel toward the outside of the vessel, and dissolution or more uniform dispersion of the antiseptic agent residue into the seawater can be thereby accelerated. It is therefore possible to more efficiently conduct a reduction of free available chlorine derived from a chlorine-based antiseptic agent by continuous injection of a reducing substance.

Depending on a place where a ballast water treatment device is mounted in a vessel, a destination of the vessel, a shipping route, a time of voyage, and the like, at least part of an antiseptic agent residue progresses in thickening, and on the contrary, the solubility of a chlorine-based chemical into water deteriorates due to a drop in the water temperature of the antiseptic agent residue. For example, if air conditioning and a function of ventilation are inadequate in an engine room of a vessel sailing right on the equator, the temperature in the engine room may become nearly 50 degrees centigrade (more than 50 degrees centigrade in some cases). Therefore, in a ballast water treatment device mounted in such an engine room, at least part of the antiseptic agent residue progresses in thickening in a short time due to significant evaporation of water. Moreover, even when the evaporation of water slowly progresses, thickening of the antiseptic agent residue progresses little by little but with certainty in the case where the ballast water treatment device is put in a non-operating state for a long time between a first operation and a second operation. On the other hand, if air conditioning and a function of ventilation are inadequate in an engine room of a vessel sailing in a sea area in high and middle latitudes, the temperature in the engine room is less than 30 degrees centigrade. Therefore, in a ballast water treatment device mounted in such an engine room, the solubility of a chlorine-based chemical into water deteriorates due to a drop in the water temperature of the antiseptic agent residue.

If the thickening of at least part of the antiseptic agent residue and the deterioration of the solubility of the chlorine-based chemical into water progress, a deposit of a component of the chlorine-based chemical is formed, accumulated, and in some cases, solidifies in the antiseptic agent residue and in a liquid contact region between the antiseptic agent residue and a component (a container, piping, or the like) of the ballast water treatment device. Accordingly, an operational trouble resulting from the antiseptic agent residue occurs, leading to a cause of obstruction to normal implementation of a ballast water treatment.

In contrast, according to a ballast water treatment method in a thirty-third mode of the present invention, a residue removal step is started within 3 hours after the end of an antiseptic agent treatment step. Therefore, it is possible to suppress or prevent the occurrence of operational troubles resulting from the antiseptic agent residue, and thus normally implement a ballast water treatment.

To suppress progress in the formation, accumulation, and solidification of a deposit of a component of a chlorine-based chemical, it is preferable that the residue removal step is started at an earliest possible timing after the end of the antiseptic agent treatment step, specifically, that the residue removal step is started within 2 hours after the end of the antiseptic agent treatment step. It is yet preferable that the residue removal step is started immediately after the end of the antiseptic agent treatment step.

Indeed, as long as there is an effect of suppressing or preventing the occurrence of operational troubles resulting from the antiseptic agent residue, a time difference between the antiseptic agent treatment step and the residue removal step may be more than 3 hours.

Thus, in some cases, as in a ballast water treatment method in a thirty-fourth mode of the present invention, the antiseptic agent treatment step may be executed before a vessel leaves a first port, and the residue removal step may be executed before or after the vessel leaves the first port and after the vessel arrives at a second port. Alternatively, as in a ballast water treatment method in a thirty-fifth mode of the present invention, the antiseptic agent treatment step may be executed before a vessel leaves a first port, and the residue removal step may be executed after the vessel leaves the first port and when or after the vessel arrives at a second port.

According to a ballast water treatment method in a thirty-sixth mode of the present invention, after free available chlorine which remains in seawater taken from a ballast tank and which is derived from a chlorine-based antiseptic agent is detoxified by a reducing agent, this ballast water can be discharged to the outside of the vessel.

According to a ballast water treatment method in the present invention, particularly a thirty-seventh mode of the present invention, there is provided a residue removal step of removing, from a pipeline, at least part of a residue of the chlorine-based antiseptic agent remaining in the pipeline and unused for the sterilization of the ballast water. Further, the residue removal step includes a first step of storing at least part of the residue of the chlorine-based antiseptic agent in a tank, and a second step of discharging, from the tank, at least part of the residue of the chlorine-based antiseptic agent stored in the tank. Therefore, it is possible to suppress or prevent the occurrence of operational troubles resulting from the residue of the chlorine-based antiseptic agent, such as blockage of a container or a pipeline, an increase in pressure loss, other circulation difficulties, and functional failure of accessories constituting the pipeline.

When free available chlorine is present in the residue of the chlorine-based antiseptic agent, there is concern that a chlorine-containing gas might be generated from the residue of the chlorine-based antiseptic agent, and an in-vessel work environment might deteriorate due to this chlorine-containing gas. Even in this case, the generation of the chlorine-containing gas does not occur or is suppressed if the free available chlorine is reduced by bringing the residue of the chlorine-based antiseptic agent into contact with a reducing substance, or if the residue of the chlorine-based antiseptic agent is increased in pH and alkalified by an alkaline substance to accelerate the decomposition of an antiseptic agent component having the free available chlorine in the residue of the chlorine-based antiseptic agent.

Hence, according to a ballast water treatment method in a fortieth or forty-first mode of the present invention, there is included a step of causing a reaction between at least part of the residue of the chlorine-based antiseptic agent and a removal reactive substance in a tank, or a step of supplying water and/or a removal reactive substance to a pipeline, and then causing a reaction, in the pipeline, between at least part of the residue of the chlorine-based antiseptic agent in the pipeline and the removal reactive substance. The removal reactive substance is a reducing substance or an alkaline substance. Therefore, even in the case where there is concern that a chlorine-containing gas might be generated from a residue of a chlorine-based antiseptic agent, the generation can be suppressed or prevented.

In the ballast water treatment method according to the fortieth mode of the present invention, in the case where heat generation occurs due to a reaction between a residue of a chlorine-based antiseptic agent and a reducing substance or an alkaline substance, both of the substances are retained in a tank at least temporarily or for a short time. Thus, a place where heat generation occurs is mostly the tank. Therefore, according to this ballast water treatment method in the fortieth mode, the target against which heat generation measures are to be taken can be mostly restricted to the tank.

According to a ballast water treatment method in the present invention, particularly a forty-second mode of the present invention, there is provided a residue removal step of removing, from a pipeline, at least part of a residue of the chlorine-based antiseptic agent remaining in the pipeline and unused for the sterilization of the ballast water. Further, the residue removal step includes a step of supplying water and/or a removal reactive substance to the antiseptic agent pipeline, and the removal reactive substance is a reducing substance or an alkaline substance. Therefore, it is possible to suppress or prevent the occurrence of operational troubles resulting from the residue of the chlorine-based antiseptic agent, such as blockage of a container or a pipeline, an increase in pressure loss, other circulation difficulties, and functional failure of accessories constituting the pipeline.

Some chlorine-based chemicals generate a chlorine-containing gas from an aqueous solution of a chlorine-based chemical. For example, in the case of chlorinated sodium isocyanurate, a chlorine-containing gas is generated from its aqueous solution, and even a small amount of chlorine-containing gas often has a pungent odor, and therefore deteriorates an in-vessel work environment around the generation source of the chlorine-containing gas.

In contrast, according to a ballast water treatment method in a forty-fourth mode of the present invention, there is included a residue removal step of removing, from an antiseptic agent pipeline, at least part of a residue of a chlorine-based antiseptic agent remaining in the antiseptic agent pipeline and unused for the sterilization of the ballast water. The residue removal step includes supplying fresh water to the antiseptic agent pipeline. Therefore, it is possible to obtain a water washing removal effect, and at the same time, suppress or prevent the generation of the chlorine-containing gas and thus deterioration of an in-vessel work environment.

When free available chlorine is present in the residue of the chlorine-based antiseptic agent, there is concern that a chlorine-containing gas might be generated from the residue of the chlorine-based antiseptic agent, and an in-vessel work environment might deteriorate due to this chlorine-containing gas. Even in this case, the generation of the chlorine-containing gas does not occur or is suppressed if the free available chlorine is reduced by bringing the residue of the chlorine-based antiseptic agent into contact with a reducing substance, or if the residue of the chlorine-based antiseptic agent is increased in pH and alkalified by an alkaline substance to accelerate the decomposition of an antiseptic agent component having the free available chlorine in the residue of the chlorine-based antiseptic agent.

Hence, according to the ballast water treatment method in the forty-second mode of the present invention, there is included a residue removal step of removing, from an antiseptic agent pipeline, at least part of a residue of the chlorine-based antiseptic agent remaining in the antiseptic agent pipeline and unused for the sterilization of the ballast water. The residue removal step includes a step of supplying a removal reactive substance to the antiseptic agent pipeline. In addition, the removal reactive substance is a reducing substance or an alkaline substance. Therefore, even in the case where there is concern that a chlorine-containing gas might be generated from a residue of a chlorine-based antiseptic agent, the generation can be suppressed or prevented.

If the residue of the chlorine-based antiseptic agent remaining in the antiseptic agent pipeline contacts the removal reactive substance, a reaction is caused, and the amount of the residue of the chlorine-based antiseptic agent decreases together with the increase of a reaction product. In some cases, the fluidity of the residue of the chlorine-based antiseptic agent increases. Hence, according to a ballast water treatment method in a forty-sixth mode of the present invention, there is provided a removal reactive substance injection hole through which a removal reactive substance is injected at a position on an upstream side of an antiseptic agent injection hole of the antiseptic agent pipeline or at a position of the antiseptic agent injection hole. Therefore, it is possible to cause a reaction between the residue of the chlorine-based antiseptic agent and the removal reactive substance, and remove at least part of the residue of the chlorine-based antiseptic agent which has been decreased in amount or increased in fluidity to the outside of the antiseptic agent pipeline.

Even when there is concern that a chlorine-containing gas might be generated from the residue of the chlorine-based antiseptic agent and an in-vessel work environment might deteriorate due to this chlorine-containing gas, the generation of the chlorine-containing gas does not occur or is suppressed if the free available chlorine in the residue of the chlorine-based antiseptic agent is reduced by bringing a reducing substance into contact with the residue of the chlorine-based antiseptic agent, or if the residue of the chlorine-based antiseptic agent is increased in pH and alkalified by bringing an alkaline substance into contact with the residue of the chlorine-based antiseptic agent to accelerate a decomposition reaction of an antiseptic agent component having the free available chlorine in the residue of the chlorine-based antiseptic agent. Hence, according to the ballast water treatment method in the forty-sixth mode of the present invention, there is provided a removal reactive substance injection hole through which a removal reactive substance is injected at a position on an upstream side of an antiseptic agent injection hole of the antiseptic agent pipeline or at a position of the antiseptic agent injection hole. Therefore, it is possible to cause a reaction between the residue of the chlorine-based antiseptic agent and the removal reactive substance, and even in the case where there is concern that a chlorine-containing gas might be generated from a residue of a chlorine-based antiseptic agent, the generation can be suppressed or prevented.

Generally, according to a ballast water treatment method of the present invention, it is possible to exert advantageous effects provided by each mode of the present invention, and thereby normally implement a ballast water treatment in a vessel.

### BRIEF DESCRIPTION OF DRAWINGS

FIG. 1 is a basic configuration explanatory diagram of a first embodiment of a vessel to which a vessel according to the present invention and a ballast water treatment method according to the present invention are applied;
FIG. 2 is an explanatory diagram of a first operation mode of a ballast pump in the first embodiment of the vessel to which the vessel according to the present invention and the ballast water treatment method according to the present invention are applied;
FIG. 3 is an explanatory diagram of a third operation mode of the ballast pump in the first embodiment of the vessel to which the vessel according to the present invention and the ballast water treatment method according to the present invention are applied;
FIG. 4 is an explanatory diagram of an A-type of a second operation mode of the ballast pump in the first embodiment of the vessel to which the vessel according to the present invention and the ballast water treatment method according to the present invention are applied;
FIG. 5 is an explanatory diagram of a B-type of the second operation mode of the ballast pump in the first embodiment of the vessel to which the vessel according to the present invention and the ballast water treatment method according to the present invention are applied;
FIG. 6 is an explanatory diagram of a C-type of the second operation mode of the ballast pump in the first embodiment of the vessel to which the vessel according to the present invention and the ballast water treatment method according to the present invention are applied;
FIG. 7 is an explanatory diagram of a D-type of the second operation mode of the ballast pump in the first embodiment of the vessel to which the vessel according to the present invention and the ballast water treatment method according to the present invention are applied;
FIG. 8 is an explanatory diagram of the removal of an antiseptic agent residue in the first embodiment of the vessel to which the vessel according to the present invention and the ballast water treatment method according to the present invention are applied;
FIG. 9 is an explanatory diagram of a modification of the removal of the antiseptic agent residue shown in FIG. 8;
FIG. 10 is an explanatory diagram of another modification of the removal of the antiseptic agent residue shown in FIG. 8;
FIG. 11 is an explanatory diagram of another modification of the removal of the antiseptic agent residue shown in FIG. 9;
FIG. 12 is a process flow explanatory diagram of a ballast water treatment method executed in the vessel according to the present invention, and a ballast water treatment method according to the present invention as well as its modification;
FIG. 13 is a basic configuration explanatory diagram of a second embodiment of a vessel to which the vessel according to the present invention and the ballast water treatment method according to the present invention are applied;
FIG. 14 is an explanatory diagram of a first operation mode of a ballast pump in the second embodiment of the vessel to which the vessel according to the present invention and the ballast water treatment method according to the present invention are applied;
FIG. 15 is an explanatory diagram of a third operation mode of the ballast pump in the second embodiment of the vessel to which the vessel according to the present invention and the ballast water treatment method according to the present invention are applied;
FIG. 16 is an explanatory diagram of an A-type of a second operation mode of the ballast pump in the second embodiment of the vessel to which the vessel according to the present invention and the ballast water treatment method according to the present invention are applied;
FIG. 17 is an explanatory diagram of a B-type of the second operation mode of the ballast pump in the second embodiment of the vessel to which the vessel according to the present invention and the ballast water treatment method according to the present invention are applied;
FIG. 18 is an explanatory diagram of a C-type of the second operation mode of the ballast pump in the second embodiment of the vessel to which the vessel according to the present invention and the ballast water treatment method according to the present invention are applied;
FIG. 19 is an explanatory diagram of a D-type of the second operation mode of the ballast pump in the second embodiment of the vessel to which the vessel according to the present invention and the ballast water treatment method according to the present invention are applied;
FIG. 20 is an explanatory diagram of a configuration example of taking out a reducing substance from a reducing agent supply device;
FIG. 21 is an explanatory diagram of another configuration example of taking out a reducing substance from a reducing agent supply device;
FIG. 22 is an explanatory diagram of a modification of the basic configuration of the second embodiment of the vessel to which the vessel according to the present invention and the ballast water treatment method according to the present invention are applied;
FIG. 23 is an explanatory diagram of another modification of the basic configuration of the second embodiment of the vessel to which the vessel according to the present invention and the ballast water treatment method according to the present invention are applied;
FIG. 24 is an explanatory diagram of a first operation mode of a ballast pump in another modification of the basic configuration of the second embodiment of the vessel to which the vessel according to the present invention and the ballast water treatment method according to the present invention are applied;
FIG. 25 is an explanatory diagram of a third operation mode of a ballast pump in another modification of the basic configuration of the second embodiment of the vessel to which the vessel according to the present invention and the ballast water treatment method according to the present invention are applied;
FIG. 26 is an explanatory diagram of an A-type of a second operation mode of the ballast pump in another modification of the basic configuration of the second embodiment of the vessel according to the present invention;
FIG. 27 is an explanatory diagram of a B-type of the second operation mode of the ballast pump in another modification of the basic configuration of the second embodiment of the vessel to which the vessel according to the present invention and the ballast water treatment method according to the present invention are applied;
FIG. 28 is an explanatory diagram of a C-type of the second operation mode of the ballast pump in another modification of the basic configuration of the second embodiment of the vessel to which the vessel according to the present invention and the ballast water treatment method according to the present invention are applied; and
FIG. 29 is an explanatory diagram of a D-type of the second operation mode of the ballast pump in another modification of the basic configuration of the second embodiment of the vessel to which the vessel according to the present invention and the ballast water treatment method according to the present invention are applied.

### DETAILED DESCRIPTION

Hereinafter, embodiments or examples of the present invention will be shown, and the present invention will be described in detail. In this instance, the present invention is described with reference to the drawings as needed, and the same parts or equivalent or common parts throughout the diagrams are indicated by the same signs. Needless to say, the present invention is not limited to the embodiments or examples illustrated in the drawings.

### <First Embodiment of Vessel to which Vessel according to the Present Invention and Ballast Water Treatment Method according to the Present Invention are Applied>

### 1) Basic Configuration

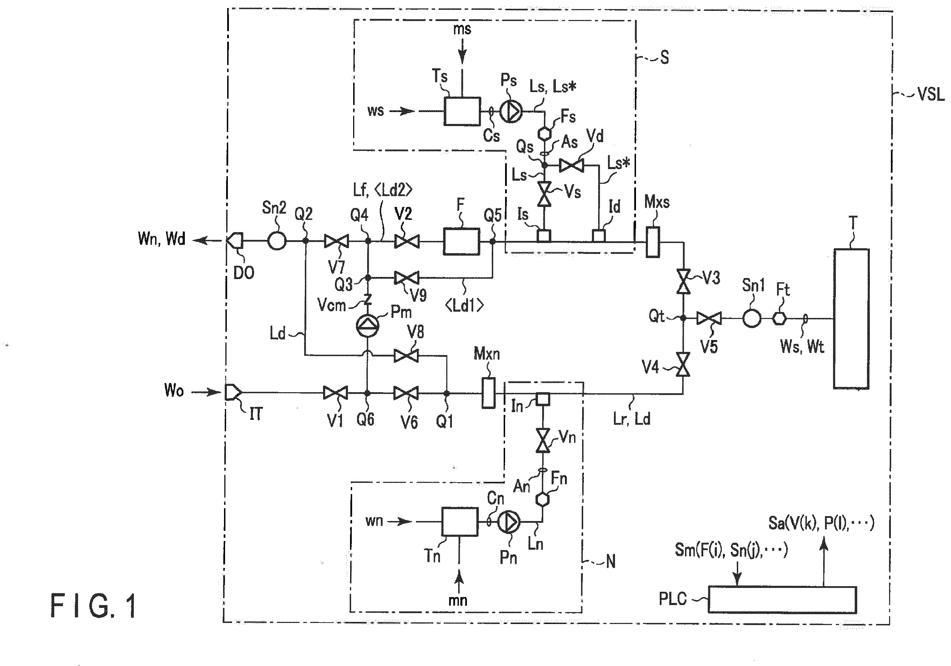

FIG. 1 is a basic configuration explanatory diagram of a first embodiment of a vessel (hereinafter referred to as a "vessel VSL") to which a vessel according to the present invention and a ballast water treatment method according to the present invention are applied. For convenience of explanation, all open-close valves are drawn in an open state in FIG. 1.

As shown in FIG. 1, the vessel VSL comprises an intake or a sea chest IT, a ballast pump Pm, a ballast tank T, and a drain hole D0. The vessel VSL comprises a pipeline for ballast water intake Lf which links the sea chest IT, the ballast pump Pm, and the ballast tank T and which circulates, toward the ballast tank T, seawater Wo taken from the outside of the vessel through the intake IT, injects a chlorine-based antiseptic agent As along the way to form the seawater Wo into seawater Ws injected with the chlorine-based antiseptic agent As, and then discharges the seawater Ws to the ballast tank T, a pipeline for ballast water discharge Lr which links the ballast tank T, the ballast pump Pm, and the drain hole D0 and which circulates, toward the drain hole D0, a ballast water Wt taken from the ballast tank T, and discharges the ballast water Wt to the outside of the vessel through the drain hole D0, a filter device F which filters the seawater Wo circulating in the pipeline for ballast water intake Lf, and an antiseptic agent supply device S equipped with an antiseptic agent injection hole Is through which the chlorine-based antiseptic agent As is injected into the pipeline for ballast water intake Lf downstream of the filter device F.

The vessel VSL further comprises a reducing agent supply device N equipped with a reducing agent injection hole In through which a reducing agent An is injected into the pipeline for ballast water discharge Lr, thereby enabling the reducing agent An to be injected into the ballast water Wt taken from the ballast tank T along the pipeline for ballast water discharge Lr to form the ballast water Wt into a ballast water Wn injected with the reducing agent An, and discharge the ballast water Wn injected with the reducing agent An to the outside of the vessel through the drain hole D0.

The vessel VSL further comprises a pipeline for residue discharge Ld which circulates, toward the drain hole D0, the seawater Wo taken from the outside of the vessel through the intake IT, without passing the seawater Wo through ballast tank T, injects at least part of an antiseptic agent residue Re into the seawater Wo in a pipeline Ls of the antiseptic agent supply device S along the way to form the seawater Wo into seawater Wd injected with the antiseptic agent residue Re, and then discharges the seawater Wd to the outside of the vessel through the drain hole D0.

The pipeline for residue discharge Ld may comprise a pipeline <Ldl> which bypasses the filter device F, or may comprise a pipeline <Ld2> which does not bypass the filter device F.

The antiseptic agent residue Re is the unused chlorine-based antiseptic agent As remaining in a tank Ts or the antiseptic agent pipeline Ls provided in the antiseptic agent supply device S, but includes at least one of a substance formed by thickening of at least part of the unused chlorine-based antiseptic agent As, a chlorine-based chemical ms which is a raw material of the chlorine-based antiseptic agent As, and a mixture Cs formed by mixing the chlorine-based chemical ms with water ws which is a solvent of the chlorine-based chemical ms. The mixture Cs includes an aqueous solution formed by dissolving the chlorine-based chemical ms into the water ws.

On a discharge side of the ballast pump Pm, a check valve Vcm is disposed to prevent reverse flow that can occur at the time of stopping, breakdown, or the like of the pump.

The ballast pump Pm comprises at least three operation modes (later-described first to third operation modes).

Operations and adjustments of instruments, devices, and the like such as the ballast pump Pm, the valves, the antiseptic agent supply device S, and the reducing agent supply device N are automatically performed in accordance with a control program preinstalled in a controller PLC or some other unshown controller, unless otherwise part or all of the operations and adjustments are manually performed. For example, opening/closing setting of the open-close valves to select at least one of the pipeline for ballast water intake Lf, the pipeline for ballast water discharge Lr, and the pipeline for residue discharge Ld (the pipeline for residue discharge <Ldl> and the pipeline for residue discharge <Ld2>), changing from a set pipeline to some other pipeline, and switching of the operation modes of the ballast pump Pm are automatically performed in accordance with the control program preinstalled in the controller PLC, unless otherwise part or all of the setting, changing, and switching operations are manually performed.

The controller PLC may be a monitor controller having a function of receiving, recording, and monitoring an output Sm of a measurement instrument provided in one or all of the pipeline for ballast water intake Lf, the pipeline for ballast water discharge Lr, and the pipeline for residue discharge Ld, generating a control signal Sa to control any other one of the instruments, the devices, and the like on the basis of the output Sm, and transmitting the control signal Sa toward the instrument, the device, or the like. The output Sm is, for example, an output F(i) of a flowmeter or an output Sn(j) of a TRO measurement device, and may be an output of an unshown water temperature gauge or some other measurement device. The control signal Sa is, for example, a control signal V(k) of a motor to open and close each valve or change the opening of each valve, or a control signal P(L) of a motor which drives pump devices including the ballast pump Pm, and may be a signal which controls operations of other instruments, devices, and the like.

When directly controlled on the basis of an output of the measurement device, the operations of the instruments, devices, and the like are not controlled by the controller PLC.

### 2) Pipeline

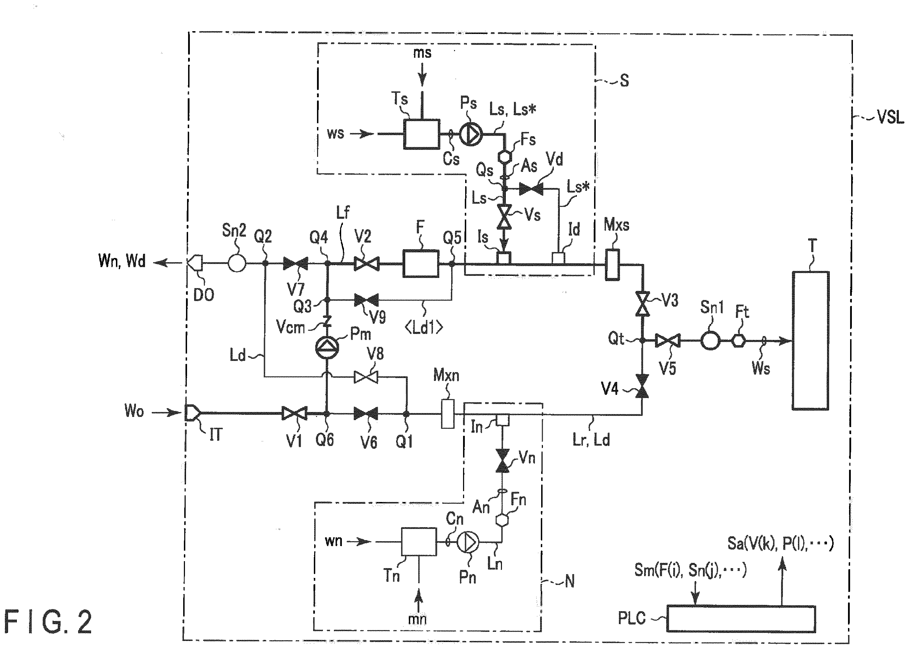

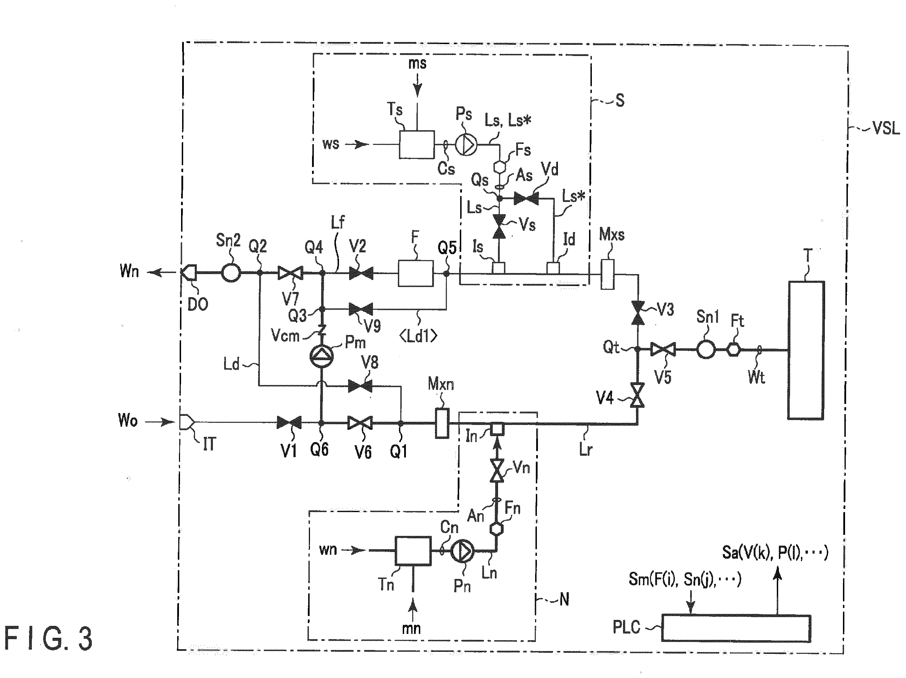

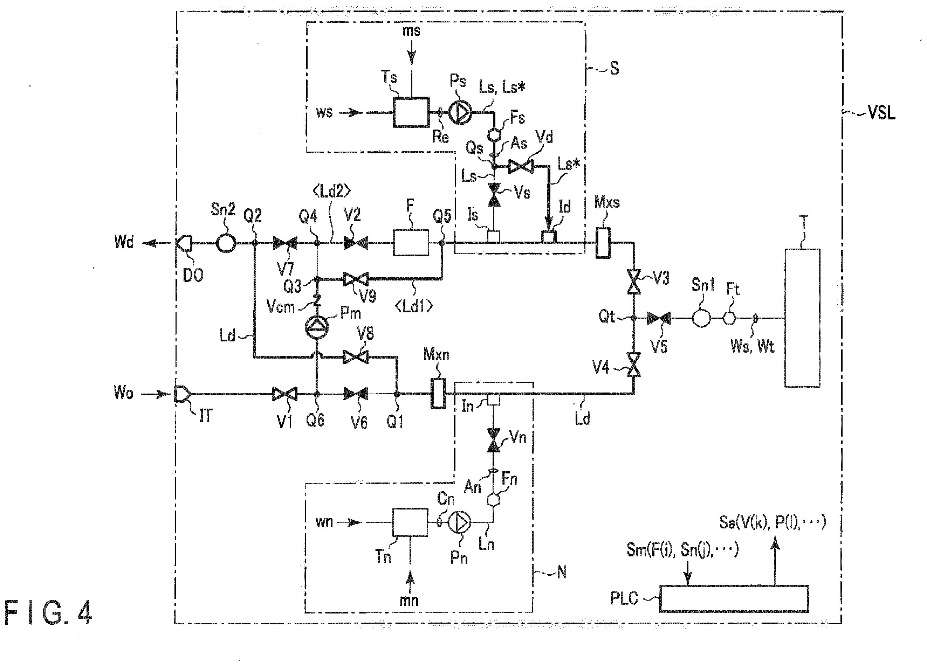

FIG. 2 is an explanatory diagram of the first operation mode of the ballast pump in the first embodiment of the vessel shown in FIG. 1. FIG. 3 is an explanatory diagram of the third operation mode of the ballast pump in the first embodiment of the vessel shown in FIG. 1. FIGS. 4 to 7 are explanatory diagrams of an A-type to a D-type of the second operation mode of the ballast pump in the first embodiment of the vessel shown in FIG. 1, respectively. FIGS. 2 to 7 are drawn in an open/close state of the valve corresponding to each operation mode.

Note that opening/closing setting of the open-close valves respectively corresponding to the pipeline for ballast water intake Lf, the pipeline for ballast water discharge Lr, and the pipeline for residue discharge Ld is as described in Table 1.

The pipeline for ballast water intake Lf is a pipeline drawn in thick print in FIG. 2, and comprises, downstream of the antiseptic agent injection hole Is and upstream of the ballast tank T, a mixer Mxs to accelerate mixing of the seawater Wo taken from the outside of the vessel with the chlorine-based antiseptic agent As. In a path of IT→V1→Q6→Pm→Vcm→Q3→Q4→V2→F→QS→Is→Mxs→V3→Qt→VS→Sn1 →Ft→T, the pipeline for ballast water intake Lf comprises the check valve Vcm and the valves (V1, V2, V3, and V5) in an open state.

The pipeline for ballast water discharge Lr is a pipeline drawn in thick print in FIG. 3, and comprises the check valve Vcm and the valves (V4, V5, V6, and V7) in an open state in a path of
T→Ft→Sn1→VS→Qt→V4→In→Mxn→Q1→V6→Q6→Pm→Vcm→Q3→Q4→V7 →Q2→Sn2→D0.

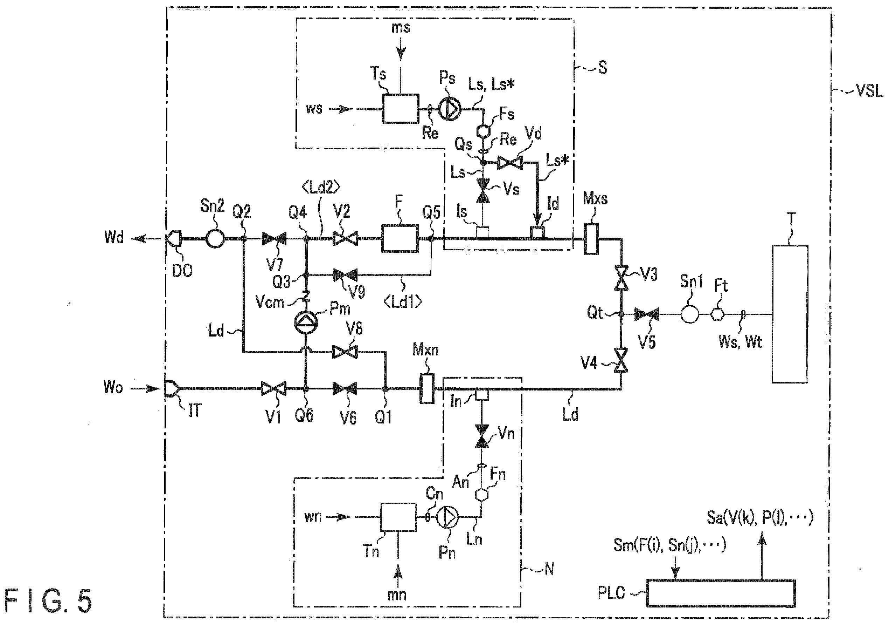

There are two kinds of pipelines for residue discharge Ld: one that passes through the filter device F, and one that does not. The pipeline for residue discharge <Ldl> that does not pass through the filter device F is a pipeline drawn in thick print in FIG. 4 to FIG. 6, and comprises the check valve Vcm and the valves (VI, V3, V4, V8, and V9) in an open state in a path of
IT→V1→Q6→Pm→Vcm→Q3→V9→QS→Id→Mxs→V3→Qt→V4→In→Mxn→Q 1→V8→Q2→Sn2→D0. The pipeline for residue discharge <Ld2> that passes through the filter device F is a pipeline drawn in thick print in FIG. 5 to FIG. 7, and comprises the check valve Vcm and the valves (VI, V2, V3, V4, and V8) in an open state in a path of
IT→V1→Q6→Pm→Vcm→Q3→Q4→V2→F→QS→Id→Mxs→V3→Qt→V4→In →Mxn→Q1→V8→Q2→Sn2→D0.

Herein, the position Q1 is located downstream of the mixer Mxn and upstream of the valve V8, and the position Q2 is located upstream of the valve V8 and downstream of the drain hole D0. The position Q4 is located between the valve V7 and the valve V2, and the position Q3 is located downstream of the ballast pump Pm and upstream of the position Q4. The position Q5 is located downstream of the filter device F and upstream of a residue injection hole Id. The valve V8 is located in the pipeline of Q1→Q2 that does not pass through the ballast pump Pm, and the valve V9 is located in the pipeline of Q3→Q5 that does not pass through the filter device F. The position Q6 is located downstream of the valve V1 and upstream of the ballast pump Pm, and located between the valve V1 and the valve V6. The position Qt is located downstream of the valve V3 and upstream of the valve V5 in the case of the pipeline for ballast water intake Lf, and located downstream of the valve V5 and upstream of the valve V4 in the case of the pipeline for ballast water discharge Lr.

Both the pipeline for residue discharge <Ldl> and the pipeline for residue discharge <Ld2> comprise the residue injection hole Id therein. The residue injection hole Id is an injection hole through which at least part of the antiseptic agent residue Re remaining in the pipeline Ls provided in the antiseptic agent supply device S is injected into the seawater Wo taken from the outside of the vessel and circulating in the pipeline for residue discharge Ld. The residue injection hole Id may be the same injection hole as the antiseptic agent injection hole Is, and may be located upstream or downstream of the antiseptic agent injection hole Is. A typical example of an injection hole is a discharge nozzle or an opening for discharge.

The pipeline for ballast water intake Lf comprises sensors (the TRO measurement instrument Sn1 and the flowmeter Ft). The pipeline for ballast water discharge Lr comprises sensors (the TRO measurement instruments Sn1 and Sn2, and the flowmeter Ft). The pipeline for residue discharge Ld comprises the TRO measurement instrument Sn2. However, these are illustrative only. Each of the pipelines may comprise other unshown instruments, devices, and the like.

Setting of each of the pipeline for ballast water intake Lf, the pipeline for ballast water discharge Lr, and the pipeline for residue discharge Ld (the pipeline for residue discharge <Ldl> and the pipeline for residue discharge <Ld2>), and changing from a set pipeline to some other pipeline are manually performed on the basis of opening/closing setting of the open-close valves shown in Table 1, or automatically performed by the controller PLC or some other unshown controller in accordance with the control program preinstalled in the controller PLC or some other unshown controller.

**[Table 1]**

| | | V1 | V2 | V3 | V4 | V5 | V6 | V7 | V8 | V9 |
|---|---|---|---|---|---|---|---|---|---|---|
| Lf | | Open | Open | Open | Close | Open | Close | Close | Close | Close |
| Lr | | Close | Close | Close | Open | Open | Open | Open | Close | Close |
| Ld | <Ld1> | Open | Close | Open | Open | Close | Close | Close | Open | Open |
| | <Ld2> | Open | Open | Open | Open | Close | Close | Close | Open | Close |

| | | | | | | | | | | |
|---|---|---|---|---|---|---|---|---|---|---|
| Open: Valve is open Close: Valve is closed | | | | | | | | | | |

Each pipeline may further comprise an unshown check valve other than the check valve Vcm, and manual value for convenience of maintenance.

### 3) Antiseptic Agent Supply Device S

### 3.1) Basic Configuration

As shown in FIG. 1, the antiseptic agent supply device S comprises the tank Ts into which the chlorine-based chemical ms and the water ws to be a solvent of the chlorine-based chemical ms are injected and in which the chlorine-based chemical ms and the water ws are stored, the antiseptic agent injection hole Is, and the antiseptic agent pipeline Ls which connects the tank Ts and the antiseptic agent injection hole Is. The antiseptic agent injection hole Is is an injection hole such as a discharge nozzle or an opening for discharge through which the chlorine-based antiseptic agent As is injected into the seawater Wo taken from the outside of the vessel and circulating in the pipeline for ballast water intake Lf. The antiseptic agent pipeline Ls is a pipeline of Ts→Ps→Fs→Vs→Is which comprises the pump P downstream of the tank Ts and upstream of the antiseptic agent injection hole Is, and the valve Vs downstream of the pump Ps and upstream of the antiseptic agent injection hole Is.

The antiseptic agent supply device S further comprises the tank Ts, the residue injection hole Id, and a residue pipeline Ls* which connects the tank Ts and the residue injection hole Id. The residue pipeline Ls* is a pipeline of Ts→Ps→Fs→Qs→Vd→Id which comprises the pump Ps downstream of the tank Ts and upstream of the residue injection hole Id, and the valve Vd downstream of the position Qs between the pump Ps and the valve Vs, and upstream of the residue injection hole Id. The residue pipeline Ls* is the same as the antiseptic agent pipeline Ls from the tank Ts to the position Qs, and branches from the position Qs and then connects to the residue injection hole Id.

Note that the antiseptic agent supply device S is designed and produced so that the distance between the position Qs and the antiseptic agent injection hole Is and the distance between the position Qs and the valve Vs are as small as possible and so that the amount of the antiseptic agent residue Re that can remain between the position Qs and the antiseptic agent injection hole Is is thus small. In addition, the tank Ts may comprise a stirrer Sts (not shown) to accelerate the mixing of the chlorine-based chemical ms with the water ws and the dissolution of the chlorine-based chemical ms into the water ws. A typical example of a stirrer is an impeller-type stirrer.

Switching between the antiseptic agent pipeline Ls and the residue pipeline Ls* is performed by switching of the opening and closing of the valves Vs and Vd. The valve Vs is opened and the valve Vd is closed when the antiseptic agent pipeline Ls is selected, whereas the valve Vs is closed and the valve Vd is opened when the residue pipeline Ls* is selected. Such switching of the valves Vs and Vd is automatically performed in accordance with the control program preinstalled in the controller PLC or some other unshown controller, unless otherwise part or all of the switching operation is manually performed.

While the antiseptic agent supply device S comprises the flowmeter Fs in the antiseptic agent pipeline Ls, the antiseptic agent supply device S may comprise an unshown TRO measurement instrument and other instruments, devices, and the like in the antiseptic agent pipeline Ls and the residue pipeline Ls*. The antiseptic agent supply device S may also comprise, on a discharge side of the pump Ps and upstream of the position Qs, a check valve Vcs (not shown) to prevent reverse flow that can occur in case of an abnormality such as stopping, breakdown, or the like of the pump Ps, and comprise, in the antiseptic agent pipeline Ls and the residue pipeline Ls*, an unshown check valve other than the check valve Vcs, and a manual valve for convenience of maintenance.

For example, when there is an insufficiency of pressure for the injection of the chlorine-based antiseptic agent As from the antiseptic agent injection hole Is into the seawater Wo taken from the outside of the vessel, the antiseptic agent pipeline Ls may comprise a pump for antiseptic agent injection Pis (not shown) downstream of the valve Vs and upstream of the antiseptic agent injection hole Is. When comprising the pump for antiseptic agent injection Pis (not shown), the antiseptic agent pipeline Ls may comprise a back pressure valve downstream of the pump for antiseptic agent injection Pis (on a discharge hole side) and upstream of the antiseptic agent injection hole Is. When there is an insufficiency of pressure for the injection of the antiseptic agent residue Re from the residue injection hole Id into the seawater Wo taken from the outside of the vessel, the residue pipeline Ls* may comprise a pump for residue injection Pid (not shown) downstream of the valve Vd and upstream of the residue injection hole Id. The residue pipeline Ls* may comprise a back pressure valve downstream of the pump for residue injection Pid (on the discharge hole side) and upstream of the residue injection hole Id.

Note that when the valve Vs is open and the valve Vd is closed, the pump for antiseptic agent injection Pis is switched into an operating state and the pump for residue injection Pid is switched into a non-operating state, and when the valve Vs is closed and the valve Vd is open, the pump for antiseptic agent injection Pis is switched into a non-operating state and the pump for residue injection Pid is switched into an operating state. Such switching of the operation state of the pumps is automatically performed in accordance with the control program preinstalled in the controller PLC or some other unshown controller, unless otherwise part or all of the switching operation is manually performed.

The antiseptic agent pipeline Ls may also comprise a return pipeline Lsr (not shown) which returns part or all of contents Cs from a position Qs0 (not shown) located downstream of the pump Ps to a position Qs1 (not shown) upstream of the pump Ps. The position Qs0 is a position located downstream of the pump Ps and upstream of the position Qs, or the position Qs. The position Qs1 is the position of the tank Ts, or a position located downstream of the tank Ts and upstream of the pump Ps. One example of the return pipeline Lsr is a pipeline configured so that the return pipeline Lsr branches from the antiseptic agent pipeline Ls at the position Qs0, and at least part of the contents Cs circulating in the antiseptic agent pipeline Ls always flow in the return pipeline Lsr. Another example of the return pipeline Lsr is a pipeline which comprises a solid-liquid separator typified by a liquid cyclone at the position Qs0 and which is configured so that the undissolved chlorine-based chemical ms circulates in the return pipeline Lsr together with the water ws. Each of the examples is configured so that all of the contents Cs return to the position Qs1 through the return pipeline Lsr by closing the valve Vs and the valve Vd, and the amount of the contents Cs returning to the position Qs1 is determined by adjusting the openings of the valve Vs and the valve Vd. When the antiseptic agent residue Re is removed from the antiseptic agent pipeline Ls, at least a portion of the return pipeline Lsr which is a portion of the antiseptic agent pipeline Ls constitutes a portion of the residue pipeline Ls*.

### 3.2) Chlorine-based Antiseptic Agent

A typical example of the chlorine-based chemical ms which is a raw material of the chlorine-based antiseptic agent As is a solid chlorine-based chemical. A typical example of the solid chlorine-based chemical is a trichloroisocyanuric acid, sodium dichloroisocyanurate and its hydrates, potassium dichloroisocyanurate, or the like. A typical example of the chlorine-based antiseptic agent As is an aqueous solution of sodium dichloroisocyanurate.

If the solubility of the solid chlorine-based chemical ms into water is low, there occur such problems as taking time for the solid chlorine-based chemical ms to be dissolved into the water ws, and failure in satisfactorily playing a role of the chlorine-based antiseptic agent As because the concentration of free available chlorine in an aqueous solution of the chlorine-based chemical does not increase. In such a case, a necessary amount of an aqueous solution An having a necessary concentration of free available chlorine is prepared as an antiseptic agent by use of a proper heater to raise the temperature of the water ws or the temperature of the contents Cs formed by mixing the solid chlorine-based chemical ms with the water ws, or by use of a proper stirrer to more strongly stir the contents Cs. Alternatively, an antiseptic agent supply device S comprising the return pipeline Lsr in the antiseptic agent pipeline Ls may be adopted, and the dissolution of the solid chlorine-based chemical ms into the water ws may be accelerated by increasing the number of times of strongly stirring the contents Cs with the pump Ps.

### 3.3) Water ws

The water ws may be seawater or non-seawater. However, the water ws is fresh water when the chlorine-based chemical ms and the antiseptic agent residue Re become generation sources of a chlorine-containing gas due to contact with seawater.

When fresh water is used as the water ws, the fresh water may be fresh water previously stored in an in-vessel exclusive storage tank from the outside of the vessel, or may be fresh water produced by use of a seawater desalter mounted in the vessel. The latter case is preferable because it is not necessary to mount the exclusive storage tank in the vessel as in the former case. Therefore, when the chlorine-based chemical ms is a trichloroisocyanuric acid, sodium dichloroisocyanurate and its hydrates, or potassium dichloroisocyanurate, the water ws is fresh water.

### 3.4) Antiseptic Treatment

When the pipeline for ballast water intake Lf and the antiseptic agent pipeline Ls are set, the contents Cs formed by mixing the chlorine-based chemical ms with the water ws are discharged from the tank Ts by the pump Ps, an aqueous solution of the chlorine-based antiseptic agent (chlorine-based antiseptic agent) As is produced by strongly stirring the contents Cs, the chlorine-based antiseptic agent As is injected, from the antiseptic agent injection hole Is through the antiseptic agent pipeline Ls, into the seawater Wo taken from the outside of the vessel and circulating in the pipeline for ballast water intake Lf, and the resultant is sterilized, as shown in FIG. 2.

### 3.5) Removal of Antiseptic Agent Residue

During the removal of the antiseptic agent residue Re, the chlorine-based chemical ms is not injected into the tank Ts.

### (A) Forced Removal

When the pipeline for residue discharge Ld and the residue pipeline Ls* are set, at least part of the antiseptic agent residue Re remaining in the antiseptic agent pipeline Ls including the tank Ts is removed by the pump Ps, by being injected, from the residue injection hole Id through the residue pipeline Ls*, into the seawater Wo taken from the outside of the vessel and circulating in the pipeline for residue discharge Ld.

The antiseptic agent residue Re that can remain between the position Qs and the residue injection hole Id is removed by being moved to the seawater Wo side from the residue injection hole Id side by negative pressure resulting from the circulation of the seawater Wo taken from the outside of the vessel in the pipeline for residue discharge Ld. In this case, this movement may be accelerated by temporarily opening the valve Vs as needed.

### (B) Employment of Water Washing Removal Effect

When the residue pipeline Ls* is set, the water ws is previously stored in the tank Ts or the water ws is being injected into the tank Ts, and the water ws is then discharged from the tank Ts and forced to circulate in the residue pipeline Ls* by the pump Ps, as shown in FIG. 4 to FIG. 7. Further, by use of the fact that the fluidity of the antiseptic agent residue Re improves owing to the force of the water ws and/or through the mixing of the antiseptic agent residue Re with the water ws or the dissolution of the antiseptic agent residue Re into the water ws, at least part of the antiseptic agent residue Re remaining in the antiseptic agent pipeline Ls including the tank Ts is removed by being injected from the residue injection hole Id into the seawater Wo taken from the outside of the vessel and circulating in the pipeline for residue discharge Ld.

To accelerate the dissolution of the antiseptic agent residue Re into the water ws, the temperature of the water ws or the temperature of the mixture of the antiseptic agent residue Re and the water ws may be raised within a heat resistance temperature range of the residue pipeline Ls* and to the extent that the generation of a chlorine-containing gas can be dealt with.

Note that in the case where the antiseptic agent pipeline Ls comprises the return pipeline Lsr, to remove at least part of the antiseptic agent residue Re remaining in the return pipeline Lsr, first, the valve Vs and the valve Vd are temporarily closed so that the water ws is returned to the position Qs1 from the position Qs0 or circulated between the position Qs0 and the position Qs1, whereby the fluidity of the antiseptic agent residue Re remaining in the return pipeline Lsr is improved by the force of the water ws and/or the mixing with the water ws or dissolution into the water ws. Thereafter, the valve Vs is closed, the valve Vd is opened, and then at least part of the antiseptic agent residue Re has only to be injected from the residue injection hole Id into the seawater Wo taken from the outside of the vessel.

### (C) Employment of Reaction Removal Effect

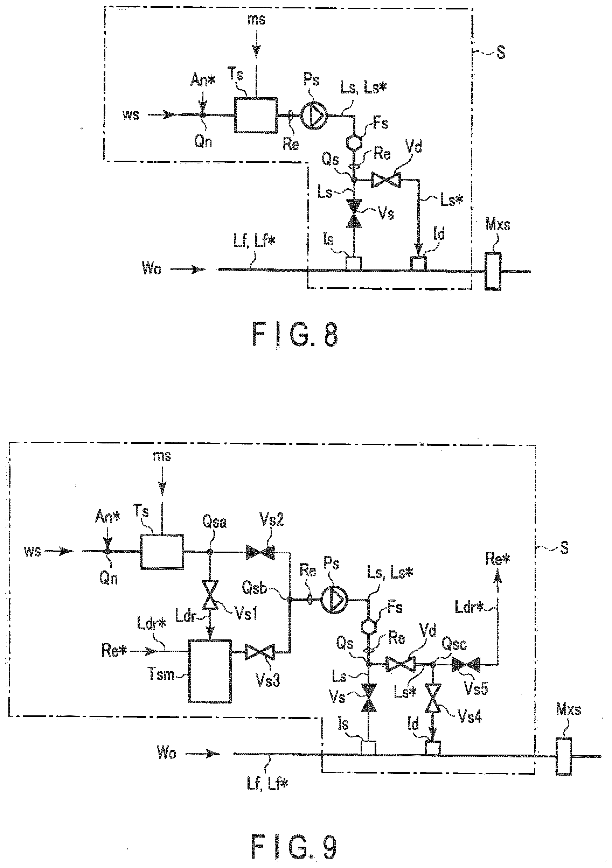

FIG. 8 is an explanatory diagram of a modification of the removal of the antiseptic agent residue. In the case described referring to FIG. 8, a reducing substance or an alkaline substance An* (which may be hereinafter referred to as a "removal reactive substance An*") is injected from a position Qn, and thereby injected into the residue pipeline Ls*, in the antiseptic agent supply device S shown in FIG. 4 to FIG. 7. Herein, the position Qn is at least one of a position located upstream of the tank Ts of the pipeline which supplies the water ws, a position located downstream of the tank Ts, a position of the tank Ts and a position along the residue pipeline Ls*. The position Qn is the position located upstream of the tank Ts of the pipeline which supplies the water ws as shown in FIG. 8 (c1), but may be the position of the tank Ts (c2) or the position (not shown) located downstream of the tank Ts or the position along the residue pipeline Ls* (c3), or may be more than one of the three positions, i.e., (c1) to (c3).

If a reaction is caused between the antiseptic agent residue Re remaining in the tank Ts and/or the other antiseptic agent pipeline Ls and the removal reactive substance An*, the amount of the antiseptic agent residue Re decreases together with the increase of a reaction product, and in some cases, the fluidity of the remaining antiseptic agent residue Re increases. At least part of the antiseptic agent residue Re which has been decreased in amount or increased in fluidity is removed by being injected, from the residue injection hole Id together with the reaction product substance, into the seawater Wo taken from the outside of the vessel and circulating in the pipeline for residue discharge Ld. In addition, when the antiseptic agent residue Re becomes a generation source of a chlorine-containing gas, free available chlorine in the antiseptic agent residue Re is reduced by a reducing substance, or pH of a system including the antiseptic agent residue Re is increased by an alkaline substance, so that an alkaline atmosphere is formed. Thus, a decomposition reaction of an antiseptic agent component having the free available chlorine in the antiseptic agent residue substance Re is accelerated, whereby the generation of the chlorine-containing gas is suppressed or prevented. When the chlorine-based chemical ms is sodium dichloroisocyanurate, pH of a system including the antiseptic agent residue Re is increased by an alkaline substance, so that an alkaline atmosphere is formed. Thus, an isocyanuric acid is transformed into a cyanuric acid, a reaction producing a hypochlorous acid which is an antiseptic agent component having free available chlorine from sodium dichloroisocyanurate and water progresses, and the produced hypochlorous acid produces a hydrochloric acid and oxygen by a decomposition reaction, whereby available chlorine is lost, and the generation of the chlorine-containing gas is suppressed or prevented. A hydroxide (salt) of an alkaline metal or an alkaline earth metal or a carbonate (salt) of an alkaline metal or an alkaline earth metal is used as the alkaline substance. Specifically, sodium hydrate or sodium carbonate is used.

To cause a reaction by bringing the removal reactive substance into contact with the residue of the chlorine-based antiseptic agent, a removal reactive substance injection hole through which the removal reactive substance An* is injected may be provided at a position on an upstream side of the antiseptic agent injection hole Is of the antiseptic agent pipeline Ls or at a position of the antiseptic agent injection hole Is. A reaction is caused between the injected removal reactive substance and at least part of the residue of the chlorine-based antiseptic agent remaining in the antiseptic agent pipeline and unused for the sterilization of the ballast water, the amount of the residue of the chlorine-based antiseptic agent is decreased, and the fluidity of the residue of the chlorine-based antiseptic agent is increased, so that at least part of the residue of the chlorine-based antiseptic agent can be removed to the outside of the antiseptic agent pipeline.

Moreover, even when there is concern that a chlorine-containing gas might be generated from the residue of the chlorine-based antiseptic agent and an in-vessel work environment might deteriorate due to this chlorine-containing gas, the generation of the chlorine-containing gas can be suppressed if the removal reactive substance is supplied from the removal reactive substance injection hole, and free available chlorine in the residue of the chlorine-based antiseptic agent is reduced by bringing a reducing substance into contact with the residue of the chlorine-based antiseptic agent, or if the residue of the chlorine-based antiseptic agent is increased in pH and alkalified by bringing an alkaline substance into contact with the residue of the chlorine-based antiseptic agent to accelerate a decomposition reaction of an antiseptic agent component having the free available chlorine in the residue of the chlorine-based antiseptic agent.

The antiseptic agent residue Re may be removed by the combination of the use of the aforementioned reaction removal effect of using the removal reactive substance An*, and the use of the aforementioned water washing removal effect in (B). For example, when the removal reactive substance An* is an aqueous solution, the antiseptic agent residue Re can be removed by use of both of the effects if the aqueous solution of the removal reactive substance An* is forced by the pump Ps to circulate in the residue pipeline Ls*. Moreover, it is possible to achieve the removal by use of the water washing removal effect following the removal by use of the reaction removal effect if after the injection of the removal reactive substance An* into the residue pipeline Ls*, the water ws which does not contain the removal reactive substance An* is kept injected into the tank Ts, and at the same time, discharged from the tank Ts and forced to circulate in the residue pipeline Ls* by the pump Ps.

### (D) Removal Reactive Substance An*

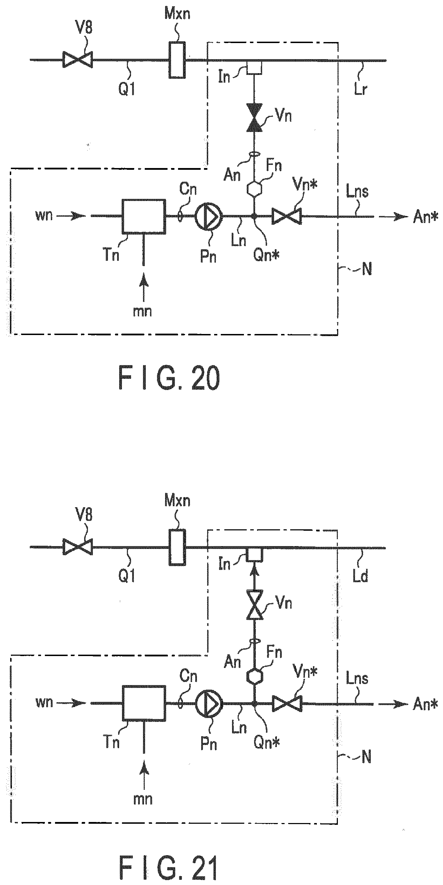

When the removal reactive substance An* is a reducing substance, the removal reactive substance An* may be the same substance as the later-described reducing agent An, or may be a different substance. Alternatively, the reducing agent An taken from a tank Tn provided in the reducing agent supply device N may be used as the removal reactive substance An* as it is or after diluted if necessary (see FIG. 20 and FIG. 21).

### (E) Heat Generation Measures during Reaction Removal

When there is concern that an in-vessel work environment might deteriorate due to heat generation caused by a reaction between the antiseptic agent residue Re and the removal reactive substance An*, real damage to the in-vessel environment caused by the heat generation is suppressed or prevented by at least one of (e1) to (e3) below.
(e1) By lowering the concentration of the removal reactive substance An*, the amount of heat generation resulting from the reaction between the antiseptic agent residue Re and the removal reactive substance An* is suppressed.
   For example, (e11) the amount of the water ws to be injected into the tank Ts is increased as compared to the case where the chlorine-based antiseptic agent As is produced, so that the concentration of the removal reactive substance An* in the tank Ts is suppressed to a low concentration;
(e12) An aqueous solution of the removal reactive substance An* is prepared, and injected into the tank Ts so that the concentration of the removal reactive substance An* in the tank Ts is suppressed to a low concentration;
(e13) An aqueous solution of the removal reactive substance An* is prepared, divided into small amounts which are then injected into the water ws more than once. Thereby, the water ws containing the removal reactive substance An* and the water ws which does not contain the removal reactive substance An* are alternatively circulated in the residue pipeline Ls*. Accordingly, measures are taken such that heat generation resulting from the reaction between the antiseptic agent residue Re and the removal reactive substance An* is suppressed by the water ws which does not contain the removal reactive substance An*.
(e2) After the removal reactive substance An* is injected into the residue pipeline Ls*, the water ws which does not contain the removal reactive substance An* is injected into the residue pipeline Ls*, and cooled. For example, after the removal reactive substance An* is injected into the residue pipeline Ls*, the water ws which does not contain the removal reactive substance An* is injected into the tank Ts, and at least part of the contents in the tank Ts are discharged from the tank Ts and circulated in the residue pipeline Ls* by the pump Ps, whereby the heat generation is suppressed by a cooling action of the water ws.
(e3) A tank Tsm different from the tank Ts is disposed in the residue pipeline Ls* so that heat generation is caused by the reaction between the antiseptic agent residue Re and the removal reactive substance An* mostly in the tank Tsm.

FIG. 9 is an explanatory diagram of another modification of the antiseptic agent supply device S shown in FIG. 8. The measures in (e3) above are described by way of example with reference to FIG. 9. In this modification, the antiseptic agent pipeline Ls is a pipeline of Ts→Qsa→Vs2→Qsb→Ps→Fs→Qs→Vs→Is, and the residue pipeline Ls* is a pipeline of
Ts→Qsa→Vs2→Qsb→Ps→Fs→Qs→Vd→Qsc→Vs4→Is. The antiseptic agent pipeline Ls and the residue pipeline Ls* are basically not different from the antiseptic agent pipeline Ls and the residue pipeline Ls* in FIG. 8. In this modification, a residue pipeline Ldr which passes through the tank Tsm is further provided. The residue pipeline Ldr is a pipeline of
Ts→Qsa→Vs1→Tsm→Vs3→Qsb→Ps→Fs→Qs→Vd→Qsc→Vs4→Id. The residue pipeline Ldr may be a residue pipeline Ldr* comprising a return path (Qsc→Vs5→Tsm) which branches from the position Qsc and returns to the tank Tsm.

Herein, the position Qsa is a branch point into a pipeline directed to the pump Ps from the tank Ts without passing through the tank Tsm and a pipeline directed to the tank Tsm from the tank Ts. The position Qsb is a connection point located downstream of the position Qsa and upstream of the pump Ps, between a pipeline directed to the pump Ps from the position Qsa without passing through the tank Tsm and a pipeline directed to the pump Ps from the tank Tsm. The valve Vs1 is an open-close valve located downstream of the position Qsa and upstream of the tank Tsm. The valve Vs2 is an open-close valve located downstream of the position Qsa and upstream of the position Qsb. The valve Vs3 is an open-close valve located downstream of the tank Tsm and upstream of the position Qsb.

The position Qsc is a position located downstream of the valve Vd and upstream of the residue injection hole Id. The valve Vs4 is an open-close valve located downstream of the position Qsc and upstream of the residue injection hole Id. The valve Vs5 is an open-close valve located downstream of the position Qsc and provided in the return path (Qsc→Vs5→Tsm) of the residue pipeline Ldr* branching from the position Qsc.

The antiseptic agent pipeline Ls is set by opening the valves Vs2 and Vs and closing the valves Vs1, Vs3, and Vd. The residue pipeline Ls* is set by opening the valves Vs2, Vd, and Vs4 and closing the valves Vs1, Vs3, Vs, and Vs5. The residue pipeline Ldr is set by opening the valves Vs1, Vs3, Vd, and Vs4 and closing the valves Vs2, Vs, and Vs5. The residue pipeline Ldr* is set by opening the valves Vs1, Vs3, Vd, and Vs5 and closing the valves Vs2, Vs, and Vs4.

Switching of the antiseptic agent pipeline Ls, the residue pipeline Ls*, the residue pipeline Ldr, and the residue pipeline Ldr* is automatically performed in accordance with the control program preinstalled in the controller PLC or some other unshown controller, unless otherwise part or all of the switching operation is manually performed.

For example, automatic control is performed so that at least part of the antiseptic agent residue Re is stored in the tank Tsm along the residue pipeline Ldr* together with the water ws, circulated along the return path (Qsc→Vs5→Tsm) a predetermined number of times and for a predetermined time before switched to the residue pipeline Ldr, and is thus injected from the residue injection hole Id into the seawater Wo taken from the outside of the vessel and circulating in the pipeline for residue discharge Ld. Alternatively, automatic control is performed so that at least part of the antiseptic agent residue Re is first circulated along the residue pipeline Ls* together with the water ws, and injected from the residue injection hole Id into the seawater Wo taken from the outside of the vessel before switched to the residue pipeline Ldr* from the residue pipeline Ls*. Then, the water ws is circulated. Thereby, at least part of the antiseptic agent residue Re which has not been fully removed is circulated along the residue pipeline Ldr* a predetermined number of times and for a predetermined time before switched to the residue pipeline Ldr, and is thus injected from the residue injection hole Id into the seawater Wo taken from the outside of the vessel. Which of the automatic control is performed or what kind of other automatic control is performed depends on the contents of a control program.

When the residue pipelines Ldr and Ldr* are set, the contents of the tank Ts are moved from the tank Ts to the tank Tsm by a pump (not shown) located downstream of the position Qsa and upstream of the tank Tsm, or by a gravitational effect. When the valve Vs3 is open, this movement may be achieved by negative pressure resulting from the force of the pump Ps.

The tank Tsm has a structure (e.g., a deep-bottom structure) in which the antiseptic agent residue Re is retained at least temporarily or for a short time together with the water ws containing the removal reactive substance An*. Thus, heat generation caused by a reaction between the antiseptic agent residue Re and the removal reactive substance An* more easily progresses in the tank Tsm. In addition, at least part of the contents in the tank Ts are discharged by the pump Ps, and moreover, at least part of the contents in the tank Tsm are also discharged, forced to circulate in the residue pipeline Ldr, and removed by being injected, together with at least part of the antiseptic agent residue Re remaining downstream of the tank Tsm, from the residue injection hole Id into the seawater Wo taken from the outside of the vessel and circulating in the pipeline for residue discharge Ld. Thus, a place where the heat generation occurs is mostly the tank Tsm. Therefore, measures against the heat generation have only to be taken mostly for the tank Tsm.

Note that after the removal reactive substance An* is injected into the residue pipeline Ls*, the water ws which does not contain the removal reactive substance An* is kept injected into the tank Ts, and at the same time, the water ws is discharged from the tank Ts and forced to circulate in the residue pipeline Ls* by the pump Ps. Accordingly, as in (e2) above, the heat generation can be suppressed by the cooling action of the water ws. In addition, the antiseptic agent residue Re can be removed by use of the water washing removal effect, which also makes it possible to suppress the heat generation, and is therefore more preferable.

When a reaction with the removal reactive substance An* needs to be accelerated in the case of a reaction between the antiseptic agent residue Re and the removal reactive substance An*, and when the acceleration of this reaction does not cause trouble to heat generation measures and adverse effects of heat generation can be suppressed, the tank Tsm may comprise a stirrer (not shown) to stir its contents.

### (F) Removal from Return Pipeline Lsr

In the case where the antiseptic agent pipeline Ls comprises the return pipeline Lsr, to remove at least part of the antiseptic agent residue Re remaining in the return pipeline Lsr, (f1): at first the valve Vs and the valve Vd are temporarily closed, so that the water ws is returned to the position Qs1 from the position Qs0 or circulated between the position Qs0 and the position Qs1, whereby the fluidity of the antiseptic agent residue Re remaining in the return pipeline Lsr is improved by the force of the water ws and/or through the mixing of the antiseptic agent residue Re with the water ws or the dissolution of the antiseptic agent residue Re into the water ws. Thereafter, the valve Vs is closed, the valve Vd is opened, and then at least part of the antiseptic agent residue Re has only to be injected from the residue injection hole Id into the seawater Wo taken from the outside of the vessel. Alternatively, (f2): at first the valve Vs and the valve Vd are temporarily closed, so that the water ws containing the removal reactive substance An* is returned to the position Qs1 from the position Qs0 or circulated between the position Qs0 and the position Qs1. In this process, the fluidity of the antiseptic agent residue Re remaining in the return pipeline Lsr is improved by causing a reaction between free available chlorine in the antiseptic agent residue Re and the removal reactive substance An*, or/and by the force of the water ws and/or through the mixing of the antiseptic agent residue Re with the water ws or the dissolution of the antiseptic agent residue Re into the water ws. Thereafter, the valve Vs is closed, the valve Vd is opened, and then a reaction product has only to be injected from the residue injection hole Id into the seawater Wo taken from the outside of the vessel, together with at least part of the antiseptic agent residue Re. 3.6) Use of Both Antiseptic Agent Injection Hole and Residue Injection Hole

As shown in FIG. 1 to FIG. 9, if the antiseptic agent injection hole Is and the residue injection hole Id are separated, the structure of a portion of the antiseptic agent pipeline Ls between the position Qs and the antiseptic agent injection hole Is is complicated, which may lead to a problem wherein the antiseptic agent residue Re remaining in this part can not be removed enough. Moreover, not only when the pump for residue injection Pid (not shown) is provided downstream of the valve Vd of the residue pipeline Ls* and upstream of the residue injection hole Id, but also when the back pressure valve is provided downstream of the pump for residue injection Pid (on the discharge hole side) and upstream of the residue injection hole Id, the structure of the residue pipeline Ls* is complicated. In contrast, if the antiseptic agent injection hole Is doubles as the residue injection hole Id (an antiseptic agent injection hole/residue injection hole Is/Id), the antiseptic agent pipeline Ls becomes a simple pipeline (Ts→Ps→Fs→Vs→Is/Id) also serving as the residue pipeline Ls*, the valve Vd becomes unnecessary, and the internal structure of the antiseptic agent supply device S becomes simple on the whole. Therefore, the occurrence of the aforementioned problem can be suppressed or prevented.

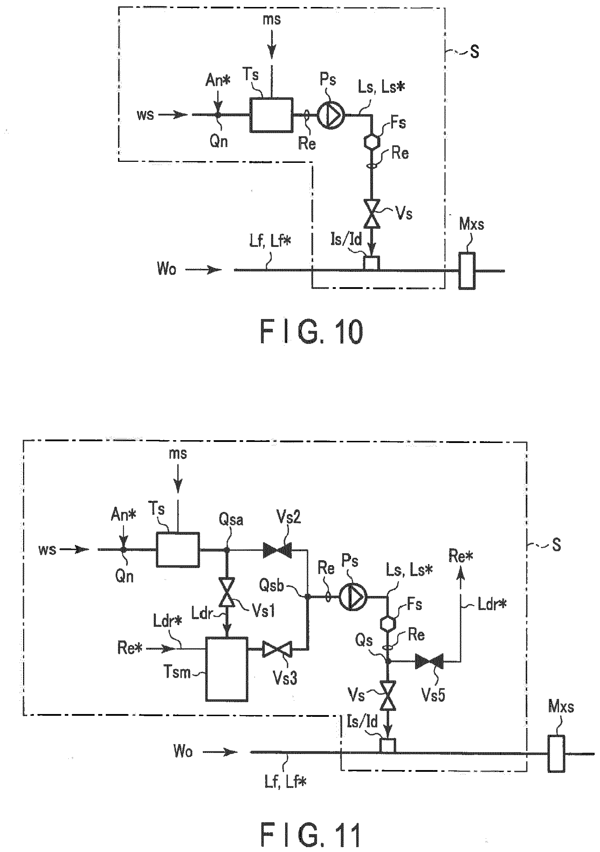

For example, by opening the valve Vs, the antiseptic agent supply device S shown in FIG. 10 can inject, by the pump Ps, the chlorine-based antiseptic agent As from the antiseptic agent injection hole/residue injection hole Is/Id into the seawater Wo taken from the outside of the vessel and circulating in the pipeline for ballast water intake Lf, and therefore the antiseptic agent supply device S shown in FIG. 10 bears comparison with the antiseptic agent supply device S shown in FIG. 8. The antiseptic agent supply device S shown in FIG. 10 can rather have a simpler internal structure, and inject at least part of more antiseptic agent residue Re containing at least part of the antiseptic agent residue Re remaining between the position Qs and the antiseptic agent injection hole Is into the seawater Wo taken from the outside of the vessel and circulating in the pipeline for residue discharge Ld when the antiseptic agent injection hole Is and the residue injection hole Id are separated. Therefore, the antiseptic agent supply device S shown in FIG. 10 is preferable to the antiseptic agent supply device S shown in FIG. 8.

When the antiseptic agent injection hole doubles as the residue injection hole, and the antiseptic agent pipeline doubles as the residue pipeline, a removal reactive substance injection hole through which a removal reactive substance is injected may be provided at a position on an upstream side of the antiseptic agent injection hole of the antiseptic agent pipeline or at a position of the antiseptic agent injection hole, to bring the removal reactive substance into contact with the residue of the chlorine-based antiseptic agent and cause a reaction. A case is described in which the removal reactive substance An* is injected into the antiseptic agent pipeline Ls by being injected from the position Qn in the antiseptic agent supply device S shown in FIG. 10. Herein, the position Qn is at least one of a position located upstream of the tank Ts of the pipeline for the supply of the water ws, a position located downstream of the tank Ts, a position of the tank Ts, and a position along the antiseptic agent pipeline Ls. The position Qn where the removal reactive substance An* is injected indicates (c1): a position located on an upstream side of the tank Ts of the pipeline for the supply of the water ws, but it may be (c2): the position of the tank Ts, (c3): a position located downstream of the tank Ts or the position along the antiseptic agent pipeline Ls (a position on an upstream side of the antiseptic agent injection hole of the antiseptic agent pipeline), or (c4): the position of the antiseptic agent injection hole Is. The position Qn may otherwise be more than one of the four positions, i.e., (c1) to (c4).

A reaction is caused between the injected removal reactive substance and at least part of the residue of the chlorine-based antiseptic agent remaining in the antiseptic agent pipeline and unused for the sterilization of the ballast water, the amount of the residue of the chlorine-based antiseptic agent is decreased, and the fluidity of the residue of the chlorine-based antiseptic agent is increased, so that at least part of the residue of the chlorine-based antiseptic agent can be removed to the outside of the antiseptic agent pipeline. Moreover, even in a case that a chlorine-containing gas is generated from the residue of the chlorine-based antiseptic agent and an in-vessel work environment is deteriorated due to this chlorine-containing gas, the generation of the chlorine-containing gas can be suppressed through acceleration of a decomposition reaction of an antiseptic agent component having the free available chlorine in the residue of the chlorine-based antiseptic agent by supplying the removal reactive substance from the removal reactive substance injection hole to bringing a reducing substance into contact with the residue of the chlorine-based antiseptic agent and to reduce free available chlorine in the residue of the chlorine-based antiseptic agent or by bringing an alkaline substance into contact with the residue of the chlorine-based antiseptic agent to increase pH of the residue of the chlorine-based antiseptic agent and to alkalify the residue of the chlorine-based antiseptic agent.

The antiseptic agent injection hole/residue injection hole Is/Id can be employed as shown in FIG. 11 in the antiseptic agent supply device S shown in FIG. 9 as well. The antiseptic agent supply device S shown in FIG. 11 is the same as the antiseptic agent supply device shown in FIG. 9 except for the employment of the antiseptic agent injection hole/residue injection hole Is/Id and modifications that are required accordingly. Specifically, the antiseptic agent supply device S shown in FIG. 11 is the same as the antiseptic agent supply device shown in FIG. 9 except for the followings. Owing to the employment of the antiseptic agent injection hole/residue injection hole Is/Id, the valve Vd and the valve Vs4 become unnecessary, the position Qs and the position Qsc can be equated, the antiseptic agent pipeline Ls can be used as the residue pipeline Ls*
(Ts→Qsa→Vs2→Qsb→Ps→Fs→Qs→Vs→Is/Id), the residue pipeline Ldr becomes a pipeline of
Ts→Qsa→Vs1→Tsm→Vs3→Qsb→Ps→Fs→Qs→Vs→Is/Id, and the residue pipeline Ldr* corresponds to a residue pipeline Ldr* involving a circulation path (Qs→Vs5→Tsm) which branches from the position Qs and returns to the tank Tsm. 3.7) Ballast Water Treatment Device comprising Tank Tsm, and Ballast Water Treatment Method

The configuration of the ballast water treatment device comprising the antiseptic agent supply device S having the tank Tsm shown in each of FIG. 9 and FIG. 11, and a ballast water treatment method in which a residue removal step has a step of storing a residue of a chlorine-based antiseptic agent in a tank are represented as below.
i) A ballast water treatment device which is mounted in a vessel and which sterilizes ballast water to be stored in a ballast tank provided in the vessel, is characterized by comprising: an antiseptic agent injection hole through which a chlorine-based antiseptic agent is injected into the ballast water to be stored in the ballast tank; an antiseptic agent pipeline which circulates the chlorine-based antiseptic agent toward the antiseptic agent injection hole; a tank to store at least part of a residue of the chlorine-based antiseptic agent remaining in the antiseptic agent pipeline and unused for the sterilization of the ballast water; and a residue pipeline which circulates at least part of contents stored in the tank.
ii) The ballast water treatment device described in i) is characterized in that at least a portion of the antiseptic agent pipeline constitutes at least a portion of the residue pipeline.
iii) The ballast water treatment device described in i) or ii) is characterized in that the residue pipeline is a pipeline which circulates at least part of the contents discharged from the tank toward the antiseptic agent injection hole.
iv) The ballast water treatment device described in any one of i) to iii) is characterized in that the antiseptic agent pipeline comprises a return pipeline which returns at least part of the contents circulating in the antiseptic agent pipeline, from a downstream side of the antiseptic agent pipeline to an upstream side thereof.
v) The ballast water treatment device described in any one of i) to iv) is characterized in that the residue pipeline comprises a return path which returns at least part of the residue of the chlorine-based antiseptic agent discharged from the tank, to the tank.
vi) The ballast water treatment device described in any one of i) to iii) is characterized in that the antiseptic agent pipeline comprises a return pipeline which returns at least part of the contents circulating in the antiseptic agent pipeline, from a downstream side of the antiseptic agent pipeline to an upstream side thereof, the residue pipeline comprises a return path which returns at least part of the residue of the chlorine-based antiseptic agent discharged from the tank, to the tank, and at least a portion of the return pipeline constitutes a portion of the return path.
vii) The ballast water treatment device described in any one of i) to vi) characterized in that the tank is a tank which retains at least part of the residue of the chlorine-based antiseptic agent together with water containing a removal reactive substance at least temporarily or for a short time, and the removal reactive substance is a reducing substance or an alkaline substance.
viii) A ballast water treatment method which sterilizes, in a vessel, ballast water to be stored in a ballast tank provided in the vessel, the ballast water treatment method characterized by comprising: an antiseptic agent preparation step of preparing a chlorine-based antiseptic agent to sterilize the ballast water to be stored in the ballast tank; a sterilization treatment step of injecting the chlorine-based antiseptic agent into the ballast water via a pipeline, and sterilizing the ballast water; and a residue removal step of removing, from the pipeline, at least part of a residue of the chlorine-based antiseptic agent remaining in the pipeline and unused for the sterilization of the ballast water, wherein the residue removal step includes a first step of storing at least part of the residue of the chlorine-based antiseptic agent in a tank, and a second step of discharging, from the tank, at least part of the residue of the chlorine-based antiseptic agent stored in the tank.
ix) The ballast water treatment method described in viii) is characterized in that the second step is a step of discharging at least part of the residue of the chlorine-based antiseptic agent stored in the tank into a pipe which circulates the ballast water.
x) The ballast water treatment method described in viii) or ix) is characterized by further comprising a step of causing at least part of the residue of the chlorine-based antiseptic agent stored in the tank to be returned to the tank before being moved from the tank and removed from the pipeline.
xi) The ballast water treatment method described in any one of vii) to x) is characterized by further comprising a step of causing a reaction between at least part of the residue of the chlorine-based antiseptic agent and a removal reactive substance in the tank after the first step is executed and before the second step is executed, wherein the removal reactive substance is a reducing substance or an alkaline substance.
xii) The ballast water treatment method described in any one of viii) to xi) is characterized in that the residue removal step includes a step of supplying water and/or a removal reactive substance to the pipeline, and the removal reactive substance is a reducing substance or an alkaline substance.

The return pipeline included in the antiseptic agent pipeline of the ballast water treatment device of iv) is a return pipeline which returns at least part of the contents circulating in the antiseptic agent pipeline, from a downstream side of the antiseptic agent pipeline to an upstream side thereof, and is configured as below by way of example.

The antiseptic agent pipeline Ls comprises a return pipeline Lsr (not shown) which returns part or all of contents Cs from a position Qs0 (not shown) located downstream of the pump Ps to a position Qs1 (not shown) upstream of the pump Ps. The position Qs0 is a position located downstream of the pump Ps, upstream of the position Qs, or the position Qs. The position Qs1 is the position of the tank Ts, or a position located downstream of the tank Ts or upstream of the pump Ps. One example of the return pipeline Lsr is a pipeline configured so that the return pipeline Lsr branches from the antiseptic agent pipeline Ls at the position Qs0, and at least part of the contents Cs circulating in the antiseptic agent pipeline Ls always flow in the return pipeline Lsr. Another example of the return pipeline Lsr is a pipeline which comprises a solid-liquid separator typified by a liquid cyclone at the position Qs0, and which is configured so that the undissolved chlorine-based chemical ms circulates in the return pipeline Lsr together with the water ws. Each of the examples is configured so that all of the contents Cs return to the position Qs1 through the return pipeline Lsr by closing the valve Vs and the valve Vd, and the amount of the contents Cs returning to the position Qs1 is determined by adjusting the openings of the valve Vs and the valve Vd. When the antiseptic agent residue Re is removed from the antiseptic agent pipeline Ls, at least a portion of the return pipeline Lsr which is a portion of the antiseptic agent pipeline Ls constitutes a portion of the residue pipeline Ls*.

### 4) Reducing Agent Supply Device N

### 4.1) Basic Configuration

As shown in FIG. 1, the reducing agent supply device N comprises the tank Tn into which a raw material mn of a reducing agent and water wn to be a solvent thereof are injected and in which the raw material mn and the water wn are stored, the reducing agent injection hole In, and a reducing agent pipeline Ln which connects the tank Tn and the reducing agent injection hole In. The reducing agent injection hole In is an injection hole through which the reducing agent An is injected into the ballast water Wt taken from the ballast tank T and circulating in the pipeline for ballast water discharge Lr. The reducing agent pipeline Ln is a pipeline of Tn→Pn→Fn→Vn→In which comprises a pump Pn downstream of the tank Tn and upstream of the reducing agent injection hole In, and a valve Vn downstream of the pump Pn and upstream of the reducing agent injection hole In.

Switching of the opening and closing of the valve Vn is automatically performed in accordance with the control program preinstalled in the controller PLC or some other unshown controller, unless otherwise part or all of the switching operation is manually performed.

While the reducing agent supply device N comprises the flowmeter Fn in the reducing agent pipeline Ln, the reducing agent supply device N may comprise an unshown TRO measurement instrument and other instruments, devices, and the like in the reducing agent pipeline Ln. The reducing agent supply device N may also comprise, on a discharge side of the pump Pn and upstream of the valve Vn, a check valve Vcn (not shown) to prevent reverse flow that can occur in case of an abnormality such as stopping, breakdown, or the like of the pump Pn, and comprise, in the reducing agent pipeline Ln, an unshown check valve other than the check valve Vcn, and a manual value for convenience of maintenance.

### 4.2) Reducing Agent

A typical example of the raw material mn of the reducing agent An is sodium sulfite or its hydrates, sodium subsulfite or its hydrates, or their aqueous solutions.

When the raw material mn is solid and the solubility of the raw material mn into water is low, a necessary amount of the aqueous solution An having a necessary concentration of a reducing substance is prepared as a reducing agent by use of a proper heater to raise the temperature of the water wn or the temperature of a mixture Cn formed by mixing the raw material mn with the water wn, or by use of a proper stirrer to more strongly stir the mixture Cn.

The raw material mn is solid, the solubility of the raw material mn into water is high, and a necessary amount of the aqueous solution An can be secured in the tank Tn by storing the raw material mn and the water wn in the tank Tn and only lightly stirring them, in which case strong stirring of the mixture Cn by the pump Pn is not indispensable for the preparation of the reducing agent An. Moreover, when an aqueous solution (the reducing agent An) of the raw material mn can be prepared, it is not necessary to inject the raw material mn and the water wn into the tank Tn, strong stirring of the mixture Cn by the pump Pn is not indispensable either, and this aqueous solution has only to be injected into the tank Tn.

### 4.3) Reduction Treatment

When the pipeline for ballast water discharge Lr is set and the valve Vn is open, the aqueous solution (reducing agent) An of the raw material mn is injected by the pump Pn, from the reducing agent injection hole In through the reducing agent pipeline Ln, into the ballast water Wt taken from the ballast tank T and circulating in the pipeline for ballast water discharge Lr. Free available chlorine remaining in the ballast water Wt and derived from a chlorine-based antiseptic agent is reduced, and detoxified to a level that permits overboard discharge.

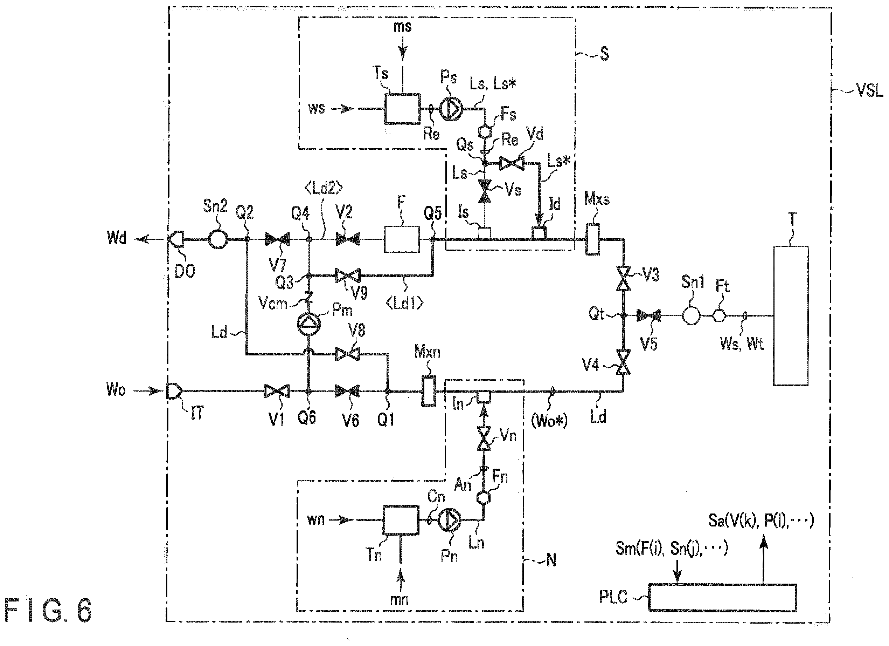

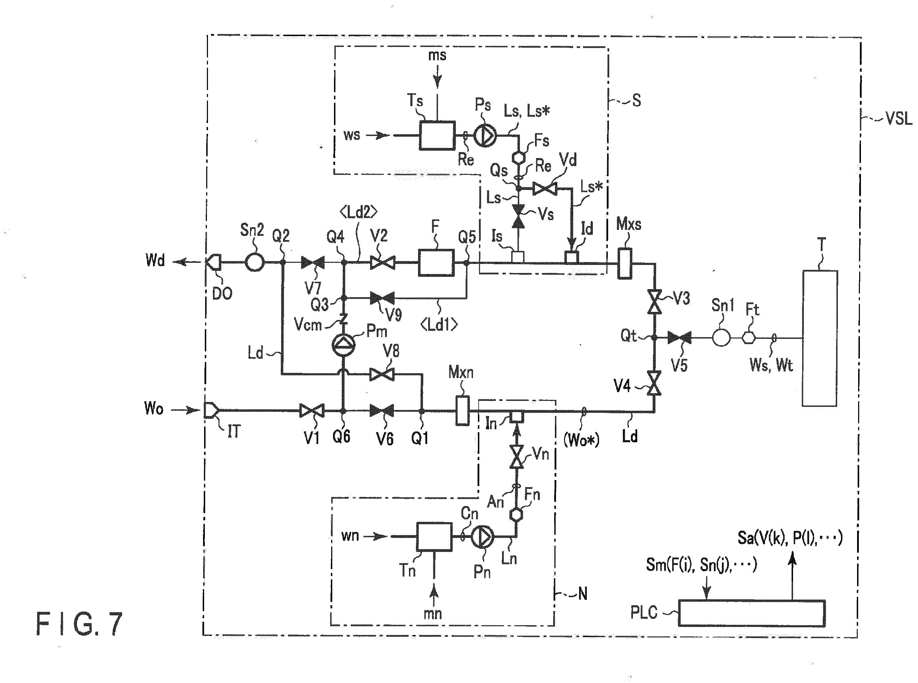

When the pipeline for ballast water discharge Lr is not set (e.g., when the pipeline for ballast water intake Lf and the pipeline for residue discharge Ld are not set), the valve Vn is closed, and the pump Pn is stopped at normal times. However, in the case of the C-type shown in FIG. 6 or the D-type shown in FIG. 7 of the second operation mode of the later-described ballast pump Pm, the reducing agent An is injected into seawater (seawater Wo* into which at least part of the antiseptic agent residue Re has been injected from the residue injection hole Id) circulating in the pipeline for residue discharge Ld. Therefore, the valve Vn is opened, and the pump Pn is activated.

### 4.4) Preparation of Removal Reactive Substance An*

When the removal reactive substance An* used for the reaction removal of the antiseptic agent residue Re is prepared from the reducing agent An, at least part of contents Cn in the tank Tn are discharged from the tank Tn by the pump Pn, the reducing agent An is then taken out through a branch pipeline Lns branching from the reducing agent pipeline Ln at a position Qn* located downstream of the pump and upstream of the reducing agent injection hole In, and the taken reducing agent An is used as the removal reactive substance An* as it is or after diluted with water, as in a configuration example shown in FIG. 20 and FIG. 21. Note that when the removal reactive substance An* is not prepared from the reducing agent An, a container to store the removal reactive substance An* is additionally prepared, and the removal reactive substance An* is injected into the residue pipeline Ls* from the container.

### 5) Ballast Water Treatment Method

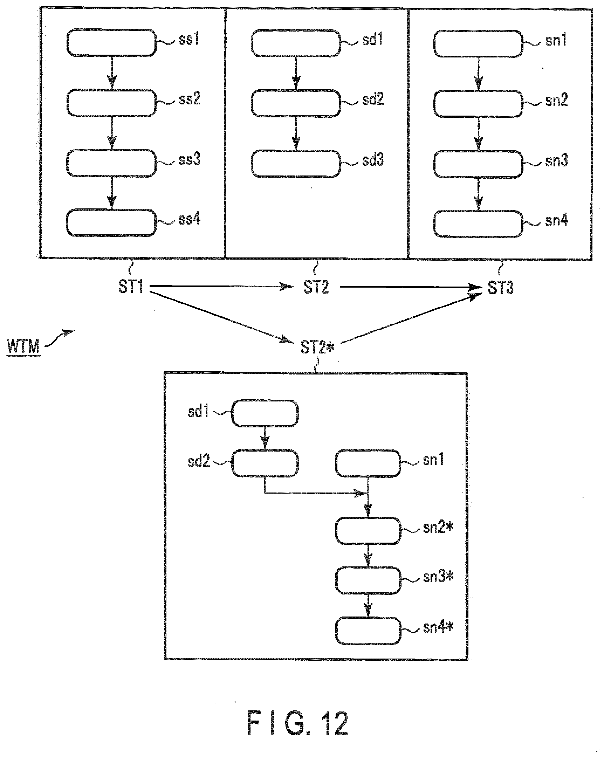

FIG. 12 is a process flow explanatory diagram of a ballast water treatment method executed in the vessel according to the present invention.

### 5.1) Ballast Water Treatment Method WTM

A ballast water treatment method WTM executed in the vessel VSL has three stages, that is, a first stage ST1, a second stage ST2, and a third stage ST3, as shown in FIG. 12. The first stage ST1 is executed in the first operation mode of the ballast pump Pm. The second stage ST2 is executed in the second operation mode (A-type and B-type) of the ballast pump Pm. The third stage ST3 is executed in the third operation mode of the ballast pump Pm.

The first stage ST1 has a step ss1 of preparing the chlorine-based antiseptic agent As in the antiseptic agent supply device S, a step ss2 of circulating the seawater Wo taken from the outside of the vessel in the pipeline for ballast water intake Lf in the vessel, a step ss3 of giving a sterilization treatment to the seawater Wo taken from the outside of the vessel and circulating in the pipeline for ballast water intake Lf by injecting thereinto the prepared chlorine-based antiseptic agent As from the antiseptic agent injection hole Is, and a step ss4 of storing or filling the seawater Ws injected with the chlorine-based antiseptic agent As into the ballast tank T.

The second stage ST2 has a step sd1 of circulating the seawater Wo taken from the outside of the vessel in the pipeline for residue discharge Ld in the vessel, a step sd2 of removing at least part of the antiseptic agent residue Re remaining in the antiseptic agent supply device S by injecting the same, from the residue injection hole Id or the antiseptic agent injection hole/residue injection hole Is/Id through the residue pipeline Ls*, into the seawater Wo taken from the outside of the vessel and circulating in the pipeline for residue discharge Ld, and a step sd3 of discharging the seawater Wd injected with at least part of the antiseptic agent residue Re to the outside of the vessel.

The third stage ST3 has a step sn1 of preparing the reducing agent An in the reducing agent supply device N, a step sn2 of circulating the ballast water Wt taken from the ballast tank T in the pipeline for ballast water discharge Lr in the vessel, a step sn3 of giving a reduction treatment to the ballast water Wt circulating in the pipeline for ballast water discharge Lr by injecting thereinto the prepared reducing agent An from the reducing agent injection hole In, and a step sn4 of discharging the ballast water Wn injected with the reducing agent An to the outside of the vessel.

At the second stage ST2, the force of the pump Ps, gravity, and/or negative pressure resulting from the circulation of the seawater Wo taken from the outside of the vessel is used to move at least part of the antiseptic agent residue Re to the side of the seawater Wo taken from the outside of the vessel and inject the same into the seawater Wo. In this instance, the fluidity of the antiseptic agent residue Re may be increased by increasing the amount of injection of the seawater Ws into the tank Ts and circulating more water wo forced by the pump Ps in the antiseptic agent pipeline Is, and the injection of the antiseptic agent residue Re into the seawater Wo taken from the outside of the vessel may be thereby accelerated.

Alternatively, the reducing substance An* may be continuously, discontinuously, periodically, repetitively, or temporarily circulated in the residue pipeline Ls* (e.g., the removal reactive substance An* may be mixed with the water ws, and the water ws containing the removal reactive substance An* may be continuously, discontinuously, periodically, repetitively, or temporarily circulated in the residue pipeline Ls*), whereby a reaction may be caused between at least part of free available chlorine remaining in the antiseptic agent residue Re and the removal reactive substance An*, and together with the resultant reaction product, at least part of the remaining antiseptic agent residue Re may be injected into the seawater Wo taken from the outside of the vessel. In this instance, the amount of injection of the water ws into the tank Ts may be increased, and more water ws forced by the pump Ps may be circulated in the antiseptic agent pipeline Is.

The third stage ST3 can not be said to be a stage indispensable to the removal of the antiseptic agent residue Re conducted in the second stage ST2, but is normally indispensable to the ballast water treatment method WTM involving the step ss3 (the sterilization treatment with the chlorine-based antiseptic agent As) in the first stage ST1.

### 5.2) Modification of Ballast Water Treatment Method WTM

If at least part of the antiseptic agent residue Re is injected into the seawater Wo taken from the outside of the vessel in the second stage ST2, there is concern that the concentration of free available chlorine derived from the antiseptic agent residue Re in the seawater Wo might become excessively high during a period from the start of the injection to the end, and the seawater Wo might have water quality inappropriate to overboard discharge. When this concern is present, the third stage ST3 is executed during this period so that the seawater Wo injected with at least part of the antiseptic agent residue Re (which may hereinafter be referred to as "Wo*") is regarded as the ballast water Wt, free available chlorine derived from the antiseptic agent residue Re in the seawater Wo* is reduced, and the reducing agent An enough to detoxify the seawater Wo* to a level that permits overboard discharge is injected from the reducing agent injection hole In. If such a stage of the ballast water treatment tentatively called a 2*-th stage ST2*, a modification of the ballast water treatment method WTM shown in FIG. 12 comprising the first stage ST1, the 2*-th stage ST2*, and the third stage ST3 is conceivable. The first stage ST1 is executed in the first operation mode of the ballast pump Pm. The 2*-th stage ST2* is executed in the second operation mode (C-type and D-type) of the ballast pump Pm. The third stage ST3 is executed in the third operation mode of the ballast pump Pm.

The 2*-th stage ST2* has a step sd1 of circulating the seawater Wo taken from the outside of the vessel in the pipeline for residue discharge Ld, a step sd2 of removing at least part of the antiseptic agent residue Re remaining in the antiseptic agent supply device S by injecting the same from the residue injection hole Id or the antiseptic agent injection hole/residue injection hole Is/Id through the residue pipeline Ls*, into the seawater Wo taken from the outside of the vessel and circulating in the pipeline for residue discharge Ld, a step sn1 of preparing the reducing agent An in the reducing agent supply device N, a step sn2* of circulating the seawater Wo injected with at least part of the antiseptic agent residue Re (i.e. the seawater Wo*) in the pipeline for residue discharge Ld in the vessel, a step sn3* of giving a reduction treatment to the seawater Wo* circulating in the pipeline for residue discharge Ld by injecting thereinto the prepared reducing agent An from the reducing agent injection hole In, and a step sn4* of discharging the seawater Wo* injected with the reducing agent An to the outside of the vessel. 5.3) Execution Example of Ballast Water Treatment Method

For example, when a freighter leaves a first port in ballast, seawater is loaded into a ballast tank at the first port, and the seawater is discharged to the outside of the vessel from the ballast tank at a second port where goods are loaded, in which case the first stage ST1 is executed at the first port, and the third stage ST3 is executed at the second port. Both the second stage and the 2*-th stage are executed under sail before or after the freighter leaves the first port and before the freighter arrives at the second port.

Note that the second stage and the 2*-th stage may be executed at or after the stage of the arrival at the second port if these stages are executed at the stage of the arrival at the second port and it is still possible to suppress the progress in the formation, accumulation, and solidification of a deposit of a component of the chlorine-based chemical ms, and suppress or prevent the occurrence of operational troubles resulting from the antiseptic agent residue Re.

### 6) Operation Modes of Ballast Pump Pm

### 6.1) First Operation Mode

Opening/closing setting of the valves in the first operation mode of the ballast pump Pm is as shown in Table 2.

**[Table 2]**

| | | V1 | V2 | V3 | V4 | V5 | V6 | V7 | V8 | V9 | Vs | Vd (#1) | Vn |
|---|---|---|---|---|---|---|---|---|---|---|---|---|---|
| First Operation mode | | OP | OP | OP | CL | OP | CL | CL | CL | CL | OP | CL | CL |
| Third Operation Mode | | CL | CL | CL | OP | OP | OP | OP | CL | CL | CL | CL | OP |
| Second Operation mode | A-type | OP | CL | OP | OP | CL | CL | CL | OP | OP | CL | OP | CL |
| | B-type | OP | OP | OP | OP | CL | CL | CL | OP | CL | CL | OP | CL |
| | C-type | OP | CL | OP | OP | CL | CL | CL | OP | OP | CL | OP | OP |
| | D-type | OP | OP | OP | OP | CL | CL | CL | OP | CL | CL | OP | OP |

| | | | | | | | | | | | | | |
|---|---|---|---|---|---|---|---|---|---|---|---|---|---|
| OP(Open):Valve is open CL(Close): Valve is closed #1: When antiseptic agent injection hole (Is) does not double as residue injection hole (Id) | | | | | | | | | | | | | |

In this first operation mode, the first stage ST1 is executed in the pipeline drawn in thick print in FIG. 2. Specifically, the seawater Wo outside the vessel VSL is taken into the vessel VSL from the intake IT by the ballast pump Pm, circulated toward the ballast tank T through the pipeline for ballast water intake Lf, filtered by the filter device F along the way, then injected with the chlorine-based antiseptic agent As from the antiseptic agent injection hole Is, stirred by the mixer Mxs, and thereafter, stored or filled into the ballast tank T as the seawater Ws which has been injected with the chlorine-based antiseptic agent As.

The antiseptic agent supply device S discharges, by the pump Ps, the mixture Cs, which can be formed by mixing the chlorine-based chemical ms with the water ws, from the tank Ts along the antiseptic agent pipeline Ls, produces an aqueous solution of the chlorine-based antiseptic agent (chlorine-based antiseptic agent) As by stirring the mixture Cs, and injects the chlorine-based antiseptic agent As from the antiseptic agent injection hole Is into the seawater Wo taken from the outside of the vessel and circulating in the pipeline for ballast water intake Lf.

The water ws is fresh water when there is concern that the chlorine-based chemical ms might become a generation source of a chlorine-containing gas due to contact with seawater (e.g., when the chlorine-based chemical ms is a trichloroisocyanuric acid, sodium dichloroisocyanurate and its hydrates, potassium dichloroisocyanurate, or the like). The fresh water is preferably fresh water produced by use of a seawater desalter mounted in the vessel.

### 6.2) Second Operation Mode

There are four kinds of second operation modes of the ballast pump Pm: the A-type, the B-type, the C-type, and the D-type. Opening/closing setting of the valves in each type is as shown in Table 2.

In the A-type and the B-type, the second stage ST2 is executed, and therefore, the injection of the reducing agent An from the reducing agent supply device N into the seawater circulating in the pipeline for residue discharge Ld (the step sn3*) is not performed. In the C-type and the D-type, the 2*-th stage ST2* is executed, and therefore, the injection of the reducing agent An from the reducing agent supply device N into the seawater circulating in the pipeline for residue discharge Ld (the step sn3*) is performed. Note that the pipeline for residue discharge Ld is the pipeline for residue discharge <Ld1> in the A-type and the C-type, and is the pipeline for residue discharge <Ld2> in the B-type and the D-type.

### (A) A-type

In the A-type of the second operation mode, the second stage ST2 is executed in the pipeline drawn in thick print in FIG. 4. Specifically, the seawater Wo outside the vessel VSL is taken into the vessel VSL from the intake IT by the ballast pump Pm, circulated toward the drain hole D0 through the pipeline for residue discharge <Ldl>, not passed through the filter device F along the way, and then injected with at least part of the antiseptic agent residue Re from the residue injection hole Id. Then, after stirred by the mixers Mxs and Mxn, the seawater Wo which has been injected with the antiseptic agent residue Re (i.e. the seawater Wo*) is discharged from the drain hole D0 to the outside of the vessel VSL as the seawater Wd injected with the stirred antiseptic agent residue Re.

### (B) B-type

In the B-type of the second operation mode, the second stage ST2 is executed in the pipeline drawn in thick print in FIG. 5. Specifically, the seawater Wo outside the vessel VSL is taken into the vessel VSL from the intake IT by the ballast pump Pm, circulated toward the drain hole D0 through the pipeline for residue discharge <Ld2>, passed through the filter device F along the way, and injected with at least part of the antiseptic agent residue Re from the residue injection hole Id. Then, after stirred by the mixers Mxs and Mxn, the seawater Wo which has been injected with the antiseptic agent residue Re (i.e. the seawater Wo*) is discharged from the drain hole D0 to the outside of the vessel VSL as the seawater Wd injected with the stirred antiseptic agent residue Re.

### (C) C-type

In the C-type of the second operation mode, the 2*-th stage ST2* is executed in the pipeline drawn in thick print in FIG. 6. Specifically, the seawater Wo outside the vessel VSL is taken into the vessel VSL from the intake IT by the ballast pump Pm, circulated toward the drain hole D0 through the pipeline for residue discharge <Ld1>, and not passed through the filter device F along the way, and then at least part of the antiseptic agent residue Re is injected from the residue injection hole Id into the seawater Wo taken from the outside of the vessel. Then, the seawater Wo which has been injected with the antiseptic agent residue Re (i.e. the seawater Wo*) is stirred by the mixer Mxs, and injected with the reducing agent An from the reducing agent injection hole In. After stirred by the mixer Mxn, the seawater Wo* which has been injected with the reducing agent An is discharged from the drain hole D0 to the outside of the vessel VSL as the seawater Wd injected with the stirred antiseptic agent residue Re.

### (D) D-type

In the D-type of the second operation mode, the 2*-th stage ST2* is executed in the pipeline drawn in thick print in FIG. 7. Specifically, the seawater Wo outside the vessel VSL is taken into the vessel VSL from the intake IT by the ballast pump Pm, circulated toward the drain hole D0 through the pipeline for residue discharge <Ld2>, and passed through the filter device F along the way. Thereafter, at least part of the antiseptic agent residue Re is injected from the residue injection hole Id into the seawater Wo taken from the outside of the vessel. Then, the seawater Wo which has been injected with the antiseptic agent residue Re (i.e. the seawater Wo*) is stirred by the mixer Mxs, and injected with the reducing agent An from the reducing agent injection hole In. After stirred by the mixer Mxn, the seawater Wo* which has been injected with the reducing agent An is discharged from the drain hole D0 to the outside of the vessel VSL as the seawater Wd injected with the stirred antiseptic agent residue Re. Even if the second operation mode is any one of the A-type to D-type:
<1> The antiseptic agent supply device S causes at least part of the antiseptic agent residue Re remaining in the tank Ts and the antiseptic agent pipeline Ls to circulate along the residue pipeline Ls* by the pump Ps, and be injected from the residue injection hole Id into the seawater Wo taken from the outside of the vessel and circulating in the pipeline for residue discharge Ld. In this case, the chlorine-based chemical ms is not injected into the tank Ts. However, the chlorine-based chemical ms may be continuously, discontinuously, periodically, repetitively, or temporarily injected into the tank Ts and circulated in the residue pipeline Ls*. Alternatively, as in the case of the antiseptic agent supply device S shown in FIG. 8, a reaction may be caused between at least part of free available chlorine remaining in the antiseptic agent residue Re and the removal reactive substance An* by continuously, discontinuously, periodically, repetitively, or temporarily circulating the removal reactive substance An* in the residue pipeline Ls*. In this instance, the amount of injection of the water ws into the tank Ts may be increased, and more water ws forced by the pump Ps may be circulated in the antiseptic agent pipeline Is.
<2> If the removal reactive substance An* is circulated in the residue pipeline Ls*, the tank Tsm may be provided downstream of the tank Ts and along the residue pipeline Ldr as in the case of the antiseptic agent supply device S shown in FIG. 9. Accordingly, a reaction between the antiseptic agent residue Re and the removal reactive substance An* is mainly caused in the tank Tsm. Thereafter, at least part of contents in the tank Tsm are circulated in the residue pipeline Ldr, and injected from the residue injection hole Id into the seawater Wo taken from the outside of the vessel and circulating in the pipeline for residue discharge Ld, together with the antiseptic agent residue Re remaining downstream of the tank Tsm.
<3> The water ws is fresh water when there is concern that the antiseptic agent residue Re might become a generation source of a chlorine-containing gas due to contact with seawater (e.g., when the chlorine-based chemical ms is a trichloroisocyanuric acid, sodium dichloroisocyanurate and its hydrates, potassium dichloroisocyanurate, or the like). The fresh water is preferably fresh water produced by use of a seawater desalter mounted in the vessel.
<4> The removal reactive substance An* may be the same substance as the reducing agent An, or may be a different substance. The reducing agent An taken from the tank Tn may be used as the removal reactive substance An* as it is or after diluted if necessary.

### 6.3) Third Operation Mode

Opening/closing setting of the valves in the third operation mode of the ballast pump Pm is as shown in Table 2.

In this third operation mode, the third stage ST3 is executed in the pipeline drawn in thick print in FIG. 3. Specifically, the seawater Ws which is contained in the ballast tank T and which has been injected with the chlorine-based antiseptic agent As is taken from the ballast tank T as the ballast water Wt. The ballast water Wt taken from the ballast tank T is circulated toward the drain hole D0 through the pipeline for ballast water discharge Lr by the ballast pump Pm, injected with the reducing agent An which reduces and detoxifies free available chlorine derived from the chlorine-based antiseptic agent As, from the reducing agent injection hole In along the way, stirred by the mixer Mxn, and then discharged from the drain hole D0 to the outside of the vessel VSL as the ballast water Wn which has been injected with the reducing agent An.

The reducing agent supply device N discharges, by the pump Pn, the mixture Cn, which can be formed by mixing the raw material mn of the reducing agent with the water wn, from the tank Tn along the reducing agent pipeline Ln, produces the reducing agent An by stirring the mixture Cn, and injects the reducing agent An from the reducing agent injection hole In into the ballast water Wt taken from the ballast tank T circulating in the pipeline for ballast water discharge Lr.

Note that when the reducing agent An in an aqueous solution state can be prepared and this reducing agent An can be previously injected into the tank Tn, the reducing agent supply device N discharges, by the pump Pn, the reducing agent An from the tank Tn along the reducing agent pipeline Ln, and injects the reducing agent An from the reducing agent injection hole In into the ballast water Wt circulating in the pipeline for ballast water discharge Lr. 6.4) Time Difference Between End of First Operation Mode and Start of Second Operation Mode

The second operation mode is started at an earliest possible time after the end of the first operation mode. This is because when the time between the end of the first operation mode and the start of the second operation mode is shorter, it is possible to more effectively suppress the progress in the formation, accumulation, and solidification of a deposit of a component of the chlorine-based chemical ms, and suppress or prevent the occurrence of operational troubles resulting from the antiseptic agent residue Re. Therefore, if possible, the second operation mode is started immediately after the end of the first operation mode. Even when it is practically difficult, the second operation mode is started within 2 hours after the end of the first operation mode. Even when it is still difficult, the second operation mode is started within 3 hours after the end of the first operation mode. Indeed, as long as there is an effect of suppressing or preventing the occurrence of operational troubles resulting from the antiseptic agent residue Re, a time difference between the end of the first operation mode and the start of the second operation mode may be more than 3 hours.

### 7) Ballast Water Treatment Device and Ballast Water Treatment Method which Remove Residue of Chlorine-based Antiseptic Agent by Supply of Water and/or Removal Reactive Substance

Configurations of the ballast water treatment device and the ballast water treatment method mainly characterized by removing the residue of the chlorine-based antiseptic agent by the supply of water and/or removal reactive substance are shown as below. These configurations are based on the aforementioned contents of 3.5) Removal of Antiseptic Agent Residue, (B) Employment of Water Washing Removal Effect, and (C) Employment of Reaction Removal Effect.
i) A ballast water treatment device which is mounted in a vessel and which sterilizes ballast water to be stored in a ballast tank provided in the vessel, comprises: an antiseptic agent injection hole through which a chlorine-based antiseptic agent is injected into the ballast water to be stored in the ballast tank; and an antiseptic agent pipeline which circulates the chlorine-based antiseptic agent toward the antiseptic agent injection hole, and the ballast water treatment device is characterized in that at least part of a residue of the chlorine-based antiseptic agent remaining in the antiseptic agent pipeline and unused for the sterilization of the ballast water is removed to the outside of the antiseptic agent pipeline by the supply of water and/or a removal reactive substance to the antiseptic agent pipeline, and the removal reactive substance is a reducing substance or an alkaline substance.
ii) The ballast water treatment device described in i) is characterized in that the antiseptic agent pipeline comprises a return pipeline which returns at least part of contents circulating in the antiseptic agent pipeline, from a downstream side of the antiseptic agent pipeline to an upstream side thereof.
iii) The ballast water treatment device described in i) or ii) is characterized in that the water is fresh water.
iv) The ballast water treatment device described in any one of i) to iii), is characterized in that the antiseptic agent pipeline comprises a pipeline which discharges at least part of the residue of the chlorine-based antiseptic agent into a pipe that circulates the ballast water.
v) A ballast water treatment method of sterilizing, in a vessel, ballast water to be stored in a ballast tank provided in the vessel, comprises: an antiseptic agent preparation step of preparing a chlorine-based antiseptic agent to sterilize the ballast water to be stored in the ballast tank; a sterilization treatment step of injecting the chlorine-based antiseptic agent into the ballast water via an antiseptic agent pipeline, and sterilizing the ballast water; and a residue removal step of removing, from the antiseptic agent pipeline, at least part of a residue of the chlorine-based antiseptic agent remaining in the antiseptic agent pipeline and unused for the sterilization of the ballast water, and is characterized in that the residue removal step includes a step of supplying water and/or a removal reactive substance to the antiseptic agent pipeline, and the removal reactive substance is a reducing substance or an alkaline substance.
vi) The ballast water treatment method described in v), is characterized in that the residue removal step includes a step of returning the water and/or removal reactive substance supplied to the antiseptic agent pipeline, from a downstream side of the antiseptic agent pipeline to an upstream side thereof.
vii) The ballast water treatment method described in v) or vi), is characterized in that the water is fresh water.
viii) The ballast water treatment method described in any one of v) to vii) is characterized in that the residue removal step is a step of discharging at least part of the residue of the chlorine-based antiseptic agent into a pipe which circulates the ballast water.

The return pipeline provided in the antiseptic agent pipeline of the ballast water treatment device of ii), or the return pipeline that enables the step, which is included in the residue removal step of the ballast water treatment method of vi), of returning the water and/or removal reactive substance supplied to the antiseptic agent pipeline, from the downstream side of the antiseptic agent pipeline to the upstream side thereof is a return pipeline which returns at least part of the contents circulating in the antiseptic agent pipeline, from the downstream side of the antiseptic agent pipeline to the upstream side thereof, and is configured as below by way of example.

The antiseptic agent pipeline Ls comprises a return pipeline Lsr (not shown) which returns part or all of contents Cs from a position Qs0 (not shown) located downstream of the pump Ps to a position Qs1 (not shown) located upstream of the pump Ps. The position Qs0 is a position located downstream of the pump Ps and upstream of the position Qs, or the position Qs. The position Qs1 is the position of the tank Ts, or a position located downstream of the tank Ts and upstream of the pump Ps. One example of the return pipeline Lsr is a pipeline configured so that the return pipeline Lsr branches from the antiseptic agent pipeline Ls at the position Qs0, and at least part of the contents Cs circulating the antiseptic agent pipeline Ls always flow in the return pipeline Lsr. Another example of the return pipeline Lsr is a pipeline which comprises a solid-liquid separator typified by a liquid cyclone at the position Qs0 and which is configured so that the undissolved chlorine-based chemical ms circulates in the return pipeline Lsr together with the water ws. Each of the examples is configured so that all of the contents Cs return to the position Qs1 through the return pipeline Lsr by closing the valve Vs and the valve Vd, and the amount of the contents Cs returning to the position Qs1 is determined by adjusting the openings of the valve Vs and the valve Vd. When the antiseptic agent residue Re is removed from the antiseptic agent pipeline Ls, at least a portion of the return pipeline Lsr which is a portion of the antiseptic agent pipeline Ls constitutes a portion of the residue pipeline Ls*.

In the ballast water treatment device of iii) or the ballast water treatment method of vii), the generation of a chlorine-containing gas can be prevented when there is concern that the chlorine-based chemical ms might become a generation source of a chlorine-containing gas due to contact with seawater because the water is fresh water (e.g., when the chlorine-based chemical ms is a trichloroisocyanuric acid, sodium dichloroisocyanurate and its hydrates, potassium dichloroisocyanurate, or the like).

The antiseptic agent pipeline of the ballast water treatment device of iv), or the pipeline which enables the residue removal step of the ballast water treatment method of viii) comprises a pipeline which discharges at least part of the residue of the chlorine-based antiseptic agent into, for example, a pipe Lf that circulates the ballast water.

### <Second Embodiment of Vessel according to the Present Invention>

### 1) Basic Configuration and Pipelines

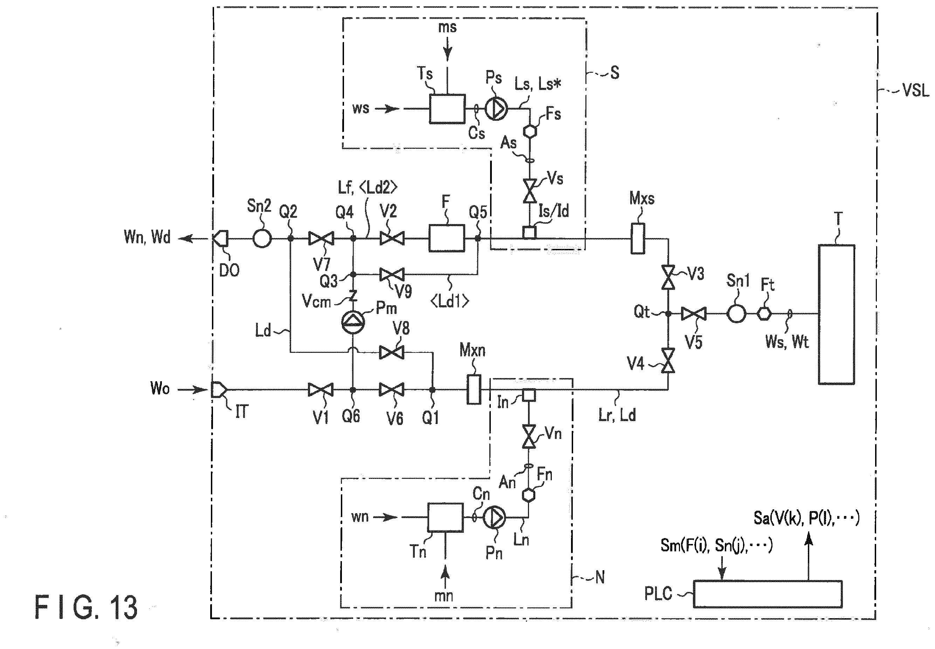

FIG. 13 is a basic configuration explanatory diagram of a second embodiment of a vessel according to the present invention. For convenience of explanation, all open-close valves are drawn in an open state in FIG. 13.

As shown in FIG. 13 and as will be described later, an antiseptic agent supply device S in the second embodiment according to the present invention has a simpler internal structure than the antiseptic agent supply device in the first embodiment shown in FIG. 1, and can effectively remove the antiseptic agent residue Re.

However, when the antiseptic agent supply device S is considered as a device block which exerts a function of injecting at least part of the chlorine-based antiseptic agent As or the antiseptic agent residue Re into ballast water, there is no basic difference between the first embodiment and the second embodiment. In the second embodiment as well, opening/closing setting of the open-close valves respectively corresponding to the pipeline for ballast water intake Lf, the pipeline for ballast water discharge Lr, and the pipeline for residue discharge Ld is as described in Table 1.

Therefore, the explanation of the basic configuration according to the second embodiment is the same as the explanation of the basic configuration according to the first embodiment except for the internal configuration of the antiseptic agent supply device S and parts related to the relevant operation.

### 2) Antiseptic Agent Supply Device S

The antiseptic agent supply device S in the second embodiment has the antiseptic agent injection hole Is which doubles as the residue injection hole Id (antiseptic agent injection hole/residue injection hole Is/Id) as shown in FIG. 13. Accordingly, the antiseptic agent pipeline Ls doubles as the residue pipeline Ls* (Ts→Ps→Fs→Vs→Is/Id), and there is no need for the valve Vd to switch between the antiseptic agent pipeline Ls and the residue pipeline Ls*. Therefore, the antiseptic agent supply device S in the second embodiment has a simpler internal structure, and can more effectively remove the antiseptic agent residue Re than the antiseptic agent supply device in the first embodiment (see 3.6) above). Consequently, it can be said that the second embodiment is preferable to the first embodiment.

When there is an insufficiency of pressure for injection of the chlorine-based antiseptic agent As into the seawater Wo taken from the outside of the vessel through the antiseptic agent injection hole/residue injection hole Is/Id, the antiseptic agent pipeline Ls may comprise a pump for antiseptic agent injection Pis (not shown) downstream of the valve Vs and upstream of the antiseptic agent injection hole/residue injection hole Is/Id. When comprising the pump for antiseptic agent injection Pis (not shown), the antiseptic agent pipeline Ls may comprise a back pressure valve downstream of the pump for antiseptic agent injection Pis (on the discharge hole side) and upstream of the antiseptic agent injection hole/residue injection hole Is/Id.

The pump for antiseptic agent injection Pis is switched into an operating state when the valve Vs is open, and switched into a nonoperating state when the valve Vs is closed. Such switching of the operating state of the pump Pis is automatically performed in accordance with the control program preinstalled in the controller PLC or some other unshown controller, unless otherwise part or all of the switching operation is manually performed.

The antiseptic agent pipeline Ls may also comprise the already described return pipeline Lsr (not shown). All of contents Cs may be returned to the upstream of the pump Ps through the return pipeline Lsr by closing the valve Vs. The amount of the contents Cs returning to the upstream of the pump Ps through the return pipeline Lsr may be determined by adjusting the opening of the valve Vs. When the antiseptic agent residue Re is removed from the antiseptic agent pipeline Ls, at least a portion of the return pipeline Lsr which is a portion of the antiseptic agent pipeline Ls constitutes a portion of the residue pipeline Ls*.

Despite the difference of internal structure described above, the function and role of the antiseptic agent supply device S in the second embodiment are the same as those of the antiseptic agent supply device in the first embodiment. The explanation of the antiseptic agent supply device S in the second embodiment is basically the same as the explanation of 3) (except for 3.6) above) regarding the antiseptic agent supply device in the first embodiment.

### 3) Removal of Antiseptic Agent Residue Re and its Modification

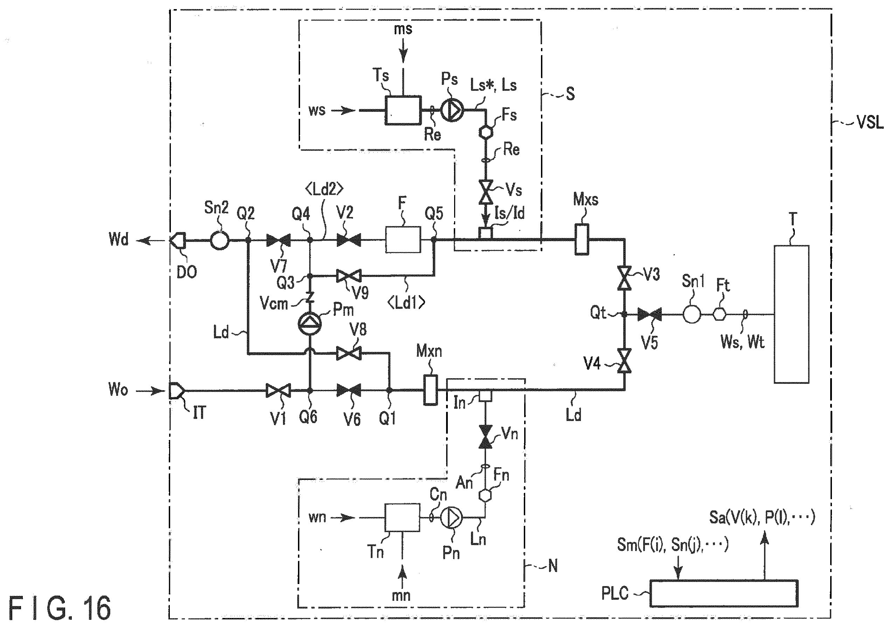

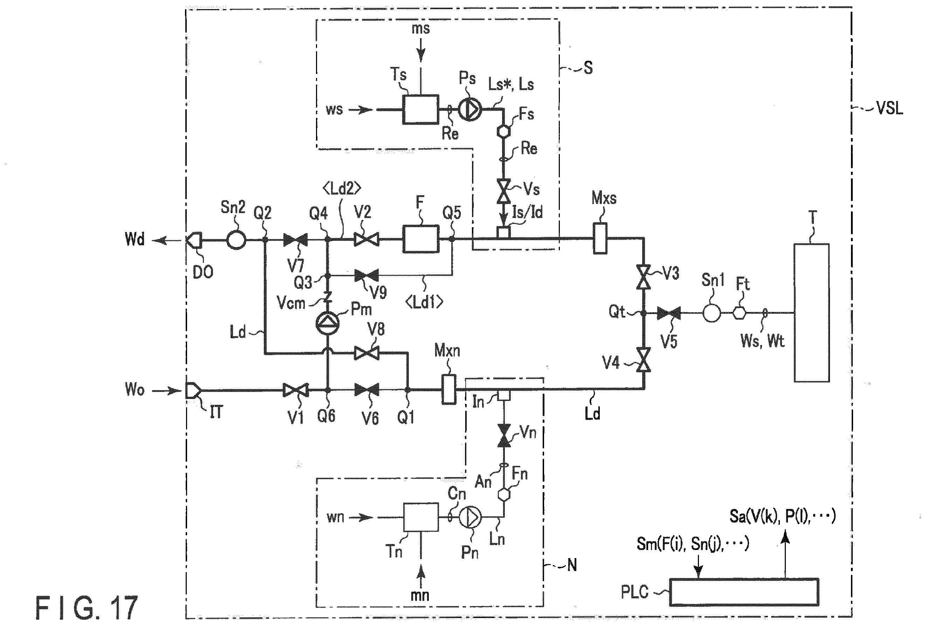

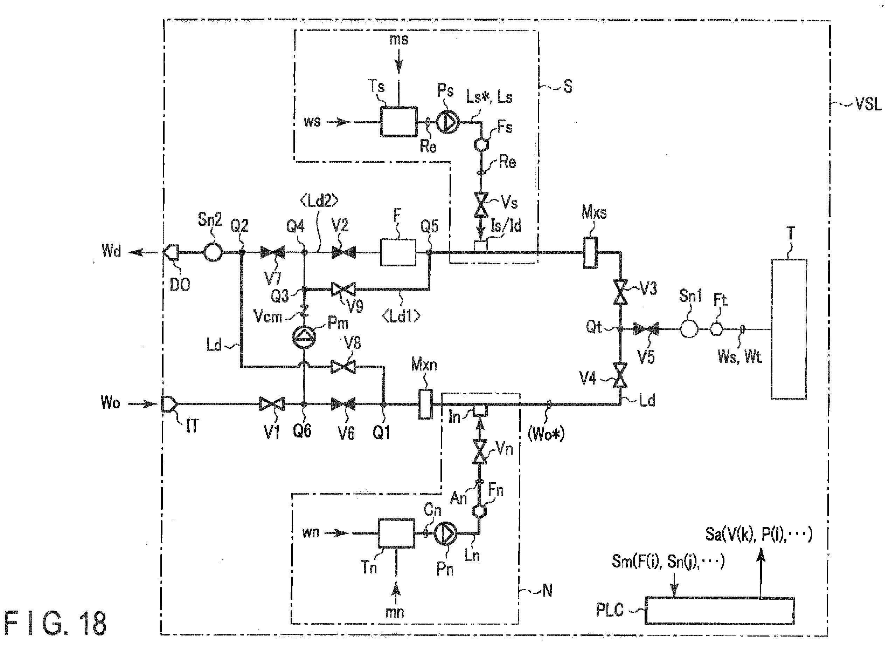

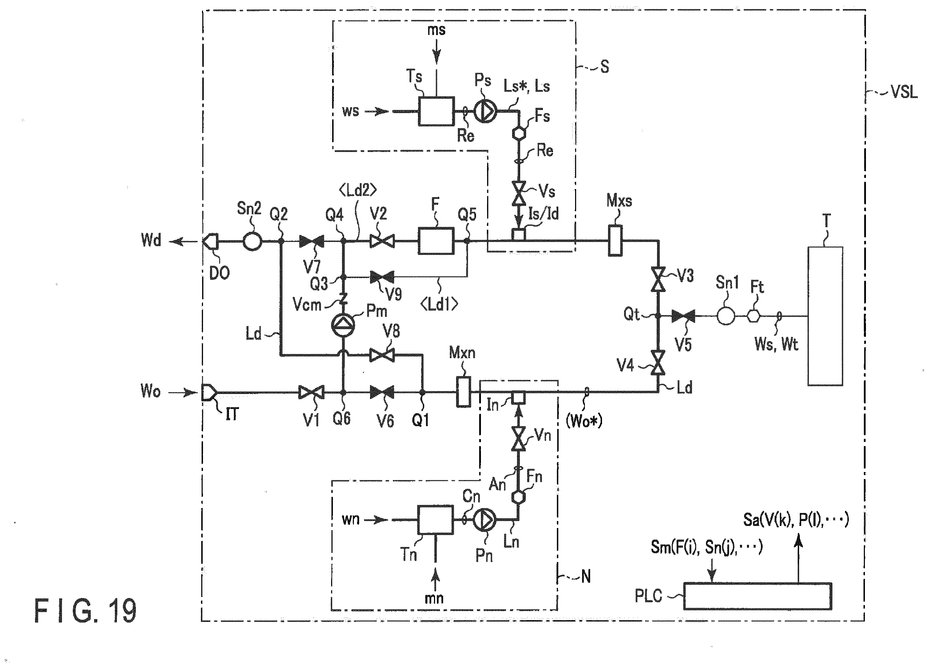

Except that the injection hole through which at least part of the antiseptic agent residue Re is injected into the seawater Wo taken from the outside of the vessel is the antiseptic agent injection hole/residue injection hole Is/Id, the principle, action, and mechanism of the removal of the antiseptic agent residue shown in FIG. 16 to FIG. 19 are basically the same as those of the removal of the antiseptic agent residue in the first embodiment shown in FIG. 4 to FIG. 7, respectively, and the principle, action, and mechanism of a modification of the removal of the antiseptic agent residue shown in FIG. 10 and FIG. 11 are the same as those of a modification of the removal of the antiseptic agent residue in the first embodiment shown in FIG. 8 and FIG. 9, respectively. Therefore, the explanation (explanation of 3.5) above in particular) of the removal of the antiseptic agent residue Re in the first embodiment and its modification basically also applies to the removal of the antiseptic agent residue Re in the second embodiment. For example, in the removal of the antiseptic agent residue Re in the second embodiment, at least part of the antiseptic agent residue Re remaining in the antiseptic agent pipeline Ls including the tank Ts is injected, from the antiseptic agent injection hole/residue injection hole Is/Id through the residue pipeline Ls*, into the seawater Wo taken from the outside of the vessel and circulating in the pipeline for residue discharge Ld, by the pump Ps and/or by the force of the water ws discharged from the tank Ts and/or by mixing or dissolving the antiseptic agent residue Re with or into the water ws. In this instance, by the force of the water ws and/or through the mixing of the antiseptic agent residue Re with the water ws or the dissolution of the antiseptic agent residue Re into the water ws, at least part of the antiseptic agent residue Re remaining in the antiseptic agent pipeline Ls including the tank Ts may be removed by being injected from the antiseptic agent injection hole/residue injection hole Is/Id into the seawater Wo taken from the outside of the vessel and circulating in the pipeline for residue discharge Ld. If a reaction is caused between the antiseptic agent residue Re remaining in the tank Ts and/or the other antiseptic agent pipeline Ls and the removal reactive substance An*, the amount of the antiseptic agent residue Re decreases together with the increase of a reaction product, and in some cases, the fluidity of the remaining antiseptic agent residue Re increases. At least part of the antiseptic agent residue Re which has been decreased in amount or increased in fluidity may be removed by being injected, from the antiseptic agent injection hole/residue injection hole Is/Id together with the reaction product substance, into the seawater Wo taken from the outside of the vessel and circulating in the pipeline for residue discharge Ld.

### 4) Configuration Example of Taking out Removal Reactive Substance An*

A configuration example of taking out the removal reactive substance An* shown in FIG. 20 and FIG. 21 and its explanation also apply completely to the second embodiment.

### 5) Reducing Agent Supply Device N

The reducing agent supply device N in the second embodiment is the same as the reducing agent supply device in the first embodiment. The explanation of the reducing agent supply device N in the second embodiment is basically the same as the explanation of 4) above regarding the reducing agent supply device in the first embodiment.

### 6) Operation Modes of Ballast Pump Pm

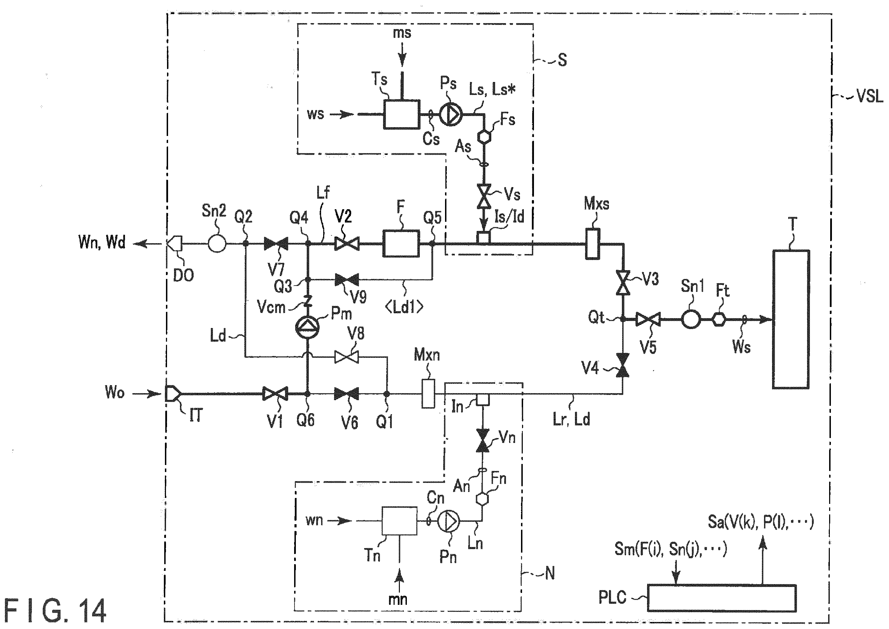

The first operation mode of the ballast pump Pm in the second embodiment shown in FIG. 14 is the same as the first operation mode of the ballast pump in the first embodiment shown in FIG. 2 except that the injection hole through which at least part of the antiseptic agent residue Re is injected into the seawater Wo taken from the outside of the vessel is the antiseptic agent injection hole/residue injection hole Is/Id. Therefore, the explanation of FIG. 14 is basically the same as the explanation of FIG. 3.

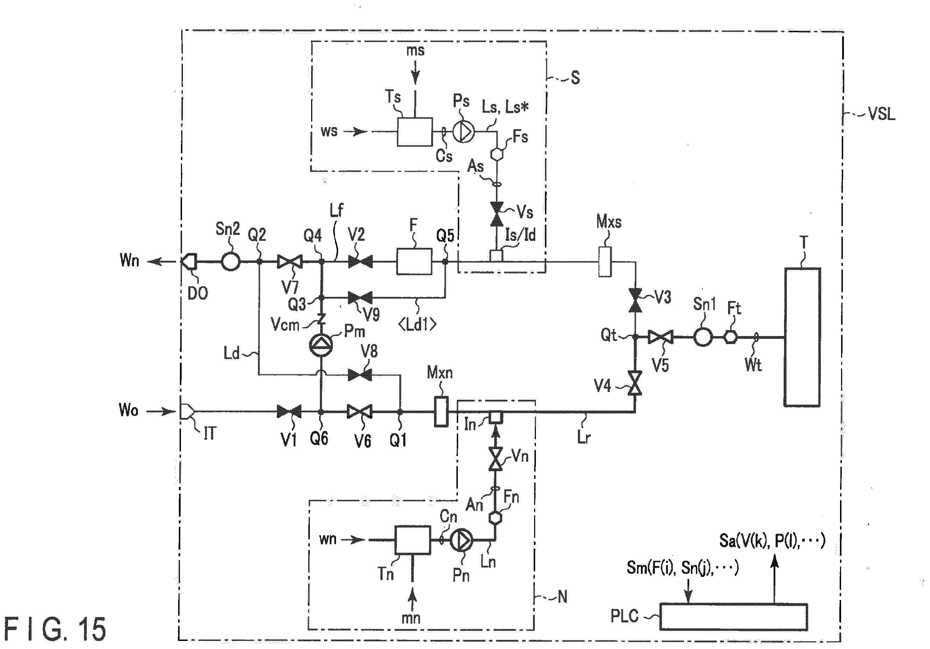

In the third operation mode of the ballast pump Pm, the chlorine-based antiseptic agent As and at least part of the antiseptic agent residue Re are not injected into ballast water, and the antiseptic agent supply device S is not concerned. Therefore, the explanation of FIG. 15 is basically the same as the explanation of FIG. 3.

The A-type to the D-type of the second operation mode of the ballast pump Pm in the second embodiment shown in FIG. 16 to FIG. 19 are the same as the A-type to the D-type of the second operation mode of the ballast pump in the first embodiment shown in FIG. 4 to FIG. 7 except that the injection hole through which at least part of the antiseptic agent residue Re is injected into the seawater Wo taken from the outside of the vessel is the antiseptic agent injection hole/residue injection hole Is/Id. Therefore, the explanation of FIG. 16 to FIG. 19 is basically the same as the explanation of FIG. 4 to FIG. 7.

Note that when the injection hole is the antiseptic agent injection hole/residue injection hole Is/Id, the valve Vd becomes unnecessary, so that opening/closing setting of the valves in each operation mode of the ballast pump Pm is as shown in Table 3.

**[Table 3]**

| | | V1 | V2 | V3 | V4 | V5 | V6 | V7 | V8 | V9 | Vs (#2) | Vn |
|---|---|---|---|---|---|---|---|---|---|---|---|---|
| First Operation mode | | OP | OP | OP | CL | OP | CL | CL | CL | CL | OP | CL |
| Third Operation Mode | | CL | CL | CL | OP | OP | OP | OP | CL | CL | CL | OP |
| Second Operation mode | A-type | OP | CL | OP | OP | CL | CL | CL | OP | OP | OP | CL |
| | B-type | OP | OP | OP | OP | CL | CL | CL | OP | CL | OP | CL |
| | C-type | OP | CL | OP | OP | CL | CL | CL | OP | OP | OP | OP |
| | D-type | OP | OP | OP | OP | CL | CL | CL | OP | CL | OP | OP |

| | | | | | | | | | | | | |
|---|---|---|---|---|---|---|---|---|---|---|---|---|
| OP(Open):Valve is open CL(Close): Valve is closed #2: When antiseptic agent injection hole (Is) doubles as residue injection hole (Id) | | | | | | | | | | | | |

### 7) Ballast Water Treatment Method

The explanation (see 5) above) of a process flow of the ballast water treatment method and its modification shown in FIG. 12 also apply to a process flow of the ballast water treatment method in the second embodiment and its modification when both the antiseptic agent injection hole Is and the residue injection hole Id are read as the antiseptic agent injection hole/residue injection hole Is/Id.

### 8) Configuration Example of Taking out Removal Reactive Substance (Reducing Substance) An* from Reducing Agent Supply Device N

FIG. 20 shows a configuration example of taking out the removal reactive substance (reducing substance) An* from the reducing agent supply device. In the configuration example shown in this drawing, a selection is made of either the branch pipeline Lns for the preparation of the removal reactive substance An* used to remove the antiseptic agent residue Re, or the reducing agent pipeline Ln through which the reducing agent An is injected into the ballast water Wt taken from the ballast tank T and circulating in the pipeline for ballast water discharge Lr. Switching between the reducing agent pipeline Ln and the branch pipeline Lns is performed by switching of the opening and closing of the valve Vn, and a valve Vn* provided in the branch pipeline Lns located downstream of the position Qn*.

When the branch pipeline Lns is selected, the valve Vn is closed, and the valve Vn* is opened. This corresponds to the case where the ballast pump Pm is the A-type or the B-type of the second operation mode or the case where the second stage ST2 of the ballast water treatment method is executed.

When the branch pipeline Ln is selected, the valve Vn is opened, and the valve Vn* is closed. This corresponds to the case where the ballast pump Pm is the C-type or the D-type of the second operation mode or the case where the third stage ST3 of the ballast water treatment method is executed.

FIG. 21 shows a configuration example different from the configuration example shown in FIG. 20. In the configuration example shown in FIG. 21, both the reducing agent pipeline Ln and the branch pipeline Lns are simultaneously selected to prepare the removal reactive substance An* simultaneously with the injection of the reducing agent An into the seawater Wo* injected with the antiseptic agent residue. When this simultaneous selection is made, for example, both of the valves Vn and Vn* are incompletely opened, or the valve Vn* is opened and the valve Vn is incompletely opened (half-opened). This corresponds to the case where the ballast pump Pm is the C-type or the D-type of the second operation mode or the case where the 2*-th stage ST2* of the ballast water treatment method is executed.

In each configuration example shown in FIG. 20 and FIG. 21, switching of the opening and closing of the valves Vn and Vn* and adjustment of opening are automatically performed in accordance with the control program preinstalled in the controller PLC or some other unshown controller, unless otherwise part or all of these operations are manually performed.

When the concentration of the removal reactive substance An* taken from the tank Tn through the branch pipeline Lns is unnecessarily high, the removal reactive substance An* is used after diluted with water in advance.

The technical scope of the present invention is not limited by the embodiments described above, and the present invention can be carried out in various forms without change in the spirit of the invention. For example, all of the following modifications do not change the spirit of the invention, and therefore fall within the technical scope of the present invention.

### [Modification 1] Modification of Basic Configuration of Second Embodiment

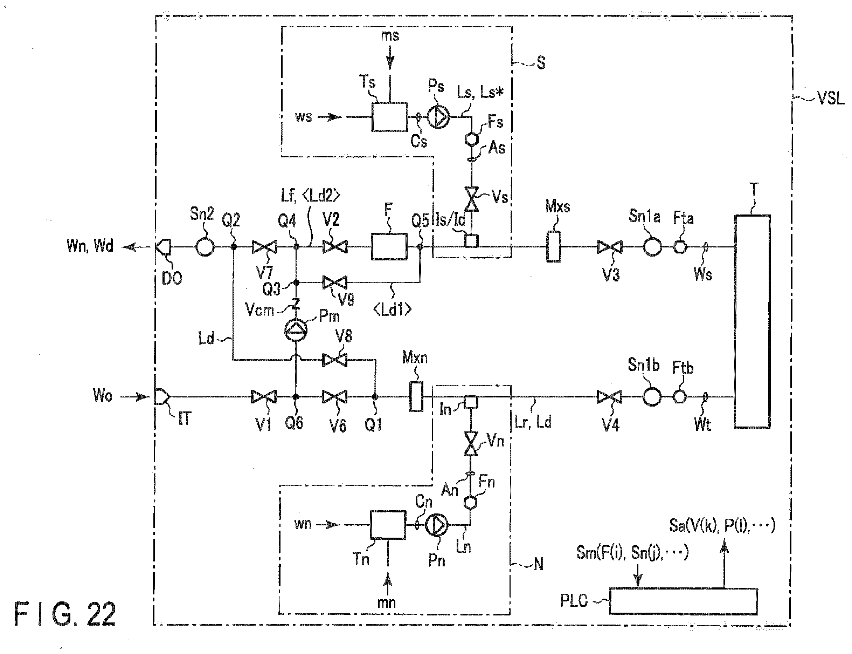

In the basic configuration of the second embodiment shown in FIG. 13, the pipeline for ballast water intake Lf and the pipeline for ballast water discharge Lr are configured to be a common pipeline (Qt-V5-Sn1-Ft-T) between the position Qt and the ballast tank T. In contrast, in a modification of the basic configuration of the second embodiment shown in FIG. 22, each of the pipeline for ballast water intake Lf and the pipeline for ballast water discharge Lr is connected to the ballast tank T, and a position Qts of the pipeline for ballast water intake Lf and a position Qtr of the pipeline for ballast water discharge Lr are bridged by a portion of the pipeline for residue discharge Ld comprising a valve V5*. Note that the position Qts is a position located downstream of the mixer Mxs, upstream of the valve V3, and upstream of the valve V5*. The position Qtr is a position located downstream of the valve V4, downstream of the valve V5*, and upstream of the reducing agent injection hole In.

In the modification of the basic configuration of the second embodiment shown in FIG. 22, the pipeline for ballast water intake Lf is a pipeline of
IT→V1→Q6→Pm→Vcm→Q3→Q4→V2→F→Is/Id→Mxs→Qts→V3→Sn1s→F ts→T, and the pipeline for ballast water discharge Lr is a pipeline of
T→Ftr→Sn1r→V4→Qtr→In→Mxn→Q1→V6→Q6→Pm→Vcm→Q3→Q4→V7 →Q2→Sn2→D0. Of the pipeline for residue discharge Ld, <Ld1> is a pipeline of
IT→V1→Q6→Pm→Vcm→Q3→V9→Q5→Is/Id→Mxs→Qts→V5*→Qtr→In→ Mxn→Q1→V8→Q2→Sn2→D0, and <Ld2> is a pipeline of IT→V1→Q6→Pm→Vcm→Q3→Q4→V2→F→Q5→Is/Id→Mxs→Qts→V5*→Qt r→In→Mxn→Q1→V8→Q2→Sn2→D0. Opening/closing setting of the valves in each pipeline is as shown in Table 4. Moreover, opening/closing setting of the valves in each operation mode of the ballast pump Pm is as shown in Table 5.

**[Table 4]**

| | | V1 | V2 | V3 | V4 | V5* | V6 | V7 | V8 | V9 |
|---|---|---|---|---|---|---|---|---|---|---|
| Lf | | Open | Open | Open | Close | Close | Close | Close | Close | Close |
| Lr | | Close | Close | Close | Open | Close | Open | Open | Close | Close |
| Ld | <Ld1> | Open | Close | Close | Close | Open | Close | Close | Open | Open |
| | <Ld2> | Open | Open | Close | Close | Open | Close | Close | Open | Close |

| | | | | | | | | | | |
|---|---|---|---|---|---|---|---|---|---|---|
| Open: Valve is open Close: Valve is closed | | | | | | | | | | |

**[Table 5]**

| | | V1 | V2 | V3 | V4 | V5* | V6 | V7 | V8 | V9 | Vs (#2) | Vn |
|---|---|---|---|---|---|---|---|---|---|---|---|---|
| First Operation mode | | OP | OP | OP | CL | CL | CL | CL | CL | CL | OP | CL |
| Third Operation Mode | | CL | CL | CL | OP | CL | OP | OP | CL | CL | CL | OP |
| Second Operation mode | A-type | OP | CL | CL | CL | OP | CL | CL | OP | OP | OP | CL |
| | B-type | OP | OP | CL | CL | OP | CL | CL | OP | CL | OP | CL |
| | C-type | OP | CL | CL | CL | OP | CL | CL | OP | OP | OP | OP |
| | D-type | OP | OP | CL | CL | OP | CL | CL | OP | CL | OP | OP |

| | | | | | | | | | | | | |
|---|---|---|---|---|---|---|---|---|---|---|---|---|
| OP(Open):Valve is open CL(Close): Valve is closed #2: When antiseptic agent injection hole (Is) doubles as residue injection hole (Id) | | | | | | | | | | | | |

### [Modification 2] Modification of Basic Configuration of First Embodiment

In the basic configuration of the first embodiment shown in FIG. 2 as well, the pipeline for ballast water intake Lf and the pipeline for ballast water discharge Lr are configured to be a common pipeline (Qt-V5-Sn1-Ft-T) between the position Qt and the ballast tank T. Therefore, a modification similar to the modification of the basic configuration of the second embodiment shown in FIG. 22 is possible.

### [Modification 3] Another Modification of Basic Configuration of Second Embodiment

### 1) Basic Configuration and Pipelines

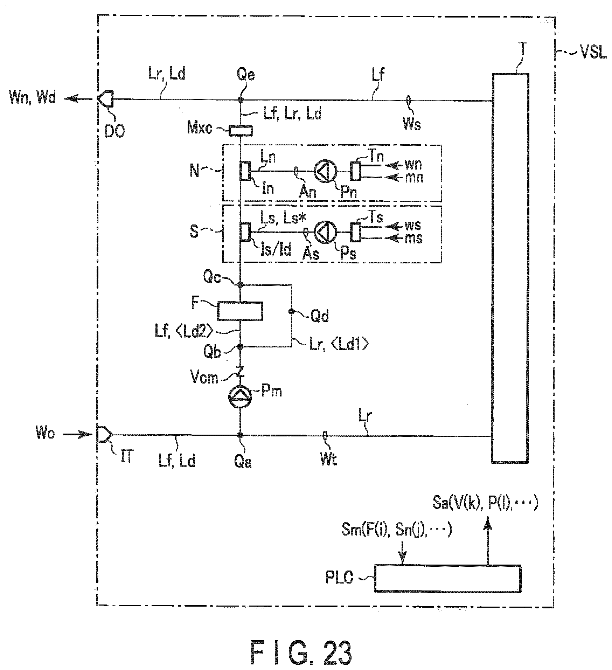

FIG. 23 is an explanatory diagram of another modification of the basic configuration of the second embodiment of the present invention. In FIG. 13, valves and measurement instruments are not drawn for convenience of explanation. In Modification 3 shown in FIG. 23, each of the pipeline for ballast water intake Lf and the pipeline for ballast water discharge Lr is connected to the ballast tank T as in Modification 1 above, while in contrast to Modification 1 above, there is provided a line configuration in which the reducing agent injection hole In is disposed between the antiseptic agent injection hole/residue injection hole Is/Id and the ballast tank T.

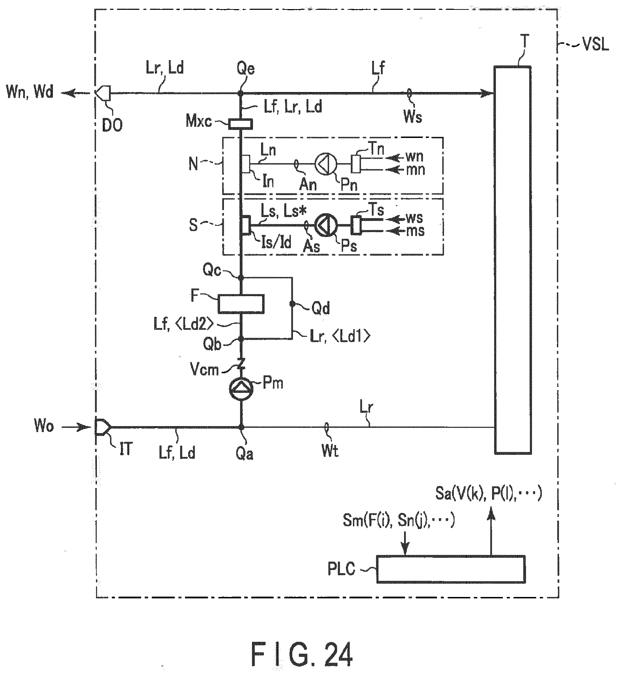

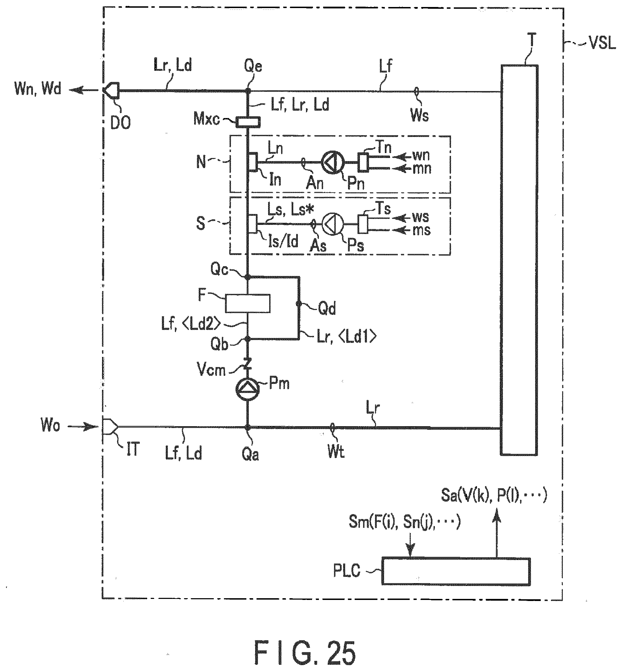

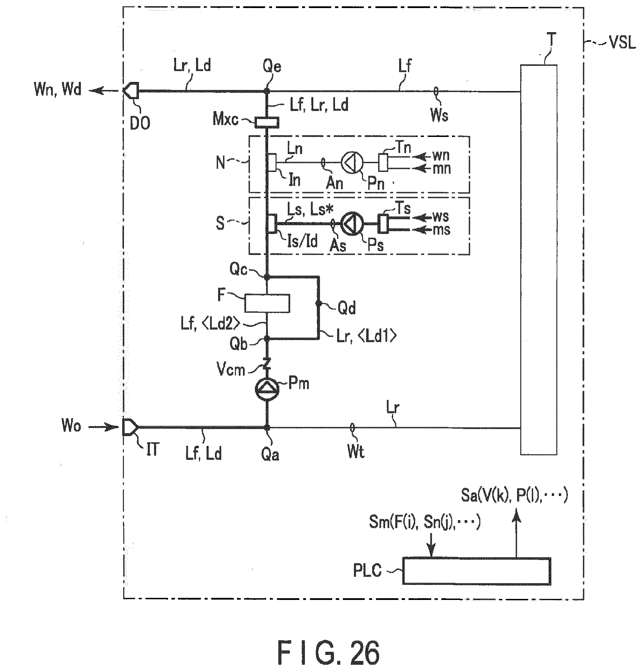

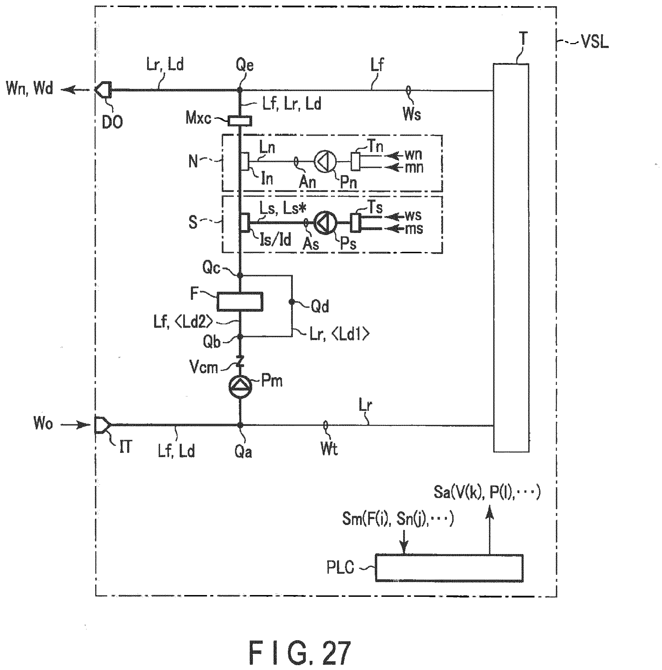

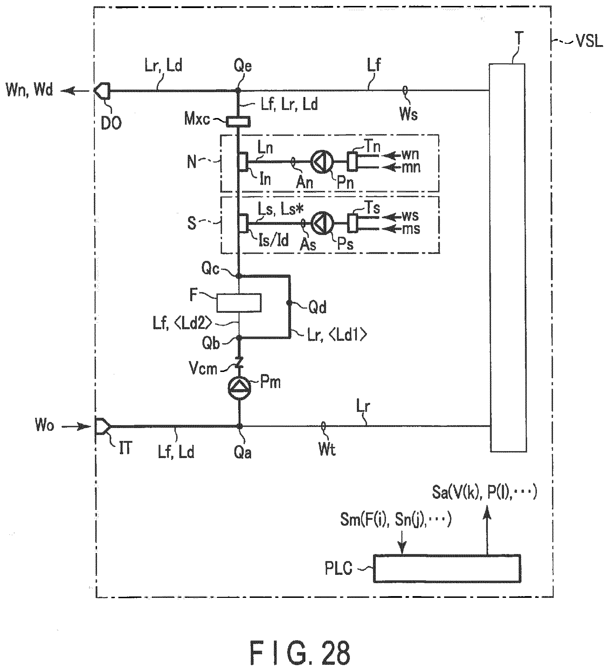

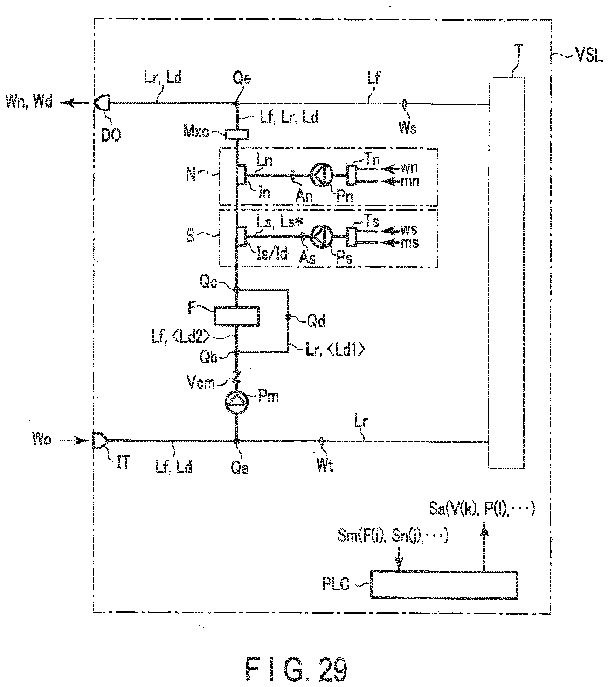

FIG. 24 is an explanatory diagram of the first operation mode of the ballast pump in Modification 3 shown in FIG. 23. FIG. 25 is an explanatory diagram of the third operation mode of the ballast pump in Modification 3 shown in FIG. 23. FIG. 26 to FIG. 29 are explanatory diagrams of the A-type to the D-type of the second operation mode of the ballast pump in Modification 3 shown in FIG. 23, respectively.

In the modification of the basic configuration of the second embodiment shown in FIG. 23, as drawn in thick print in FIG. 24 to FIG. 27, the pipeline for ballast water intake Lf is a pipeline of
IT→Qa→Pm→Vcm→Qb→F→Qc→Is/Id→Mxc→Qa→T, and the pipeline for ballast water discharge Lr is a pipeline of T→Qa→Pm→Vcm→Qb→Qd→Qc→In→Mxc→Qe→D0. <Ld1> of the pipeline for residue discharge Ld is a pipeline of IT→Qa→Qb→Qd→Qc→Is/Id→In→Mxc→Qe→D0, and <Ld2> of the pipeline for residue discharge Ld is a pipeline of IT→Qa→Qb→F→Qc→Is/Id→In→Mxc→Qe→D0.

The position Qa is a position located downstream of the intake IT of the pipeline for ballast water intake Lf and upstream of the ballast pump Pm, and located downstream of the ballast tank T of the pipeline for ballast water discharge Lr and upstream of the ballast pump Pm. The position Qb is a position located downstream of the ballast pump Pm of the pipeline for ballast water intake Lf and the pipeline for ballast water discharge Lr, and upstream of the filter device F. The position Qc is a position located downstream of the filter device F of the pipeline for ballast water intake Lf and the pipeline for ballast water discharge Lr, and upstream of the antiseptic agent injection hole/residue injection hole Is/Id. The position Qd is a position located downstream of the position Qb and upstream of the position Qc, of the pipeline which connects between the position Qb and the position Qc without passing through the filter device F. The position Qe is a position located downstream of the mixer Mxc, of the pipeline for ballast water intake Lf, the pipeline for ballast water discharge Lr, and the pipeline for residue discharge Ld, upstream of the drain hole D0, and upstream of the ballast tank T of the pipeline for ballast water intake Lf.

Mxc is a mixer. In the second embodiment, the mixer Mxs which stirs seawater injected with the chlorine-based antiseptic agent As or the antiseptic agent residue Re and the mixer Mxn which stirs seawater injected with the reducing agent An are provided. In this Modification 3, however, one common mixer Mxc has only to be disposed.

### 2) Antiseptic Agent Supply Device S

The antiseptic agent supply device S in this Modification 3 has the same configuration as the antiseptic agent supply device in the second embodiment shown in FIG. 13, and its function and role are also unchanged.

Therefore, the explanation of the antiseptic agent supply device in the second embodiment also applies to this antiseptic agent supply device S in this Modification 3 except that the line configuration (IT→Qa→Pm→Vcm→Qb→F→Qc→Is/Id→Mxc→Qe→T) of the pipeline for ballast water intake Lf is different. 3) Removal of Antiseptic Agent Residue Re

The explanation of the removal of the antiseptic agent residue in the second embodiment also applies to the removal of the antiseptic agent residue Re in this Modification 3 except that the line configuration (IT→Qa→Qb→Qd→Qc→Is/Id→In→Mxc→Qe→D0) of the pipeline for residue discharge <Ld1> and the line configuration (IT→Qa→Qb→F→Qc→Is/Id→In→Mxc→Qe→D0) of the pipeline for residue discharge <Ld2> are different. Note that the modification of the removal of the antiseptic agent residue shown in FIG. 10 and FIG. 11 and its explanation also apply to the modification of the removal of the antiseptic agent residue Re in this Modification 3.

### 4) Reducing Agent Supply Device N

The reducing agent supply device N in this Modification 3 has the same configuration as the reducing agent supply device in the second embodiment shown in FIG. 13, and its function and role are also unchanged.

Therefore, the explanation of the antiseptic agent supply device in the second embodiment and its modification also applies to the explanation of the reducing agent supply device in this modification and its modification except for the differences of the line configuration (IT→Qa→Qb→Qd→Qc→Is/Id→In→Mxc→Qe→D0) of the pipeline for residue discharge <Ld1> and the line configuration (IT→Qa→Qb→F→Qc→Is/Id→In→Mxc→Qe→D0) of the pipeline for residue discharge <Ld2>. Especially, the configuration example of taking out the removal reactive substance An* shown in FIG. 20 and FIG. 21 and its explanation also apply completely to the configuration example of taking out the removal reactive substance An* in this Modification 3.

### 5) Operation Modes of Ballast Pump Pm

The first operation mode of the ballast pump Pm in this Modification 3 shown in FIG. 24 is the same as the first operation mode of the ballast pump in the second embodiment shown in FIG. 14 except that the line configuration
(IT→Qa→Pm→Vcm→Qb→F→Qc→Is/Id→In→Mxc→Qe→T) of the pipeline for ballast water intake Lf is different. The third operation mode of the ballast pump in this Modification 3 shown in FIG. 25 is the same as the third operation mode of the ballast pump in the second embodiment shown in FIG. 15 except that the line configuration (T→Qa→Pm→Vcm→Qb→ Qd→Qc→In→Mxc→Qe→D0) of the pipeline for ballast water discharge Lr is different. The A-type to the D-type of the second operation mode of the ballast pump in this Modification 3 shown in FIG. 26 to FIG. 29 are the same as the second operation modes of the ballast pump in the second embodiment respectively shown in FIG. 16 to FIG. 19 except that the line configuration
(IT→Qa→Qb→Qd→Qc→Is/Id→In→Mxc→Qe→D0) of the pipeline for residue discharge <Ld1> and the line configuration (IT→Qa→Qb→F→Qc→Is/Id→In→Mxc→Qe→D0) of the pipeline for residue discharge <Ld2> are different.

### 6) Ballast Water Treatment Method

The explanation of a process flow of the ballast water treatment method shown in FIG. 12 and its modification also apply to a process flow of the ballast water treatment method in the second embodiment and its modification when each of the antiseptic agent injection hole Is and the residue injection hole Id is read as the antiseptic agent injection hole/residue injection hole Is/Id.

In each of the configuration examples shown in FIG. 20 and FIG. 21, switching of the opening and closing of the valves Vn and Vn* and adjustment of opening are automatically performed in accordance with the control program preinstalled in the controller PLC or some other unshown controller, unless otherwise part or all of these operations are manually performed.

### [Modification 4] Modification in which Ballast Pump Pm Comprises Multiple Ballast Pumps

One ballast pump Pm is only drawn in FIG. 2 and FIG. 13. However, the ballast pump Pm in the present invention is not limited to a configuration with only one ballast pump, and may have a configuration with multiple ballast pumps. For example, when the ballast pump Pm comprises two ballast pumps Pm1 and Pm2, the following modifications are possible.

### [Modification 4-1]

When the ballast pump Pm1 is in the first operation mode, the chlorine-based antiseptic agent As is injected into the seawater Wo taken from the outside of the vessel and circulating toward the ballast tank T. When the ballast pump Pm1 is in the second operation mode, the antiseptic agent residue Re remaining un-injected into the seawater Wo taken from the outside of the vessel during the first operation mode is removed. Thereafter, when the ballast pump Pm2 to which a switch has been made from the ballast pump Pm1 is in the third operation mode, the ballast water Wt taken from the ballast tank T is discharged to the outside of the vessel as the ballast water Wn which has been injected with the reducing agent An.

### [Modification 4-2]

In the case where there are multiple ballast tanks (given that there are two ballast tanks T1 and T2), the chlorine-based antiseptic agent As is injected into the seawater Wo taken from the outside of the vessel and circulating toward the ballast tank T1 when the ballast pump Pm1 is in the first operation mode, whereas the antiseptic agent residue Re remaining un-injected into the seawater Wo taken from the outside of the vessel during the first operation mode is removed when the ballast pump Pm1 is in the second operation mode. On the other hand, the chlorine-based antiseptic agent As is injected into the seawater Wo taken from the outside of the vessel and circulating toward the ballast tank T2 when the ballast pump Pm2 is in the first operation mode, whereas the antiseptic agent residue Re remaining un-injected into the seawater Wo taken from the outside of the vessel during the first operation mode is removed when the ballast pump Pm2 is in the second operation mode. Moreover, when the ballast pump Pm1 to which a switch has been made from the ballast pump Pm2 is in the third operation mode, the ballast water Wt taken from the ballast tank T2 is discharged to the outside of the vessel as the ballast water Wn which has been injected with the reducing agent An. On the other hand, when the ballast pump Pm2 to which a switch has been made from the ballast pump Pm1 is in the third operation mode, the ballast water Wt taken from the ballast tank T1 is discharged to the outside of the vessel as the ballast water Wn which has been injected with the reducing agent An.

Provided that the ballast pumps Pm1 and Pm2 are regarded as one ballast pump Pm, Modification 4-1 is only the following example. The chlorine-based antiseptic agent As is injected into the seawater Wo taken from the outside of the vessel and circulating toward the ballast tank T when the ballast pump Pm is in the first operation mode, whereas the antiseptic agent residue Re remaining un-injected into the seawater Wo taken from the outside of the vessel during the first operation mode is removed when the ballast pump Pm is in the second operation mode. Thereafter, when the ballast pump Pm to which a switch has been made from the ballast pump Pm is in the third operation mode, the ballast water Wt taken from the ballast tank T is discharged to the outside of the vessel as the ballast water Wn which has been injected with the reducing agent An. Modification 4-2 is also only the following example. The chlorine-based antiseptic agent As is injected into the seawater Wo taken from the outside of the vessel and circulating toward the ballast tank T1 (or T2) when the ballast pump Pm is in the first operation mode, whereas the antiseptic agent residue Re remaining un-injected into the seawater Wo taken from the outside of the vessel during the first operation mode is removed when the ballast pump Pm is in the second operation mode. Thereafter, when the ballast pump Pm to which a switch has been made from the ballast pump Pm is in the third operation mode, the ballast water Wt taken from the ballast tank T1 (or T2) is discharged to the outside of the vessel as the ballast water Wn which has been injected with the reducing agent An.

The technical scope of the present invention covers even its equivalents. The meaning and interpretation of each term in the present description do not prevent the technical scope of the present invention from covering even its equivalents.

### REFERENCE SIGNS LIST

VSL... vessel, IT... intake, D0... drain hole, Lf... pipeline for ballast water intake, Lr... pipeline for ballast water discharge, Ld, <Ldl>, <Ld2>... pipeline for residue discharge, Ls... antiseptic agent pipeline, Ln... reducing agent pipeline, Ls*, Ldr, Ldr*... residue pipeline, Lns... branch pipeline, V1 to V9, Vs, Vn... valve, Pm... ballast pump, Ps, Pn... pump, S... antiseptic agent supply device, N... reducing agent supply device, T... ballast tank, Ts, Tsm, Tn... tank, Is... antiseptic agent injection hole, In... reducing agent injection hole, Id... residue injection hole, Is/Id... antiseptic agent injection hole/residue injection hole, Mxs, Mxn, Mxc... mixer, Fs, Fn, Ft... flowmeter, Sn1, Sn2... TRO measurement device, As... chlorine-based antiseptic agent, An... reducing agent, An*... removal reactive substance An*, ms... raw material (chlorine-based chemical) of chlorine-based antiseptic agent, mn... raw material of reducing agent, ws, wn... water, Cs, Cn... mixture, Re... antiseptic agent residue, Wo... seawater taken from outside of vessel, Ws... seawater injected with antiseptic agent, Wt... seawater (ballast water) taken from ballast tank, Wn... ballast water injected with reducing agent, Wd, Wo*... seawater injected with antiseptic agent residue

### ASPECTS

1. A vessel comprising a ballast pump (Pm) which circulates, in the vessel, seawater (Wo) taken from the outside of the vessel, a ballast tank (T) to store the seawater, and a ballast water treatment device which sterilizes the seawater to be stored in the ballast tank, the vessel being characterized in that
   the ballast pump comprises a first operation mode in which the seawater taken from the outside of the vessel is circulated toward the ballast tank and stored in the ballast tank, and a second operation mode in which the seawater taken from the outside of the vessel is circulated without being passed through the ballast tank, and discharged to the outside of the vessel, and
   the ballast water treatment device comprises an antiseptic agent injection hole (Is) through which an chlorine-based antiseptic agent (As) is injected into the seawater (Wo) circulating toward the ballast tank during the first operation mode, and a residue injection hole (Id) through which at least part of a residue of the chlorine-based antiseptic agent remaining un-injected into the seawater during the first operation mode is injected into the seawater circulating toward the outside of the vessel during the second operation mode.
2. The vessel according to claim 1, characterized in that the second operation mode is started within 3 hours after the end of the first operation mode.
3. The vessel according to claim 1, characterized in that the residue injection hole (Id) forces at least part of the residue of the chlorine-based antiseptic agent (As) by a pump to be injected into the seawater circulating toward the outside of the vessel.
4. The vessel according to claim 1, characterized in that the residue injection hole (Id) allows at least part of the residue of the chlorine-based antiseptic agent (As) to be injected into the seawater circulating toward the outside of the vessel, together with water forced by a pump or after mixed with the forced water.
5. The vessel according to claim 4, characterized in that the water is fresh water.
6. The vessel according to claim 4, characterized in that the water is water containing a reducing substance or an alkaline substance.
7. The vessel according to claim 1, characterized in that
   the ballast pump comprises a third operation mode in which the seawater taken from the ballast tank is circulated in the vessel and discharged to the outside of the vessel, and
   the ballast water treatment device comprises a reducing agent injection hole through which a reducing agent is injected into the seawater circulating toward the outside of the vessel from the ballast tank during the third operation mode.
8. The vessel according to claim 7, characterized in that the residue injection hole allows a reaction product formed by causing a reaction between at least part of the residue of the chlorine-based antiseptic agent and part of the reducing agent, to be injected into the seawater circulating toward the outside of the vessel.
9. The vessel according to claim 7, characterized in that the antiseptic agent injection hole doubles as the residue injection hole, and the reducing agent injection hole is located downstream of the residue injection hole in a direction of the flow of the seawater circulating toward the outside of the vessel.
10. The vessel according to claim 1, characterized in that the chlorine-based antiseptic agent is an aqueous solution of a trichloroisocyanuric acid, sodium dichloroisocyanurate, or potassium dichloroisocyanurate, and a solvent of the aqueous solution is fresh water.
11. The vessel according to claim 10, characterized in that the fresh water is fresh water formed when seawater is desalted by a seawater desalter mounted in the vessel.
12. A ballast water treatment device which is mounted in a vessel and which sterilizes ballast water to be stored in a ballast tank provided in the vessel, the ballast water treatment device being characterized by comprising:
   an antiseptic agent injection hole through which a chlorine-based antiseptic agent is injected into the ballast water to be stored in the ballast tank;
   an antiseptic agent pipeline which circulates the chlorine-based antiseptic agent toward the antiseptic agent injection hole;
   a tank to store at least part of a residue of the chlorine-based antiseptic agent remaining in the antiseptic agent pipeline and unused for the sterilization of the ballast water; and
   a residue pipeline which circulates at least part of contents stored in the tank.
13. The ballast water treatment device according to claim 12, characterized in that at least a portion of the antiseptic agent pipeline constitutes at least a portion of the residue pipeline.
14. The ballast water treatment device according to claim 12 or 13, characterized in that the residue pipeline circulates, toward the antiseptic agent injection hole, at least part of the contents discharged from the tank.
15. The ballast water treatment device according to any one of claims 12 to 14, characterized in that the antiseptic agent pipeline comprises a return pipeline which returns at least part of the contents circulating in the antiseptic agent pipeline, from a downstream side of the antiseptic agent pipeline to an upstream side thereof.
16. The ballast water treatment device according to any one of claims 12 to 15, characterized in that the residue pipeline comprises a return path which returns, to the tank, at least part of the residue of the chlorine-based antiseptic agent discharged from the tank.
17. The ballast water treatment device according to any one of claims 12 to 14, characterized in that
   the antiseptic agent pipeline comprises a return pipeline which returns at least part of the contents circulating in the antiseptic agent pipeline, from a downstream side of the antiseptic agent pipeline to an upstream side thereof,
   the residue pipeline comprises a return path which returns, to the tank, at least part of the residue of the chlorine-based antiseptic agent discharged from the tank, and
   at least a portion of the return pipeline constitutes a portion of the return path.
18. The ballast water treatment device according to any one of claims 12 to 17, characterized in that the tank retains at least part of the residue of the chlorine-based antiseptic agent together with water containing a removal reactive substance at least temporarily or for a short time, and the removal reactive substance is a reducing substance or an alkaline substance.
19. A ballast water treatment device which is mounted in a vessel and which sterilizes ballast water to be stored in a ballast tank provided in the vessel, the ballast water treatment device being characterized by comprising:
   an antiseptic agent injection hole through which a chlorine-based antiseptic agent is injected into the ballast water to be stored in the ballast tank; and
   an antiseptic agent pipeline which circulates the chlorine-based antiseptic agent toward the antiseptic agent injection hole, and
   being characterized in that the ballast water treatment device is configured such that at least part of a residue of the chlorine-based antiseptic agent remaining in an antiseptic agent pipeline and unused for the sterilization of the ballast water is removed to the outside of the antiseptic agent pipeline by the supply of water and/or a removal reactive substance to the antiseptic agent pipeline, and
   the removal reactive substance is a reducing substance or an alkaline substance.
20. The ballast water treatment device according to claim 19, characterized in that the antiseptic agent pipeline comprises a return pipeline which returns at least part of the contents circulating in the antiseptic agent pipeline, from a downstream side of the antiseptic agent pipeline to an upstream side thereof.
21. The ballast water treatment device according to claim 19 or 20, characterized in that the water is fresh water.
22. The ballast water treatment device according to any one of claims 19 to 21, characterized in that the antiseptic agent pipeline comprises a pipeline which discharges at least part of the residue of the chlorine-based antiseptic agent into a pipe that circulates the ballast water.
23. A ballast water treatment device which is mounted in a vessel and which sterilizes ballast water to be stored in a ballast tank provided in the vessel, the ballast water treatment device being characterized by comprising:
   an antiseptic agent injection hole through which a chlorine-based antiseptic agent is injected into the ballast water to be stored in the ballast tank;
   an antiseptic agent pipeline which circulates the chlorine-based antiseptic agent toward the antiseptic agent injection hole; and
   a removal reactive substance injection hole through which a removal reactive substance is injected at a position on an upstream side of the antiseptic agent injection hole of the antiseptic agent pipeline or at a position of the antiseptic agent injection hole, and
   being characterized in that the ballast water treatment device is configured such that at least part of a residue of the chlorine-based antiseptic agent remaining in the antiseptic agent pipeline and unused for the sterilization of the ballast water reacts with the injected removal reactive substance, and is removed to the outside of the antiseptic agent pipeline, and
   the removal reactive substance is a reducing substance or an alkaline substance.
24. A ballast water treatment method of sterilizing seawater to be stored in a ballast tank provided in a vessel, the ballast water treatment method being characterized by comprising:
   an antiseptic agent preparation step of preparing a chlorine-based antiseptic agent to sterilize the seawater;
   a sterilization treatment step of sterilizing, in the vessel, the seawater to be stored in the ballast tank by use of the chlorine-based antiseptic agent; and
   a residue removal step of causing at least part of a residue of the chlorine-based antiseptic agent remaining in the vessel and unused for the sterilization of the seawater to be stored in the ballast tank to be injected into seawater circulating in the vessel, and to be discharged to the outside of the vessel together with the seawater.
25. The ballast water treatment method according to claim 24, characterized in that the seawater circulating in the vessel is taken from the outside of the vessel, and circulates in the vessel without being stored in the ballast tank.
26. The ballast water treatment method according to claim 24, characterized in that the residue removal step includes a step of forcing, by a pump, at least part of the residue of the chlorine-based antiseptic agent remaining in the vessel and unused for the sterilization of the seawater to be stored in the ballast tank, to be injected into the seawater circulating in the vessel.
27. The ballast water treatment method according to claim 24, characterized in that the residue removal step includes a step of causing at least part of the residue of the chlorine-based antiseptic agent remaining in the vessel and unused for the sterilization of the seawater to be stored in the ballast tank, to be injected into the seawater circulating in the vessel, together with forced water or after mixed with the forced water.
28. The ballast water treatment method according to claim 27, characterized in that the water is fresh water.
29. The ballast water treatment method according to claim 27, characterized in that the water contains a reducing substance or an alkaline substance.
30. The ballast water treatment method according to claim 24, characterized in that
   the residue removal step includes
   a step of retaining, in a tank together with a reducing substance or an alkaline substance, at least part of the residue of the chlorine-based antiseptic agent remaining in the vessel and unused for the sterilization of the seawater to be stored in the ballast tank, and
   a step of injecting contents in the tank into the seawater circulating in the vessel.
31. The ballast water treatment method according to claim 24, characterized in that
   the sterilization treatment step includes a step of injecting the chlorine-based antiseptic agent from an antiseptic agent injection hole into the seawater to be stored in the ballast tank,
   the residue removal step includes a step of injecting at least part of the residue of the chlorine-based antiseptic agent remaining un-injected into the seawater to be stored in the ballast tank, from a residue injection hole into the seawater circulating in the vessel, and
   the antiseptic agent injection hole doubles as the residue injection hole.
32. The ballast water treatment method according to claim 31, characterized in that the residue removal step includes a step of injecting a reducing agent into the seawater to be stored in the ballast tank into which at least part of the chlorine-based antiseptic agent has been injected, before discharging the seawater to the outside of the vessel.
33. The ballast water treatment method according to claim 24, characterized in that the residue removal step is started within 3 hours after the end of the sterilization treatment step.
34. The ballast water treatment method according to claim 24, characterized in that the antiseptic agent treatment step is executed before the vessel leaves a first port, and the residue removal step is executed before or after the vessel leaves the first port and before the vessel arrives at a second port.
35. The ballast water treatment method according to claim 24, characterized in that the antiseptic agent treatment step is executed before the vessel leaves a first port, and the residue removal step is executed after the vessel leaves the first port and when or after the vessel arrives at a second port.
36. The ballast water treatment method according to claim 24, characterized by further comprising a reduction treatment step of reducing free available chlorine which remains in the seawater to be stored in the ballast tank and which is derived from the chlorine-based antiseptic agent.
37. A ballast water treatment method of sterilizing, in a vessel, ballast water to be stored in a ballast tank provided in the vessel, the ballast water treatment method being characterized by comprising:
   an antiseptic agent preparation step of preparing a chlorine-based antiseptic agent to sterilize the ballast water to be stored in the ballast tank;
   a sterilization treatment step of injecting the chlorine-based antiseptic agent into the ballast water via a pipeline, and sterilizing the ballast water; and
   a residue removal step of removing, from the pipeline, at least part of a residue of the chlorine-based antiseptic agent remaining in the pipeline and unused for the sterilization of the ballast water, and
   being characterized in that the residue removal step includes a first step of storing at least part of the residue of the chlorine-based antiseptic agent in a tank, and a second step of discharging, from the tank, at least part of the residue of the chlorine-based antiseptic agent stored in the tank.
38. The ballast water treatment method according to claim 37, characterized in that the second step of the residue removal step discharges at least part of the residue of the chlorine-based antiseptic agent stored in the tank into a pipe that circulates the ballast water.
39. The ballast water treatment method according to claim 37 or 38, characterized by further comprising a step of causing at least part of the residue of the chlorine-based antiseptic agent stored in the tank to be returned to the tank before being moved from the tank and removed from the pipeline.
40. The ballast water treatment method according to any one of claims 37 to 39, characterized by further comprising a step of causing a reaction between at least part of the residue of the chlorine-based antiseptic agent and a removal reactive substance in the tank after the first step is executed and before the second step is executed, and
   the removal reactive substance is a reducing substance or an alkaline substance.
41. The ballast water treatment method according to any one of claims 37 to 40, characterized in that
   the residue removal step includes a step of supplying water and/or a removal reactive substance to the pipeline, and
   the removal reactive substance is a reducing substance or an alkaline substance.
42. A ballast water treatment method of sterilizing, in a vessel, ballast water to be stored in a ballast tank provided in the vessel, the ballast water treatment method being characterized by comprising:
   an antiseptic agent preparation step of preparing a chlorine-based antiseptic agent to sterilize the ballast water to be stored in the ballast tank;
   a sterilization treatment step of injecting the chlorine-based antiseptic agent into the ballast water via an antiseptic agent pipeline, and sterilizing the ballast water; and
   a residue removal step of removing, from the antiseptic agent pipeline, at least part of a residue of the chlorine-based antiseptic agent remaining in the antiseptic agent pipeline and unused for the sterilization of the ballast water, and
   being characterized in that
   the residue removal step includes a step of supplying water and/or a removal reactive substance to the antiseptic agent pipeline, and
   the removal reactive substance is a reducing substance or an alkaline substance.
43. The ballast water treatment method according to claim 42, characterized in that the residue removal step includes a step of returning the water and/or removal reactive substance supplied to the antiseptic agent pipeline, from a downstream side of the antiseptic agent pipeline to an upstream side thereof.
44. The ballast water treatment method according to claim 42 or 43, characterized in that the water is fresh water.
45. The ballast water treatment method according to any one of claims 42 to 44, characterized in that the residue removal step discharges at least part of the residue of the chlorine-based antiseptic agent into a pipe that circulates the ballast water.
46. A ballast water treatment method of sterilizing, in a vessel, ballast water to be stored in a ballast tank provided in the vessel, the ballast water treatment method being characterized by comprising:
   an antiseptic agent preparation step of preparing a chlorine-based antiseptic agent to sterilize the ballast water to be stored in the ballast tank;
   a sterilization treatment step of injecting the chlorine-based antiseptic agent into the ballast water from an antiseptic agent injection hole via an antiseptic agent pipeline, and sterilizing the ballast water; and
   a residue removal step of removing, from the antiseptic agent pipeline, at least part of a residue of the chlorine-based antiseptic agent remaining in the antiseptic agent pipeline and unused for the sterilization of the ballast water, and
   being characterized in that
   the residue removal step includes a step of supplying a removal reactive substance at a position on an upstream side of the antiseptic agent injection hole of the antiseptic agent pipeline or at a position of the antiseptic agent injection hole, and
   the removal reactive substance is a reducing substance or an alkaline substance.

## Claims

1. A ballast water treatment device mounted in a vessel and configured to sterilizes seawater taken from the outside of the vessel to be stored as ballast water in a ballast tank provided in the vessel, the ballast water treatment device being **characterized by** comprising:
an antiseptic agent injection hole for injecting a chlorine-based antiseptic agent is injected into the seawater taken from the outside of the vessel;
an antiseptic agent pipeline for circulating the chlorine-based antiseptic agent toward the antiseptic agent injection hole; and
a residue injection hole through which at least part of a residue of the chlorine-based antiseptic agent remaining in the antiseptic agent pipeline and unused for the sterilization of the seawater taken from the outside of the vessel is removed to the outside of the antiseptic agent pipeline, and
being **characterized in that** the residue injection hole is the same injection hole as the antiseptic agent injection hole, or is located upstream or downstream of the antiseptic agent injection hole along the flow direction of the seawater taken from the outside of the vessel.

2. The ballast water treatment device according to claim 1, wherein at least part of the residue of the chlorine-based antiseptic agent remaining in the antiseptic agent pipeline is removed to the outside of the antiseptic agent pipeline by the supply of water and/or a removal reactive substance to the antiseptic agent pipeline.

3. The ballast water treatment device according to claim 2, **characterized by** further comprising a removal reactive substance injection hole through which the removal reactive substance is injected at a position on an upstream side of the antiseptic agent injection hole of the antiseptic agent pipeline or at a position of the antiseptic agent injection hole.

4. A ballast water treatment method of sterilizing seawater to be stored in a ballast tank provided in a vessel, the ballast water treatment method being **characterized by** comprising:
a sterilization treatment step of sterilizing, in the vessel, the seawater to be stored in the ballast tank by use of a chlorine-based antiseptic agent injected through an antiseptic agent pipeline into the seawater; and
a residue removal step of causing at least part of a residue of the chlorine-based antiseptic agent remaining in the antiseptic agent pipeline and unused for the sterilization of the seawater to be stored in the ballast tank to be removed to the outside of the antiseptic agent pipeline.

5. The ballast water treatment method according to claim 4, further **characterized in that** the residue removal step includes a step of supplying water and/or a removal reactive substance to the antiseptic agent pipeline.
